# EUROPEAN PATENT SPECIFICATION

(11) **EP 2 834 288 B1**
(45) Date of publication and mention of the grant of the patent: **26.04.2017**
(21) Application number: 13773124.6
(22) Date of filing: 02.04.2013
(51) Int. Cl.: C09B 69/00, G02F 1/167

(54) **COLORED CHARGED SILSESQUIOXANES**
FARBIGE, GELADENE SILSESQUIOXANE
SILSESQUIOXANES AYANT UNE CHARGE DE COULEUR

(30) Priority: 03.04.2012 EP 12162921
(43) Date of publication of application: 11.02.2015
(73) Proprietor: BASF SE, 67056 Ludwigshafen am Rhein (DE)
(72) Inventor: ÖHRLEIN, Reinhold, 79618 Rheinfelden-Herten (DE); BAISCH, Gabriele, 79589 Binzen (DE)
(74) Representative: Bernhardt, Wolfgang Willy-Hans
(86) International application number: PCT/IB2013/052624
(87) International publication number: WO 2013/150444

(56) References cited:
- EP-A1- 2 370 449
- WO-A1-2005/037955
- WO-A1-2005/037955
- WO-A1-2006/125736
- WO-A1-2007/048721
- WO-A1-2007/147742
- WO-A1-2008/017593
- WO-A1-2011/054731
- WO-A2-2010/149505
- WO-A2-2010/149505
- WO-A2-2011/040882
- CN-A- 101 297 004
- CN-A- 101 472 999
- JP-A- H09 328 624
- US-A1- 2004 163 570
- DATABASE WPI Week 200442 2004 Thomson Scientific, London, GB; AN 2004-443673 XP002691634, -& JP 2004 093996 A (TOYOTA CHUO KENKYUSHO KK) 25 March 2004 (2004-03-25)
- WINNIK F M ET AL: "NEW WATER-DISPERSIBLE SILICA-BASED PIGMENTS: SYNTHESIS AND CHARACTERIZATION", DYES AND PIGMENTS, ELSEVIER APPLIED SCIENCE PUBLISHERS. BARKING, GB, vol. 14, no. 2, 1 January 1990 (1990-01-01), pages 101-112, XP000141185, ISSN: 0143-7208, DOI: 10.1016/0143-7208(90)87010-Z

## Description

The present invention refers to compounds suitable for use as charged coloured particles in electrophoretic devices, and also to electrophoretic devices comprising the new compounds.

Electronic paper, also called e-paper or electronic ink, are a range of display technology, which are designed to mimic the appearance of ordinary ink on paper, but that can be written to and erased electronically. In order to mimic the appearance of ordinary ink on paper, electronic paper should have the following attributes: a) a resolution of 150 ppi or better, b) a contrast of about 10:1 or better, c) a stable display (i. e. does not need to be refreshed constantly), d) readable in ambient light, e) readable at wide viewing angle, f) a weight comparable to that of an equally sized sheet of card, g) a size comparable to that of a sheet of paper commonly used for books, preferably A4 (298 x 212mm), h) robust (i. e. will withstand being dropped or hit) and optionally i) flexible, or at least bendable (which can be achieved by using plastic substrates). In addition, electronic paper should show low power consumption.

Applications of electronic paper include electronic pricing labels, time tables at bus station, mobile phone displays and e-readers able to display digital versions of books and electronic paper magazines.

Electronic paper forms visible images by rearranging charged colored particles using an applied electric field.

For example, Comiskey et al. Nature 1998, 394, 253 to 255 describes a display technology called vertical electrophoretic display (EPD). In one embodiment, this technology uses microcapsules having a transparent shell and filled with numerous slightly negatively charged white titanium dioxide microparticles dispersed in a dyed (Oil Blue N) dielectric fluid. The microcapsules are dispersed in a carrier (UV curable urethane) and subsequently coated onto a transparent conductive film (indium tin oxide on polyester). Rear electrodes printed from a silver doped polymeric ink are then applied to the display layer. Applying a positive charge to one or more rear electrodes results in the migration of the slightly negatively charged white titanium dioxide microparticles to the bottom of the local microcapsule, forcing the dyed dielectric fluid to the surface and giving the pixel a black appearance. Reversing the voltage has the opposite effect.

Whereas there are currently black and white electronic papers which mimic the appearance of ordinary ink on paper sufficiently, the development of full-color electronic papers resembling colored ink on ordinary paper is still an area of intense research.

Full-colour electronic paper can be generated a) by modulating light in an additive system with the primaries of red, green and blue (RGB-technology), b) by using s substractive system with cyan, magenta and yellow (CMY-technology) or c) by using a substractive/additive hybrid system using both RGB and CMY primaries in a cooperative "biprimary system" (J. Heikenfeld et al. Journal of the SID, 2011, 19/2, 129 to 156).

Both technologies (RGB-technology or CMY technology) require a dispersion of charged coloured particles in a dielectric fluid, wherein the charged particles show a narrow size distribution and thus form homogeneous dispersions. When using the CMY technology, for example, the charged coloured particles should have a size in the range of about 1 nm to 100 nm. The Zeta potential of the charged coloured partricles in the dielectric fluid should be above -30 mV and below +30 mV. The dispersion should have a viscosity (at 25 °C) of below 5 mNs/m². The dispersion should have a resistivity of about 10¹⁰ Ωcm. The relative permittivity of the dispersion should be about 2. In additon, the charged coloured particles should show a high colour strength.

When using CMY technology in video applications, it is desirable to use charged coloured particles of the the smallest particle size possible, as a decrease in particle size yields an increase in the switching frequency of the images.

WO 2007/147742 describes a coloured compound of general formula 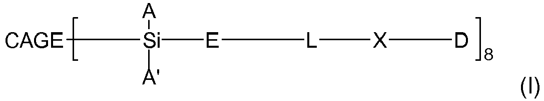 wherein
each of A and A' is, independently of the other, C₁-C₄ alkyl;
CAGE is a moiety of the formula IA 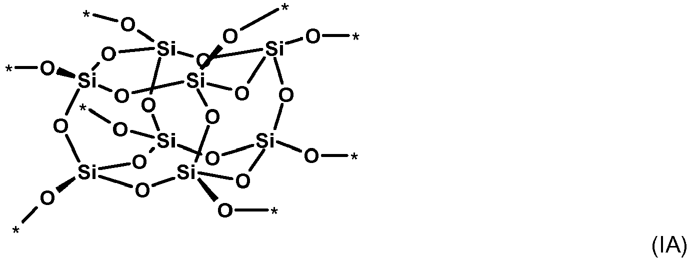 wherein the asterisks (*) mark the bonds binding the moieties of the formula, 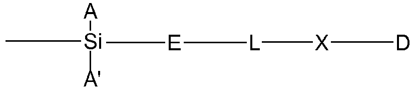 shown above, respectively,
D is a chromophoric moiety, with the proviso that all 8 moieties D in a molecule of the formula I are identical;
E is **-C(R₃ₐ)(R₃)-C(H)(R_{3b})-** and/or 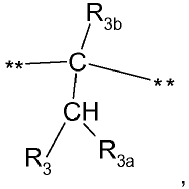 wherein the double asterisks (**) mark the binding bonds, respectively, and wherein each of R₃, R₃ₐ and R_{3b}, independently of the others, is hydrogen or unsubstituted or substituted C₁-C₁₂alkyl; L is unsubstituted or substituted C₁-C₂₅alkylene which is linear or branched, which alkylene may be **bound*** and/or be interrupted by at least one of the radicals selected from the group consisting of -O-, -S-, -N(R₄)-, -CO-, -O-CO-, -CO-O-, -N(R₄)-CO-, -CO-N(R₄)- and phenylene, wherein R₄ is hydrogen or unsubstituted or substituted C₁-C₁₂alkyl;
X is -NR₅- or -O-; and
R₅ is hydrogen or unsubstituted or substituted C₁-C₁₂alkyl;
or a salt thereof.
The coloured silsesquisiloxanes are used as colorants, pigments and dyes.

WO2007/048721 describes the use of functional particles as electrophoretic displaying particles, wherein the functionalized particles are SiO₂, Al₂O₃ or mixed SiO₂ and Al₂O₃ particles comprising covalently bound to an oxygen atom on the surface, a radical of formula (1), 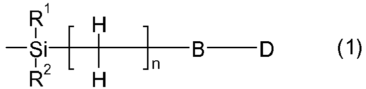 wherein R¹ and R² are independently of each other hydrogen, particle surface -O-, or a substituent, n is 1, 2, 3, 4, 5, 6, 7 or 8, B is the direct bond or a bridge member, and D is the residue of an organic chromophore.

WO 2010/149505 describes a composition comprising charged particles, preferably having an inorganic core of SiO₂, Al₂O₃ and/or TiO₂, and a counter ion comprising a silicon atom which is directly bound to a carbon atom. Said composition may be used in electrophoretic displays. Preferably, said charged particles comprise a dye attached to said inorganic core and said counter ion comprise a (poly)siloxane moiety linked via suitable bridge members to a quaternary, positively charged nitrogen or phosphorus atom, or to a moiety carrying an anionic functional group. Exemplified are charged particles having a SiO₂ core.

The charged particles of WO 2010/149505 have several disadvantages when used in electrophoretic display applications. First, the last step of the process for the preparation of the charged particles of WO 2010/149505 has to be performed in a two phase system comprising an aqueous layer and an organic layer, for example petrol ether, and in addition produces sodium iodide as by-product. As water and sodium iodide decrease the performance of the charged particles in electrophoretic display application, water and sodium iodide have to be removed before use of the charged particles in electrophoretic display applications. In addition, the solvent of the organic layer comprising the charged particles has to be exchanged by a solvent suitable for application in electrophoretic displays such as dodecane. The removal of water and sodium iodide is tedious and usually not completely successful (traces of water and sodium iodide remain in the organic layer). The solvent exchange of the organic layer is also tedious.

Thus, it was the object of the present invention to provide charged colored particles suitable for use in full-color electronic paper.

Charged colored particles are colored particles bearing a charge or particles which are salts constituted of one or more cations and one or more anions.

Ideally, the charged colored particles should show a narrow size distribution, and thus form homogeneous dispersions in a dielectric fluid such as dodecane. For example, the Zeta potential of the charged coloured partricles in the dielectric fluid should be above -30 mV and below +30 mV. Ideally, the dispersion should have a viscosity (at 25 °C) of below 5 mNs/m². Ideally, the dispersion should have a resistivity of about 10¹⁰ Ωcm. Ideally, the relative permittivity of the dispersion should be about 2. In additon, the charged coloured particles should show a high colour strength.

Ideally, the charged colored particles should have a particle size suitable for use in video applications based on CMY technology, in particular a particle size in the range of 0.5 nm to 1.5 nm, preferably 0.8 to 1.2 nm.

It was also the object of the present invention to provide a process for the preparation of the charged colored particles suitable for use in full-colour electronic paper, which process allows a convenient purification, respectively, isolation of the charged colored particles. In particular, the process does not produce the charged colored particles along with considerable high amounts of unwanted by-products such as water or sodium iodide, which are tedious to remove. In addition, the process allows the targeted preparation of charged particles of a well defined structure including a well-defined number of charges.

This object is solved by the compounds of claim 1, the processes of claims 17 and 18, and by the electrophoretic device of claim 20.

The compounds of the present invention are of formula 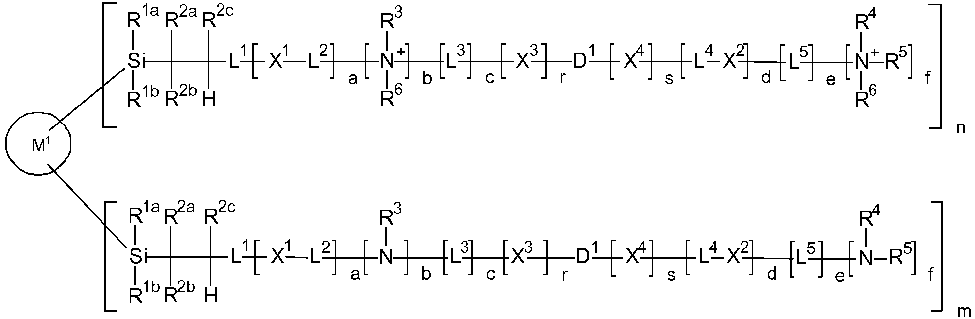 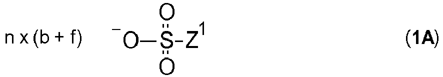 wherein 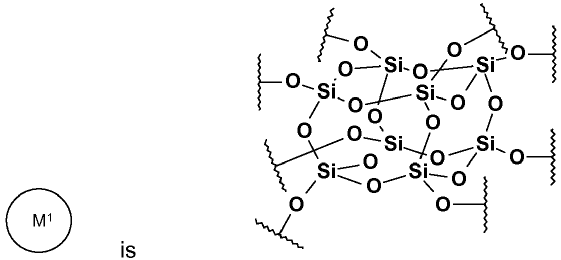
n is 1, 2, 3, 4, 5, 6, 7 or 8,
m is 8 - n,
a is 0 or 1,
b is 0 or 1,
c is 0 or 1,
r is 0 or 1,
s is 0 or 1,
d is 0 or 1,
e is 0 or 1,
f is 0 or 1,
with the proviso that at least b or f is 1, and with the proviso f is 0, then s, d and e are also 0,
R^{1a} and R^{1b} are independently from each other C₁₋₄-alkyl,
R^{2a}, R^{2b} and R^{2c} are independently from each other hydrogen or C₁₋₄-alkyl,
L¹ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L¹ may be substituted with one or more substituents selected from the group consisting of halogen, OC₁₋₆-alkyl, NO₂ and OH,
X¹, X², X³ and X⁴ are independently of each other O, S, C(O) or C(O)O,
L², L³, L⁴ and L⁵ are independently of each other C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L², L³, L⁴ and L⁵ may be substituted with one or more substituents selected from the group consisting of halogen, OC₁₋₆-alkyl, NO₂ and OH, or
L² and R³ or L³ and R³ together with the N linked to both of them form a 5, 6 or 7 membered ring, or
L⁵ and R⁴ together with the N linked to both of them form a 5, 6 or 7 membered ring,
R³, R⁴ and R⁵ are independently of each other C₁₋₂₀-alkyl, which may be substituted with a substituent selected from the group consisting of C₆₋₁₄-aryl, OC₁₋₆-alkyl, and NO₂, or
R⁴ and R⁵ together with the N linked to both of them form a 5, 6 or 7 membered ring, which may also include O or S,
R⁶ is C₁₋₂₀-alkyl, which may be substituted with a substituent selected from the group consisting of C₆₋₁₄-aryl, OC₁₋₆-alkyl, NO₂,
D¹ is a chromophoric moiety, which may be substituted with one or more R⁵⁰,
   wherein R⁵⁰ are independently from each other selected from the group consisting of C₁₋₂₀-alkyl, C₆₋₁₄-aryl, halogen, OC₁₋₆-alkyl, OH, NH₂ and NO₂, and
Z¹ is C₁₋₁₀₀-alkyl, wherein one or more methylene groups are replaced by -SiR¹⁰⁰R¹⁰¹-,
   -SiR¹⁰⁰R¹⁰¹O-, -O- or -S-, with the proviso that -SiR¹⁰⁰R¹⁰¹-, -SiR¹⁰⁰R¹⁰¹O-, -O- or -S- are not directly linked to the S of 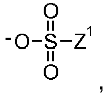 wherein R¹⁰⁰ and R¹⁰¹ are independently from each other C₁₋₆-alkyl,
or of formula 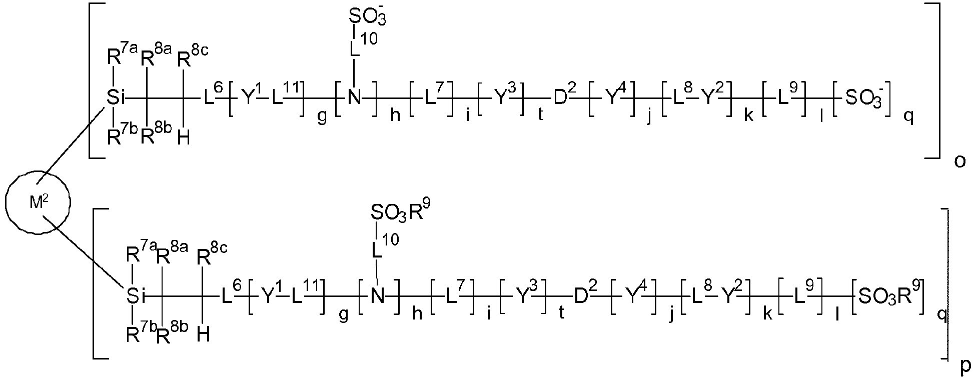 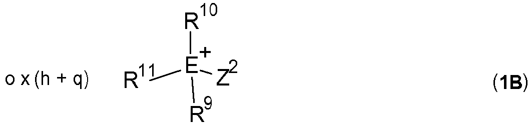 wherein

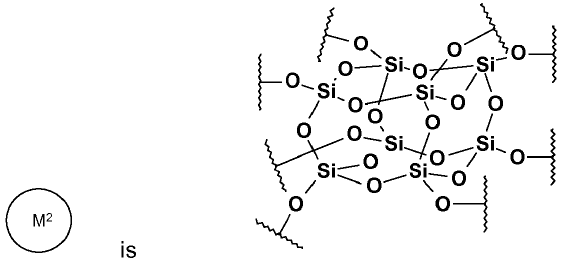

o is 1, 2, 3, 4, 5, 6, 7 or 8
p is 8 - o,
g is 0 or 1,
h is 0 or 1,
i is 0 or 1,
t is 0 or 1,
j is 0 or 1,
k is 0 or 1,
l is 0 or 1,
q is 0 or 1
with the proviso that at least h or q is 1, and with the proviso that if q is 0, then j, k and l are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L⁶ may be substituted with one or more substitutents selected from the group consisting of halogen, OC₁₋₆-alkyl, NO₂ and OH,
Y¹, Y², Y³ and Y⁴ are independently of each other NR⁵¹, O, S, C(O) or C(O)O, wherein R⁵¹ is C₁₋₂₀-alkyl,
L⁷, L⁸, L^{9,} L¹⁰ and L¹¹ are independently of each other C₁₋₂₀-alkylene, C₁₋₂₀-alkylene-phenylene or C₁₋₂₀-alkylene-C₅₋₈-cycloalkylene, phenylene or C₅₋₈-cycloalkylene, wherein L⁷, L⁸, L^{9,} L¹⁰ and L¹¹ may be substituted with one or more substituents selected from the group consisting of halogen, OC₁₋₆-alkyl, NO₂ and OH, and
R⁹ is C₁₋₁₀-alkyl,
D² is a chromophoric moiety, which may be substituted with one or more R⁵², wherein R⁵² are independently from each other selected from the group consisting of C₁₋₂₀-alkyl, C₆₋₁₄-aryl, halogen, OC₁₋₆-alkyl, OH, NH₂ and NO₂,
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P, and
Z² is C₁₋₁₀₀-alkyl, wherein one or more methylene groups are replaced by -SiR¹⁰²R¹⁰³-,
   -SiR¹⁰²R¹⁰³O-, -O- or -S-, with the proviso that -SiR¹⁰²R¹⁰³-, -SiR¹⁰²R¹⁰³O-, -O- or -S- are not directly linked to E, wherein R¹⁰² and R¹⁰³ are independently from each other C₁₋₆-alkyl.

Examples of C₁₋₄-alkyl are methyl, ethyl, butyl, iso-butyl, sec-butyl and tert-butyl. Examples of C₁₋₆-alkyl are C₁₋₄-alkyl, pentyl, isopentyl and hexyl. Examples of C₁₋₁₀-alkyl are C₁₋₆-alkyl, heptyl, octyl, nonyl and decyl. Examples of C₁₋₂₀-alkyl are C₁₋₁₀-alkyl, undecyl, dodecyl, tridecyl, tetradecyl, pentadecyl, hexadecyl, heptadecyl, octadecyl, nonadecyl and eicosyl,

Examples of C₁₋₂-alkylene are methylene and ethylene. Examples of C₁₋₄-alkylene are C₁₋₂-alkylene, propylene and butylene. Examples of C₁₋₁₀-alkylene are C₁₋₄-alkylene, pentylene, hexylene, heptylene, octylene, nonylene and decylene. Examples of C₁₋₂₀-alkylene are C₁₋₁₀-alkylene, undecylene, dodecylene, tridecylene, tetradecylene, pentadecylene, hexadecylene, heptadecylene, octadecylene, nonadecylene and eicosylene,

Examples of C₅₋₈-cycloalkylene are cyclopentylen, cyclohexylene, cycloheptylene and cyclooctylene.

Examples of C₆₋₁₄-aryl are phenyl and naphthyl.

Examples of halogen are F, Cl, Br and I.

The chromophoric moiety can be a chromophoric moiety derived from a natural organic dye or a synthetic organic dye.

Examples of synthetic organic dyes are anthraquinone-type dyes, nitro-type dyes, acridine-type dyes, arylmethane-type dyes, azo-type dye, diazonium-type dyes, phthalocyanine-type dyes, quinine-imine dyes, thiazole-type dyes and xanthene-type dyes.

Preferably, the chromophoric moiety is a chromophoric moiety deriving from a synthetic organic dye, in particular from an anthraquinone-type dye or a nitro-type dye.

Examples of chromophoric moieties deriving from an anthraquinone-type dye are of formula 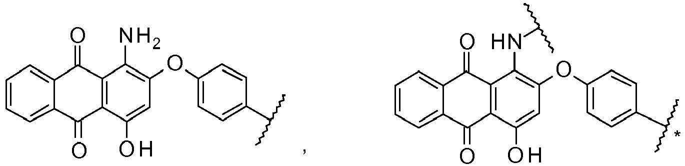 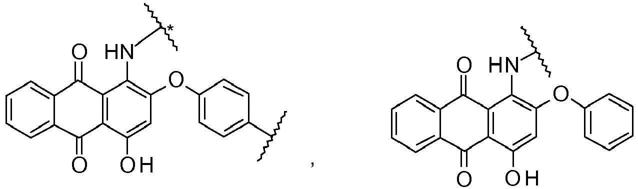 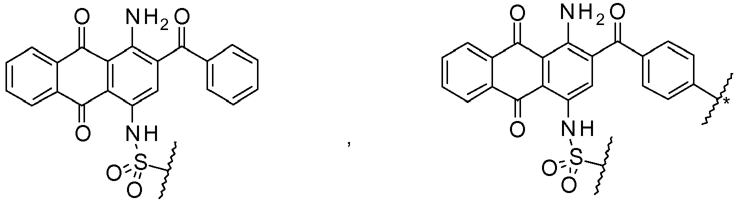 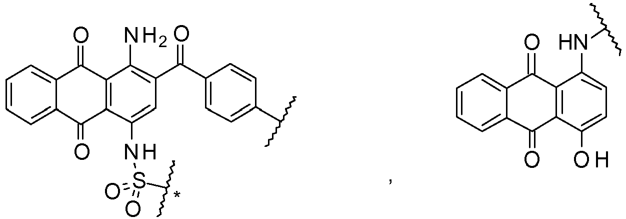 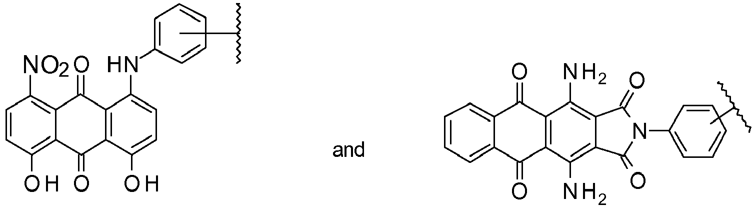 wherein
the bond marked with * is linked to 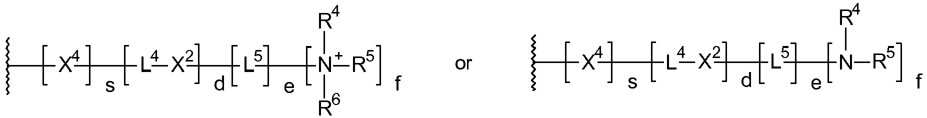 respectively, the bond marked with * is linked to

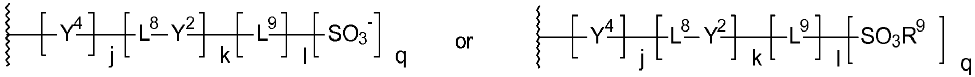

Examples of chromophoric moieties deriving from a nitro-type dye are of formula 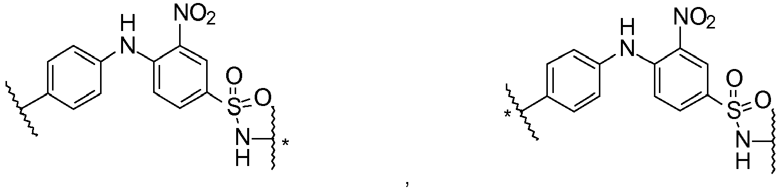 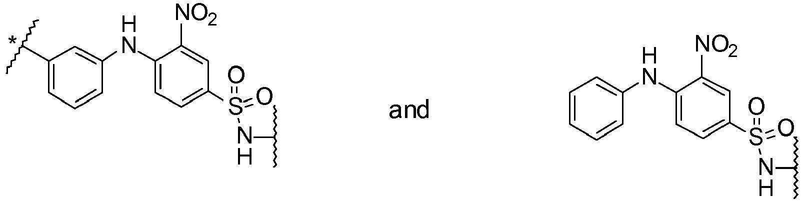 wherein
the bond marked with * is linked to 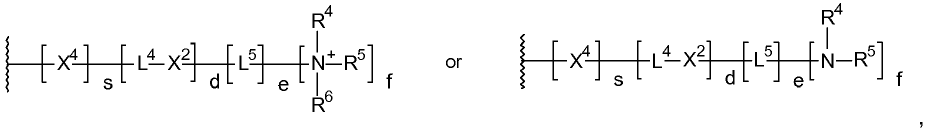 respectively, the bond marked with * is linked to

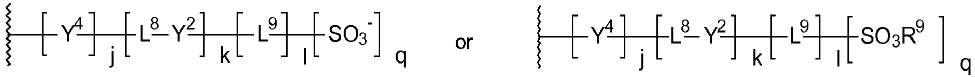

Examples of Z¹ are 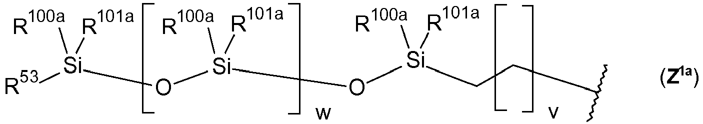 wherein
R⁵³ is C₁₋₁₀-alkyl, preferably C₁₋₆-alkyl, more preferably butyl
R^{100a} and R^{101a} are independently from each other C₁₋₆-alkyl, more preferably methyl,
v is an integer from 1 to 12, preferably from 2 to 6, most preferably 3,
w is an integer from 2 to 25, preferably 5 to 20, more preferably 8 to 15, most preferably 11,
and 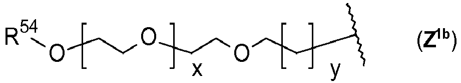 wherein
R⁵⁴ is C₁₋₁₀-alkyl, preferably C₁₋₆-alkyl, more preferably ethyl,
x is preferably an integer from 5 to 25, more preferably from 5 to 20, most preferably from 8 to 15, most preferably 12,
y is an integer from 1 to 5, preferably from 1 to 2, more preferably 1.

Examples of Z² are 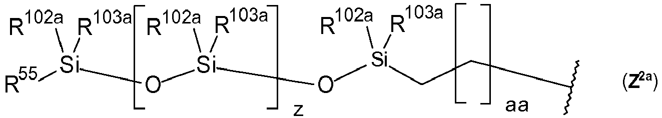 wherein
R⁵⁵ is C₁₋₁₀-alkyl, preferably C₁₋₆-alkyl, more preferably butyl,
R^{102a} and R^{103a} are independently from each other C₁₋₆-alkyl, more preferably methyl,
aa is an integer from 1 to 12, preferably from 2 to 10, most preferably 2 or 10,
z is an integer from 2 to 25, preferably 5 to 20, more preferably 8 to 15, most preferably 11,
and 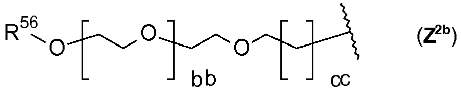 wherein
R⁵⁶ is C₁₋₁₀-alkyl, preferably C₁₋₆-alkyl, more preferably ethyl,
bb is preferably an integer from 5 to 25, more preferably from 5 to 20, most preferably from 8 to 15, most preferably 12,
cc is an integer from 1 to 5, preferably from 1 to 2, more preferably 1.

Preferably, the compounds of the present invention are of formula 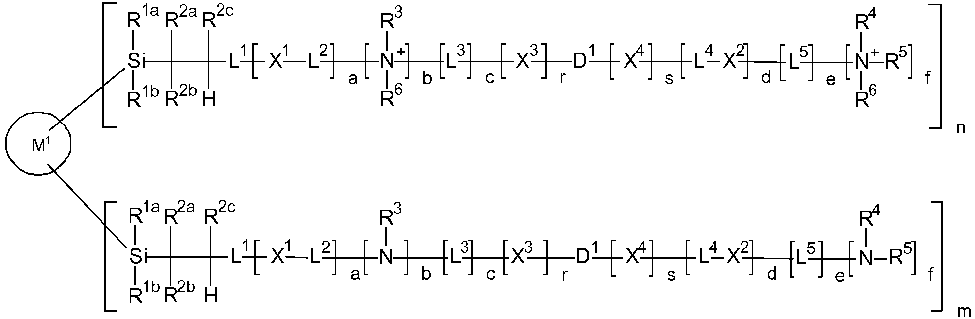 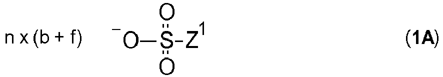 wherein 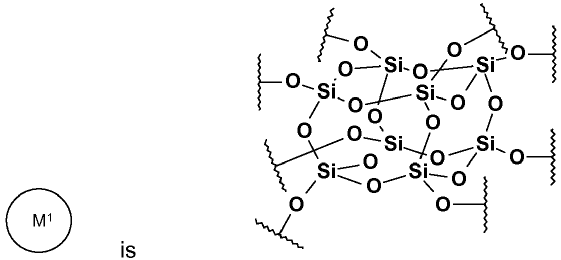
n is 1, 2, 3, 4, 5, 6, 7 or 8,
m is 8 - n,
a is 0 or 1,
b is 0 or 1,
c is 0 or 1,
r is 0 or 1,
s is 0 or 1,
d is 0 or 1,
e is 0 or 1,
f is 0 or 1,
with the proviso that at least b or f is 1, and with the proviso f is 0, then s, d and e are also 0,
R^{1a} and R^{1b} are independently from each other C₁₋₄-alkyl,
R^{2a}, R^{2b} and R^{2c} are independently from each other hydrogen or C₁₋₄-alkyl,
L¹ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L¹ may be substituted with one or more substituents selected from the group consisting of halogen, OC₁₋₆-alkyl, NO₂ and OH,
X¹, X², X³ and X⁴ are independently of each other O, S, C(O) or C(O)O,
L², L³, L⁴ and L⁵ are independently of each other C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L², L³, L⁴ and L⁵ may be substituted with one or more substituents selected from the group consisting of halogen, OC₁₋₆-alkyl, NO₂ and OH, or
L² and R³ or L³ and R³ together with the N linked to both of them form a 5, 6 or 7 membered ring, or
L⁵ and R⁴ together with the N linked to both of them form a 5, 6 or 7 membered ring,
R³, R⁴ and R⁵ are independently of each other C₁₋₂₀-alkyl, which may be substituted with a substituent selected from the group consisting of C₆₋₁₄-aryl, OC₁₋₆-alkyl, and NO₂, or
R⁴ and R⁵ together with the N linked to both of them form a 5, 6 or 7 membered ring, which may also include O or S,
R⁶ is C₁₋₂₀-alkyl, which may be substituted with a substituent selected from the group consisting of C₆₋₁₄-aryl, OC₁₋₆-alkyl, NO₂,
D¹ is of formula 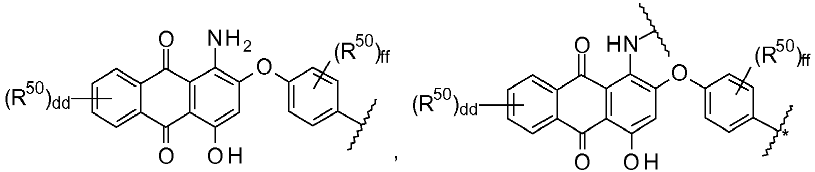 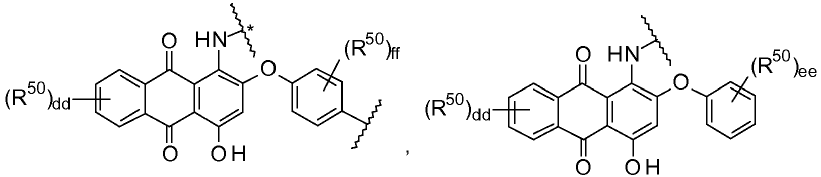 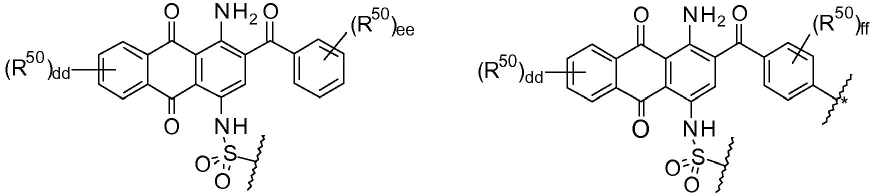 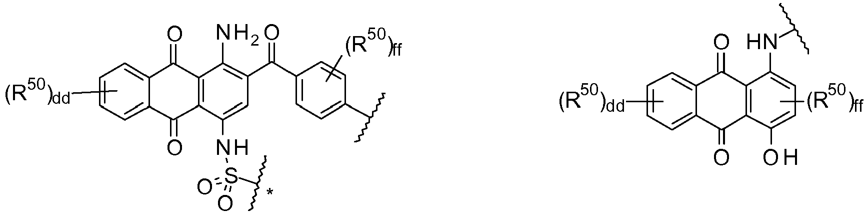 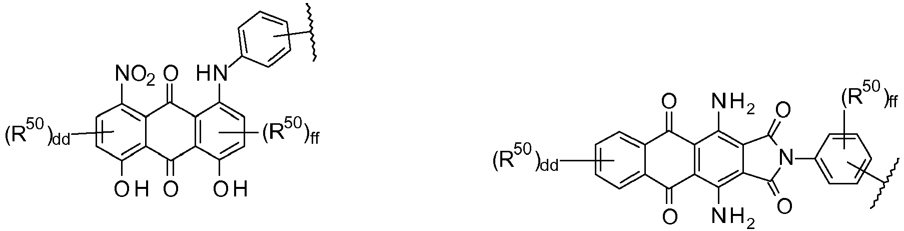 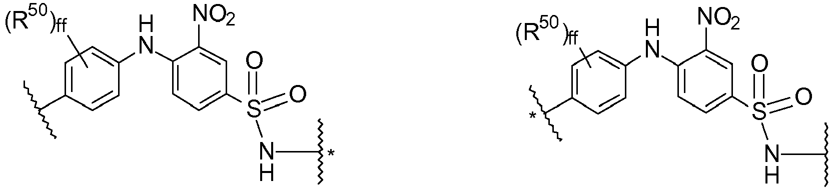 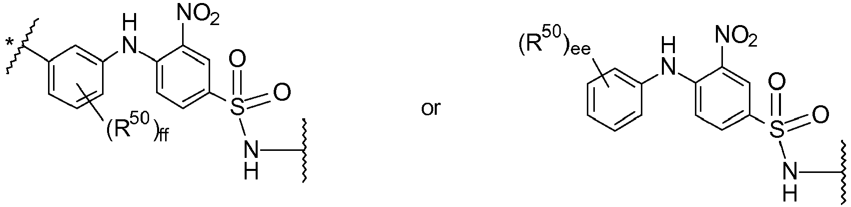 wherein
   the bond marked with * is linked to 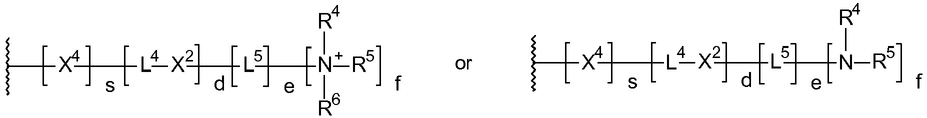
   dd is an integer from 0 to 3,
   ee is an integer from 0 to 2,
   ff is an integer from 0 to 1, and
   R⁵⁰ are independently from each other selected from the group consisting of C₁₋₂₀-alkyl, C₆₋₁₄-aryl, halogen, OC₁₋₆-alkyl, OH, NH₂ and NO₂, and
Z¹ is C₁₋₁₀₀-alkyl, wherein one or more methylene groups are replaced by -SiR¹⁰⁰R¹⁰¹-,
   -SiR¹⁰⁰R¹⁰¹O-, -O- or -S-, with the proviso that -SiR¹⁰⁰R¹⁰¹-, -SiR¹⁰⁰R¹⁰¹O-, -O- or -S- are not directly linked to the S of 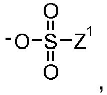 wherein R¹⁰⁰ and R¹⁰¹ are independently from each other C₁₋₆-alkyl,
or of formula 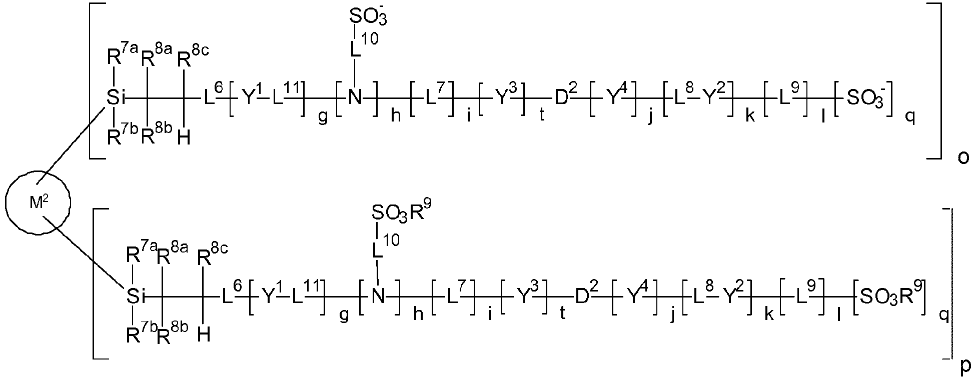 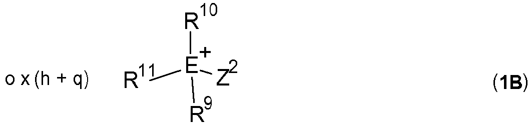 wherein

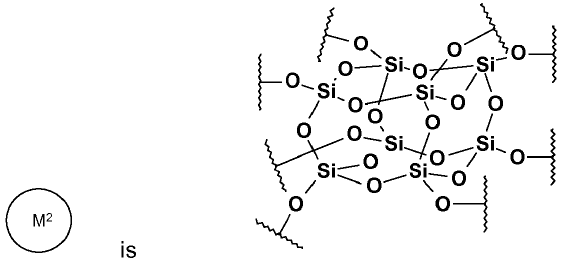

o is 1, 2, 3, 4, 5, 6, 7 or 8,
p is 8 - o,
g is 0 or 1,
h is 0 or 1,
i is 0 or 1,
t is 0 or 1,
j is 0 or 1,
k is 0 or 1,
l is 0 or 1,
q is 0 or 1
with the proviso that at least h or q is 1, and with the proviso that if q is 0, then j, k and l are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₂₀-alkylene, C₁₋₂₀-alkylene-C₆₋₁₄-arylene, C₁₋₂₀-alkylene-C₅₋₈-cycloalkylene, C₆₋₁₄-arylene or C₅₋₈-cycloalkylene, wherein L⁶ may be substituted with one or more substituents selected from the group consisting of halogen, OC₁₋₆-alkyl, NO₂ and OH,
Y¹, Y², Y³ and Y⁴ are independently of each other NR⁵¹, O, S, C(O) or C(O)O, wherein R⁵¹ is C₁₋₂₀-alkyl,
L⁷, L⁸, L^{9,} L¹⁰ and L¹¹ are independently of each other C₁₋₂₀-alkylene, C₁₋₂₀-alkylene-C₆₋₁₄-arylene or C₁₋₂₀-alkylene-C₅₋₈-cycloalkylene, C₆₋₁₄-arylene or C₅₋₈-cycloalkylene, wherein L⁷, L⁸, L^{9,} L¹⁰ and L¹¹ may be substituted with one or more substituents selected from the group consisting of halogen, OC₁₋₆-alkyl, NO₂ and OH,
D² is of formula 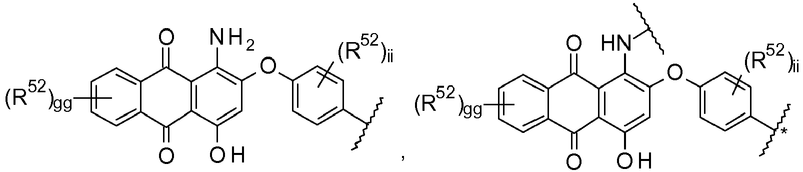 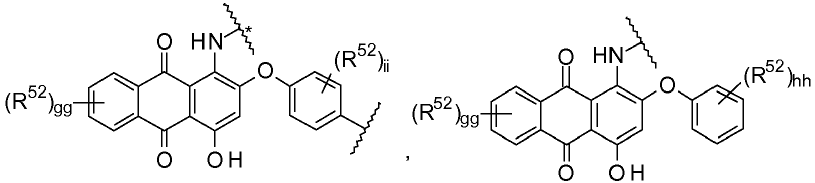 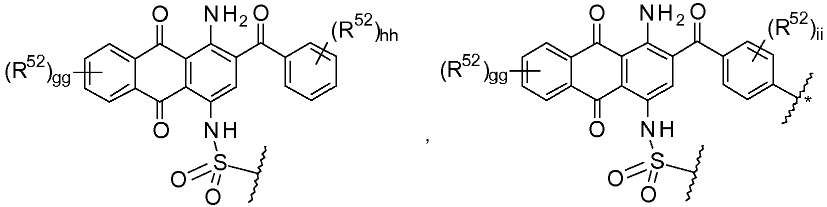 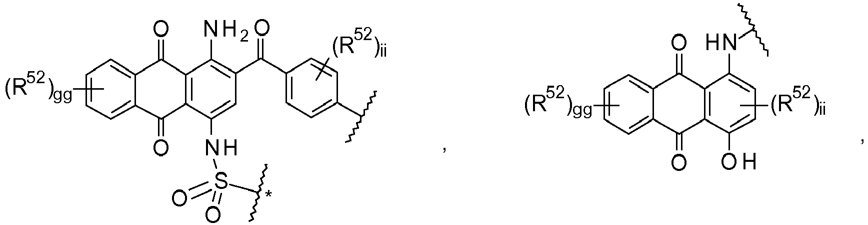 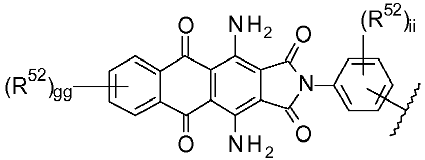 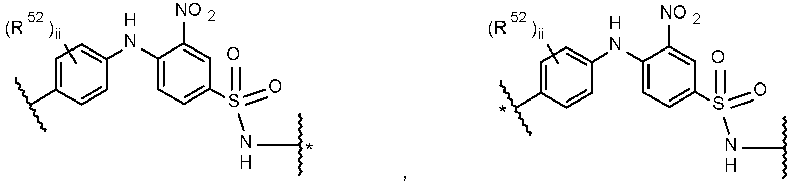 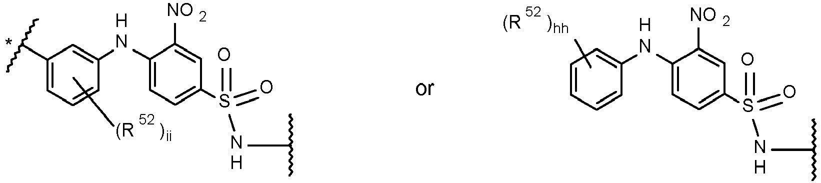
   the bond marked with * is linked to 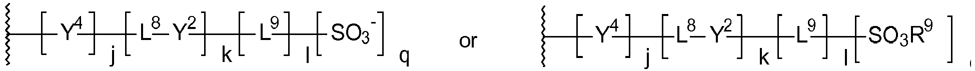
   gg is an integer from 0 to 3,
   hh is an integer from 0 to 2,
   ii is an integer from 0 to 1, and
   R⁵² are independently from each other selected from the group consisting of C₁₋₂₀-alkyl, C₆₋₁₄-aryl, halogen, OC₁₋₆-alkyl, OH, NH₂ and NO₂,
R⁹ is C₁₋₁₀-alkyl,
R¹⁰ and R¹¹ are independently from each other C₁₋₂₀-alkyl, which may be substituted with one or more substituents selected from the group consisting of C₆₋₁₄-aryl, OC₁₋₆-alkyl and NO₂,
E is N or P, and
Z² is C₁₋₁₀₀-alkyl, wherein one or more methylene groups are replaced by -SiR¹⁰²R¹⁰³-,
   -SiR¹⁰²R¹⁰³O-, -O- or -S-, with the proviso that -SiR¹⁰²R¹⁰³-, -SiR¹⁰²R¹⁰³O-, -O- or -S- are not directly linked to E, wherein R¹⁰² and R¹⁰³ are independently from each other C₁₋₆-alkyl.

More preferably, the compounds of the present invention are of formula 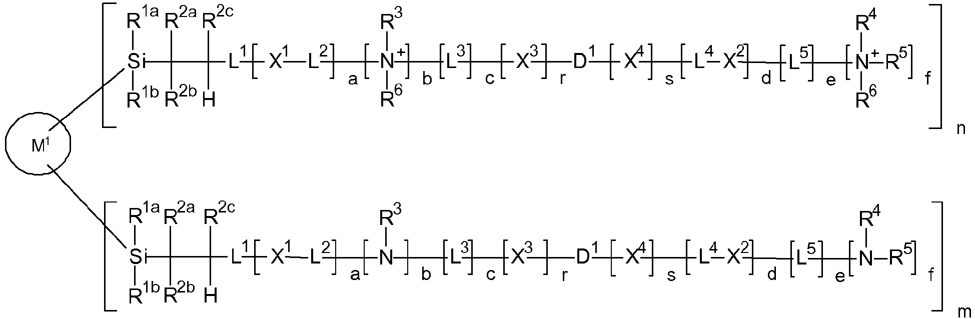 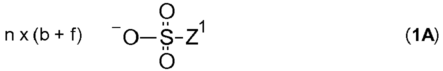 wherein

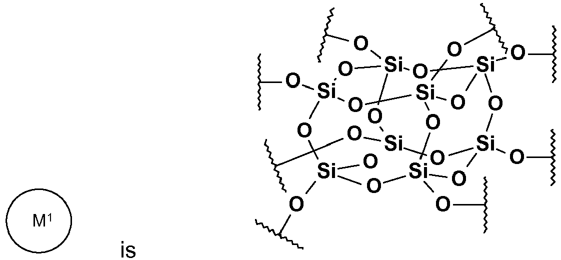

wherein
n is 1, 2, 3, 4, 5, 6 or 7,
m is 8 - n,
a is 0 or 1,
b is 0 or 1,
c is 0 or 1,
r is 0 or 1,
s is 0
d is 0,
e is 0 or 1, and
f is 0 or 1,
with the proviso that at least b or f is 1, and with the proviso f is 0, then s, d and e are also 0,
R^{1a} and R^{1b} are independently from each other C₁₋₄-alkyl,
R^{2a}, R^{2b} and R^{2c} are independently from each other hydrogen or C₁₋₄-alkyl,
L¹ is C₁₋₁₀-alkylene or phenylene,
X¹ and X³ are independently of each other O or S,
L², L³ and L⁵ are independently of each other C₁₋₂₀-alkylene or C₁₋₂₀-alkylene-phenylene or phenylene, or
L² and R³ or L³ and R³ together with the N linked to both of them form a 5, 6 or 7 membered ring, or
L⁵ and R⁴ together with the N linked to both of them form a 5, 6 or 7 membered ring,
R³, R⁴ and R⁵ are independently of each other C₁₋₁₀-alkyl or benzyl, or
R⁴ and R⁵ together with the N linked to both of them form a 5, 6 or 7 membered ring, which may also include O or S,
R⁶ is C₁₋₂₀-alkyl, which may be substituted with phenyl,
D¹ is of formula 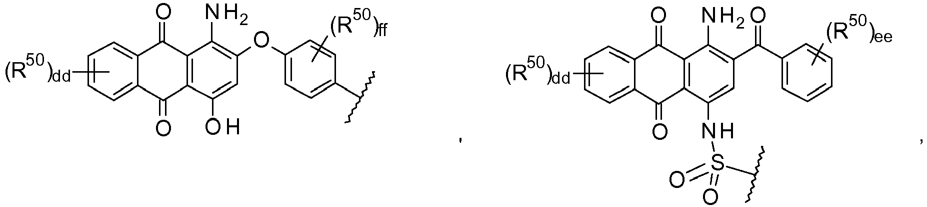 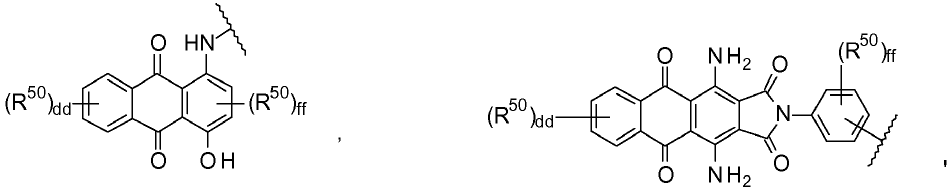 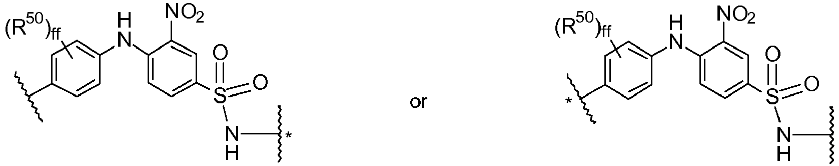 wherein
   the bond marked with * is linked to 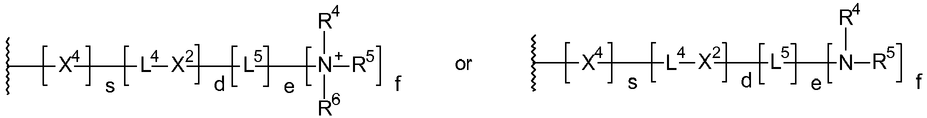
   dd is an integer from 0 to 3,
   ee is an integer from 0 to 2,
   ff is an integer from 0 to 1, and
   R⁵⁰ are independently from each other selected from the group consisting of C₁₋₂₀-alkyl, C₆₋₁₄-aryl, halogen, OC₁₋₆-alkyl, OH, NH₂ and NO₂, and
Z¹ is C₁₋₅₀-alkyl, wherein one or more methylene groups are replaced by -SiR¹⁰⁰R¹⁰¹-,
   -SiR¹⁰⁰R¹⁰¹O-, -O- or -S-, with the proviso that -SiR¹⁰⁰R¹⁰¹-, -SiR¹⁰⁰R¹⁰¹O-, -O- or -S- are not directly linked to the S of 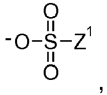 wherein R¹⁰⁰ and R¹⁰¹ are independently from each other C₁₋₆-alkyl,
or of formula 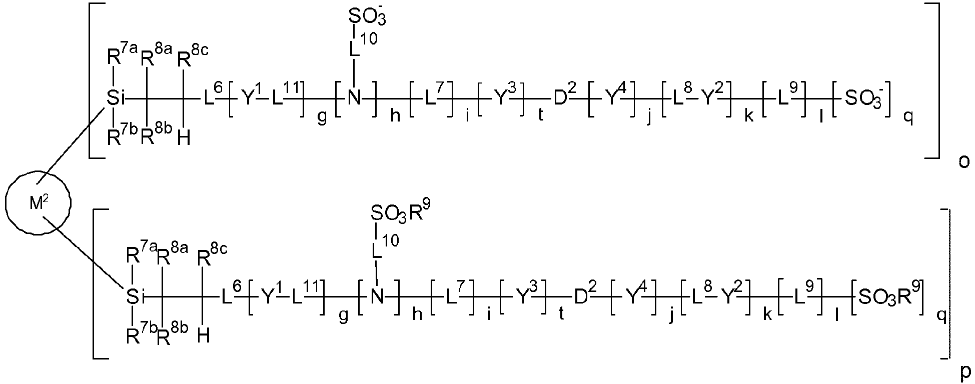 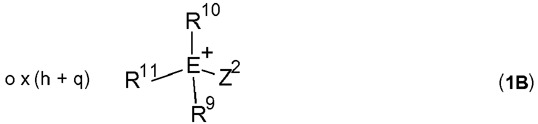 wherein 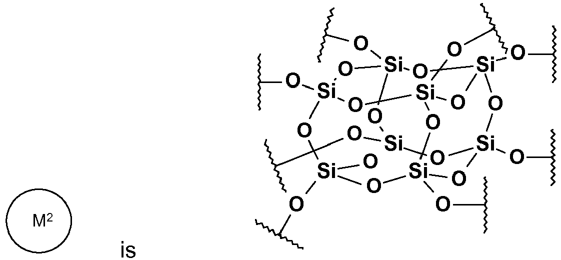
o is 1, 2, 3, 4, 5, 6, 7 or 8,
p is 8 - o,
g is 0
h is 0 or 1,
i is 0 or 1,
t is 0 or 1,
j is 0 or 1,
k is 0
l is 0 or 1,
q is 0 or 1
with the proviso that at least h or q is 1, and with the proviso that if q is 0, then j, k and l are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₁₀-alkylene or phenylene,
Y³ and Y⁴ are independently of each other O or NR⁵¹, wherein R⁵¹ is C₁₋₆-alkyl,
L⁷, L⁹ and L¹⁰ are independently of each other C₁₋₂₀-alkylene or C₁₋₂₀-alkylene-phenylene or phenylene,
D² is of formula 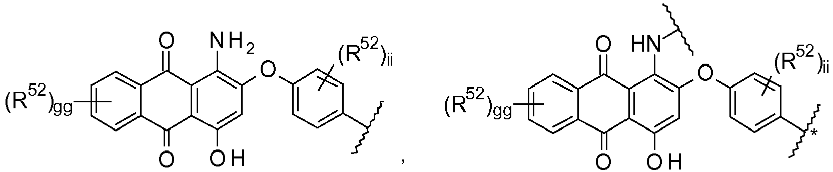 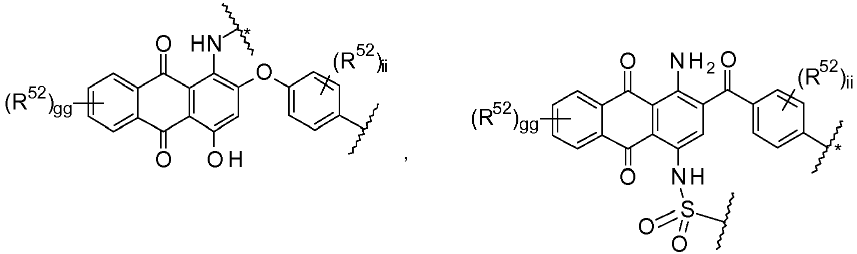 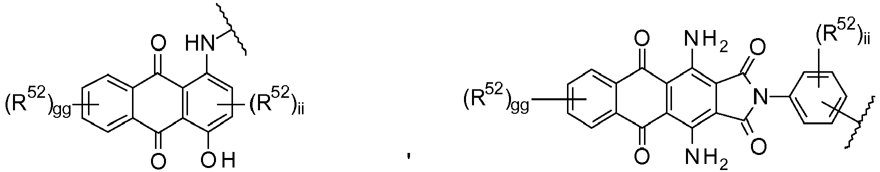 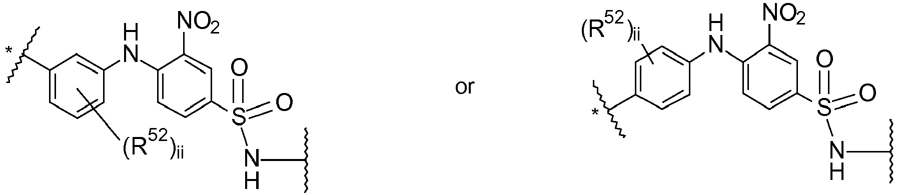 wherein
   the bond marked with * is linked to 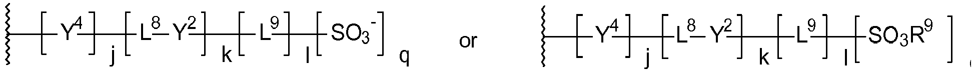
   gg is an integer from 0 to 3,
   hh is an integer from 0 to 2,
   ii is an integer from 0 to 1, and
   R⁵² are independently from each other selected from the group consisting of C₁₋₂₀-alkyl, C₆₋₁₄-aryl, halogen, OC₁₋₆-alkyl, OH, NH₂ and NO₂,
R⁹ is C₁₋₆-alkyl,
R¹⁰ and R¹¹ are independently from each other C₁₋₆-alkyl, which may be substituted with phenyl,
E is N, and
Z² is C₁₋₅₀-alkyl, wherein one or more methylene groups are replaced by -SiR¹⁰²R¹⁰³-,
   -SiR¹⁰²R¹⁰³O-, -O- or -S-, with the proviso that -SiR¹⁰²R¹⁰³-, -SiR¹⁰²R¹⁰³O-, -O- or -S- are not directly linked to E, wherein R¹⁰² and R¹⁰³ are independently from each other C₁₋₆-alkyl.

Most preferably, the compounds of the present invention are of formula 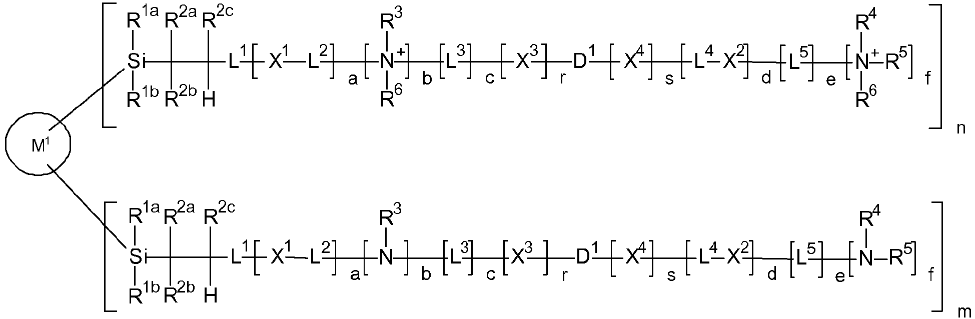 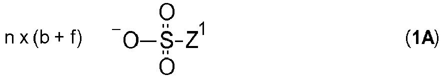 wherein 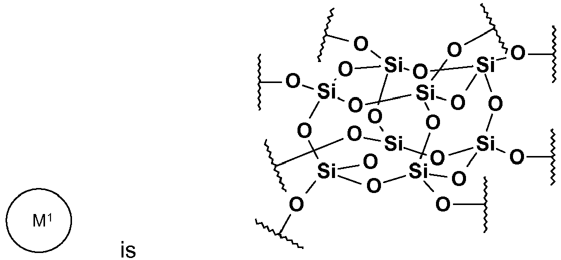
n is 1, 2, 3, 4, 5, 6 or 7,
m is 8 - n,
a is 0 or 1,
b is 0 or 1,
c is 0 or 1,
r is 0 or 1,
s is 0
d is 0,
e is 0 or 1,
f is 0 or 1,
with the proviso that at least b or f is 1, and with the proviso f is 0, then s, d and e are also 0, and that if b is 1, then f is 0, and if f is 1, then b is 0,
R^{1a} and R^{1b} are independently from each other methyl,
R^{2a}, R^{2b} and R^{2c} are independently from each other hydrogen,
L¹ is C₁₋₁₀-alkylene,
X¹ and X³ are O,
L², L³ and L⁵ are independently of each other C₁₋₁₀-alkylene or C₁₋₁₀-alkylene-phenylene, or
L² and R³ or L³ and R³ together with the N linked to both of them form a 6 membered ring, or
L⁵ and R⁴ together with the N linked to both of them form a 6 membered ring,
R³, R⁴ and R⁵ are independently of each other C₁₋₆-alkyl or benzyl, or
R⁴ and R⁵ together with the N linked to both of them form a 6 membered ring, which may also include O or S,
R⁶ is C₁₋₁₀-alkyl, which may be substituted with phenyl,
D¹ is of formula 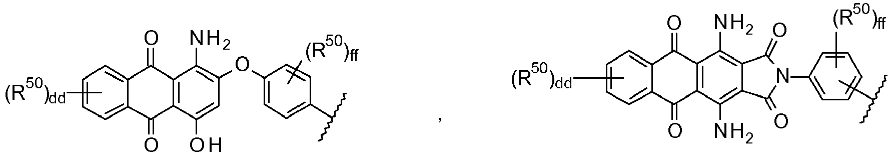 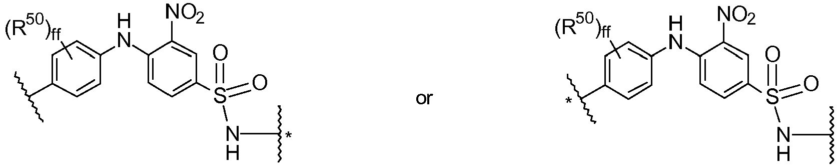 wherein
   the bond marked with * is linked to 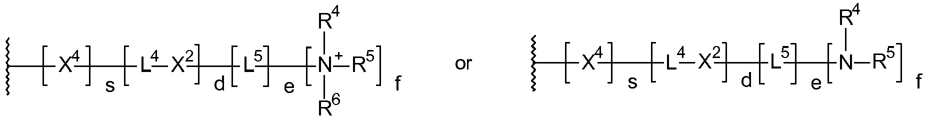
   dd is an integer from 0 to 3,
   ee is an integer from 0 to 2,
   ff is an integer from 0 to 1, and
   R⁵⁰ are independently from each other selected from the group consisting of C₁₋₆-alkyl, OH, NH₂ and NO₂, and
Z¹ is 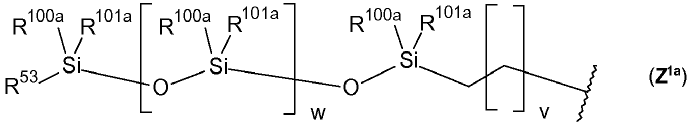 wherein
   R⁵³ is C₁₋₁₀-alkyl,
   R^{100a} and R^{101a} are independently from each other C₁₋₆-alkyl,
   v is an integer from 1 to 12,
   w is an integer from 2 to 25,
or of formula 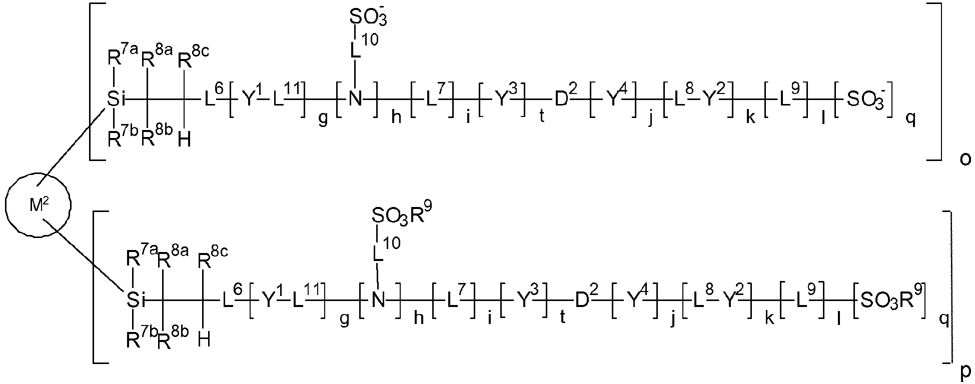 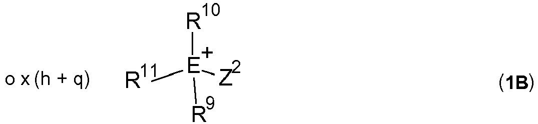 wherein

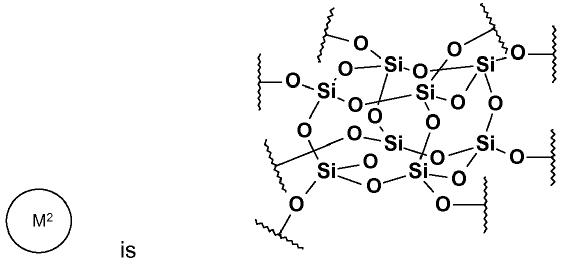

o is 1, 2, 3, 4, 5, 6, 7 or 8,
p is 8 - o,
g is 0
h is 0 or 1,
i is 0 or 1,
t is 0 or 1,
j is 0 or 1,
k is 0
l is 0 or 1,
q is 0 or 1
with the proviso that at least h or q is 1, and with the proviso that if q is 0, then j, k and l are also 0, and that if h is 1, then q is 0, and if q is 1, then h is 0,
R^{7a} and R^{7b} are methyl,
R^{8a}, R^{8b} and R^{8c} are hydrogen,
L⁶ is C₁₋₁₀-alkylene or phenylene,
Y³ and Y⁴ are independently of each other O or NR⁵¹, wherein R⁵¹ is C₁₋₆-alkyl,
L⁷, L⁹ and L¹⁰ are independently of each other C₁₋₁₀-alkylene or C₁₋₁₀-alkylene-phenylene,
D² is formula 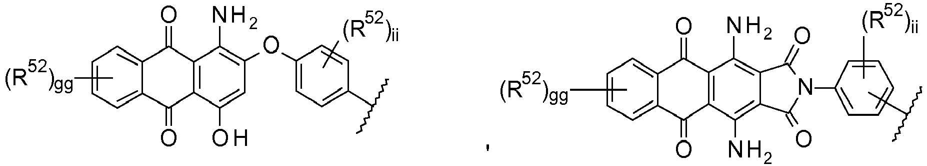 or 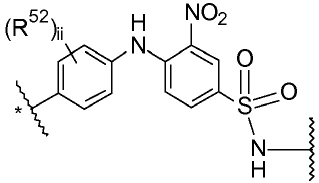 wherein
   the bond marked with * is linked to 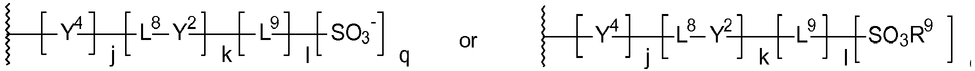
   gg is an integer from 0 to 3,
   hh is an integer from 0 to 2,
   ii is an integer from 0 to 1, and
   R⁵² are independently from each other selected from the group consisting of C₁₋₆-alkyl, OH, NH₂ and NO₂,
R⁹ is C₁₋₆-alkyl,
R¹⁰ and R¹¹ are independently from each other C₁₋₆-alkyl, which may be substituted with phenyl,
E is N, and
Z² is 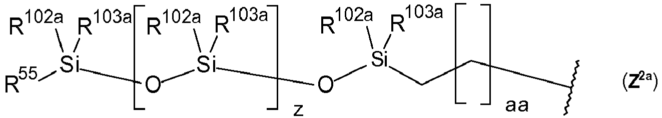 wherein
   R⁵⁵ is C₁₋₁₀-alkyl,
   R^{102a} and R^{103a} are independently from each other C₁₋₆-alkyl, aa is an integer from 1 to 12,
   z is an integer from 2 to 25.

In particular, the compounds of the present invention are of formula 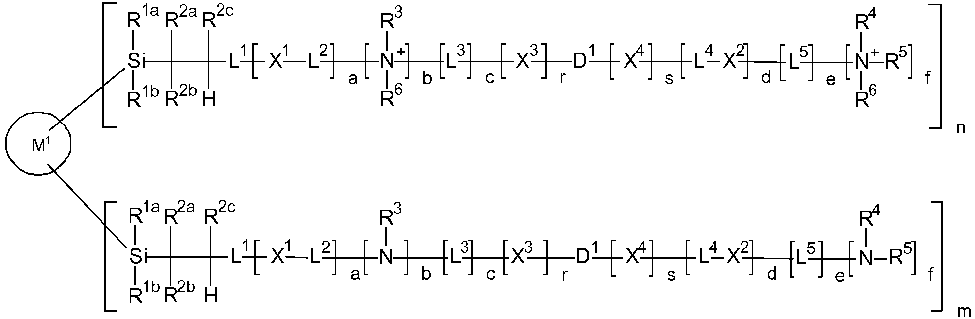 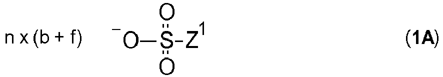 wherein

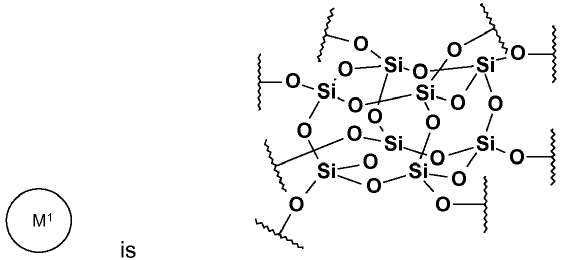

n is 1, 2, 3, 4 or 5,
m is 8 - n,
a is 0
b is 0 or 1,
c is 0 or 1,
r is 0
s is 0
d is 0,
e is 0 or 1, and
f is 0 or 1,
with the proviso that at least b or f is 1, and with the proviso f is 0, then s, d and e are also 0, and that if b is 1, then f is 0, and if f is 1, then b is 0,
R^{1a} and R^{1b} are independently from each other methyl,
R^{2a}, R^{2b} and R^{2c} are independently from each other hydrogen,
L¹ is C₁₋₁₀-alkylene,
L³ and L⁵ are independently of each other C₁₋₂-alkylene or C₁₋₂-alkylene-phenylene, or
L² and R³ or L³ and R³ together with the N linked to both of them form 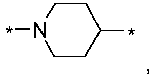
R³, R⁴ and R⁵ are independently of each other C₁₋₆-alkyl or benzyl, or
R⁴ and R⁵ together with the N linked to both of them form 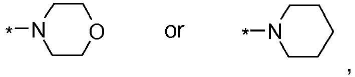
R⁶ is methyl or benzyl,
D¹ is of formula 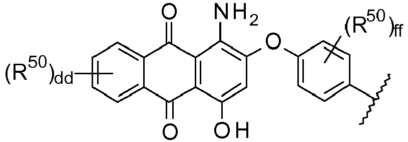 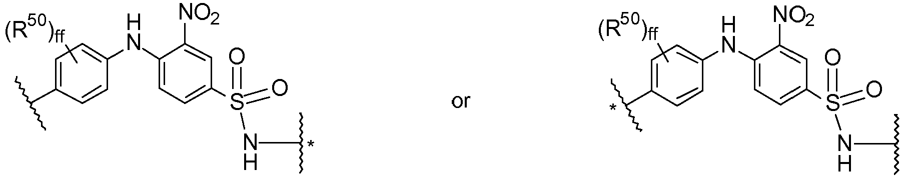 wherein
   the bond marked with * is linked to 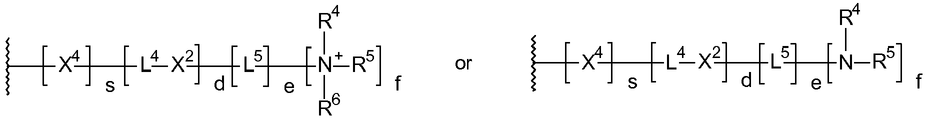
   dd is an integer from 0 to 3,
   ee is an integer from 0 to 2,
   ff is an integer from 0 to 1, and
   R⁵⁰ are independently from each other selected from the group consisting of C₁₋₆-alkyl, OH, NH₂ and NO₂, and
Z¹ is 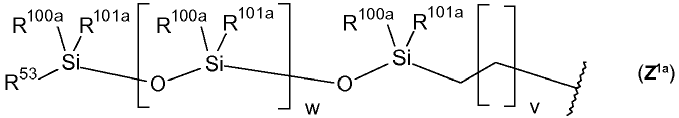 wherein
   R⁵³ is C₁₋₆-alkyl,
   R^{100a} and R^{101a} are methyl,
   v is an integer from 2 to 6,
   w is an integer from 5 to 20,
or of formula 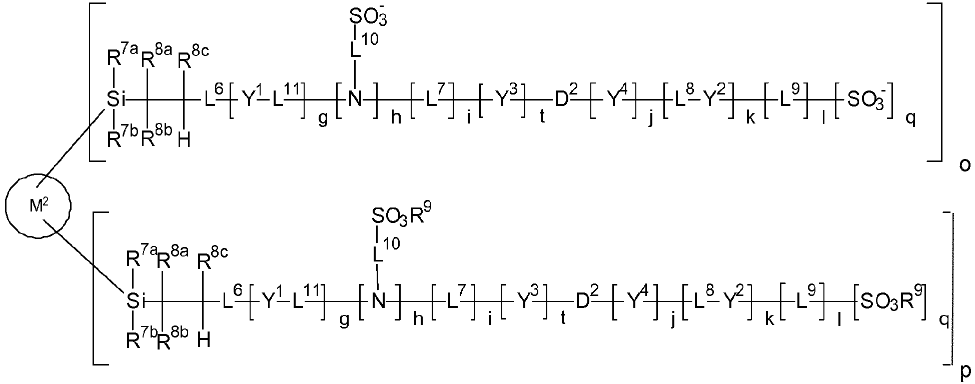 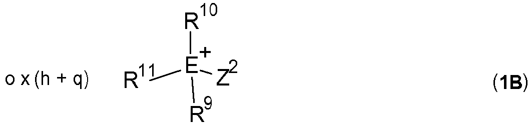 wherein

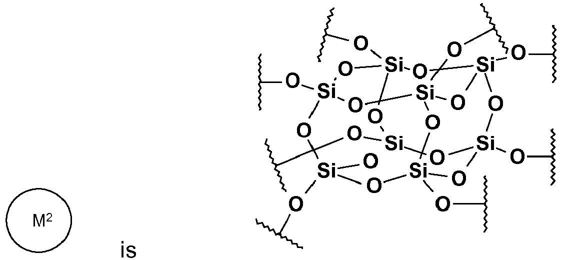

o is 1, 2, 3, 4, 5, 6, 7 or 8,
p is 8 - o,
g is 0
h is 0 or 1,
i is 0 or 1,
t is 0 or 1,
j is 0 or 1,
k is 0
l is 0 or 1,
q is 0 or 1
with the proviso that at least h or q is 1, and with the proviso that if q is 0, then j, k and l are also 0, and that if h is 1, then q is 0, and if q is 1, then h is 0,
R^{7a} and R^{7b} are methyl,
R^{8a}, R^{8b} and R^{8c} are hydrogen,
L⁶ is C₁₋₂-alkylene or phenylene,
Y³ and Y⁴ are independently of each other O or NR⁵¹, wherein R⁵¹ is methyl,
L⁷, L⁹ and L¹⁰ are independently of each other C₁₋₂-alkylene or C₁₋₂-alkylene-phenylene,
D² is formula 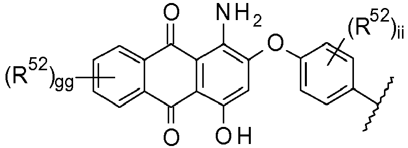 or 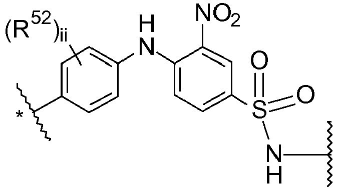 wherein
   the bond marked with * is linked to 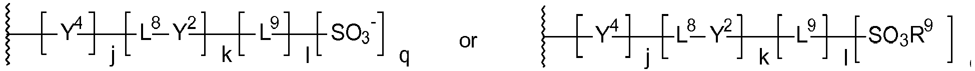
   gg is an integer from 0 to 3,
   hh is an integer from 0 to 2,
   ii is an integer from 0 to 1, and
   R⁵² are independently from each other selected from the group consisting of C₁₋₆-alkyl, OH, NH₂ and NO₂,
R⁹ is methyl,
R¹⁰ and R¹¹ are independently from each other C₁₋₆-alkyl, which may be substituted with phenyl,
E is N, and
Z² is 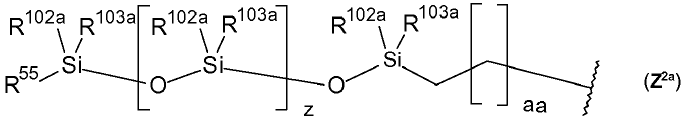 wherein
   R⁵⁵ is C₁₋₆-butyl,
   R^{102a} and R^{103a} are methyl,
   aa is an integer from 2 to 10,
   z is an integer from 5 to 20.

Preferably, n is 1, 2, 3, 4, 5, 6 or 7, and m is 8 - n. More preferably n is 1, 2, 3, 4 or 5, and m is 8-n

Preferably, R⁶ is methyl or benzyl.

Preferably, L¹ is C₁₋₄-alkylene, preferably methylene.

Preferably, L², L³, L⁴ and L⁵ are independently of each C₁₋₄-alkylene or C₁₋₄-alkylene-phenylene, more preferably methylene, ethylene or phenylene-methylene, or
L² and R³ or L³ and R³ together with the N linked to both of them form 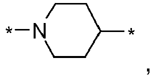 and
R³, R⁴ and R⁵ are independently of each methyl or benzyl, or
R⁴ and R⁵ together with the N linked to both of them form

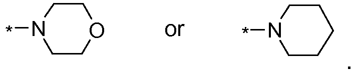

Preferably, R⁵⁰ are independently from each other selected from the group consisting of OH and NO₂.

Preferably R¹⁰⁰ and R¹⁰¹ are methyl.

Preferably, R53 is butyl, R^{100a} and R^{101a} are methyl, v is 3, and w is an integer from 8 to 15, preferably 11.

Preferably,
R⁵⁴ is C₁₋₆-alkyl, more preferably ethyl,
x is an integer from 5 to 20, more preferably from 8 to 15, most preferably 12, and
y is an integer from 1 to 2, more preferably 1.

Preferably, R⁹ is methyl.

Preferably, L⁶ is C₁₋₄-alkylene or phenylene, more preferably L₆ is is methylene, ethylene or phenylene.

Preferably, Y¹, Y², Y³ and Y⁴ are independently of each other O or NR⁵¹, wherein R⁵¹ is methyl.

Preferably, L⁷, L⁸, L^{9,} L¹⁰ and L¹¹ are independently of each other C₁₋₄-alkylene or C₁₋₄-alkylene-phenylene, preferably methylene, ethylene or methylene-phenylene.

Preferably, R⁵² are independently from each other selected from the group consisting of OH and NO₂.

Preferably, R¹⁰ and R¹¹ are independently from each other methyl, butyl or benzyl.

Preferably R¹⁰² and R¹⁰³ are methyl.

Preferably, R⁵⁵ is butyl, R^{102a} and R^{103a} are methyl, aa is an integer from 2 or 10, and z is an integer from 8 to 15, preferably 11.

Preferably,
R⁵⁶ is C₁₋₆-alkyl, more preferably ethyl
bb is preferably an integer from 5 to 20, more preferably from 8 to 15, most preferably 12, and
cc is an integer from 1 to 2, more preferably 1.
In particular preferred are the specific compounds of formulae (**1A**) or (**1B**) disclosed in the examples.

The compounds of formula (**1A**) disclosed in the examples are (**1A1**), (**1A2**), (**1A3**), (**1A4**), (**1A5**), (**1A6**), (**1A7**), (**1A8**), (**1A9**) and (**1A10**).

The compounds of formula (**1B**) disclosed in the examples are (**1B1**) and (**1B2**).

Also part of the present invention, is a process for the preparation of the compounds of formula (1A), which process comprises the step of reacting a compound of formula 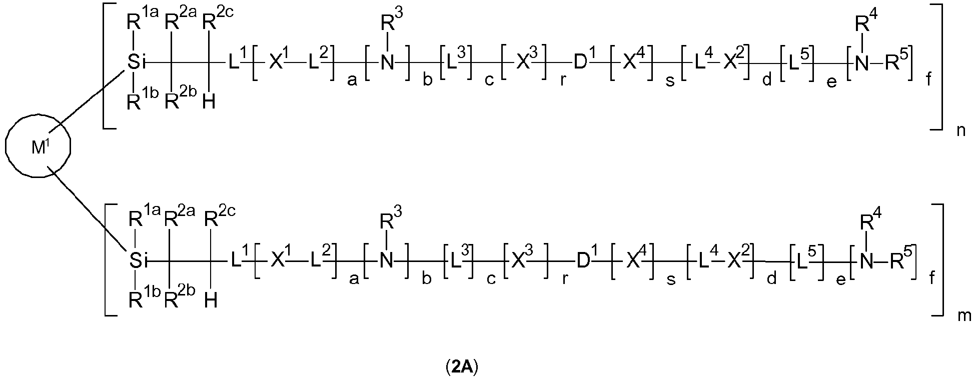 wherein

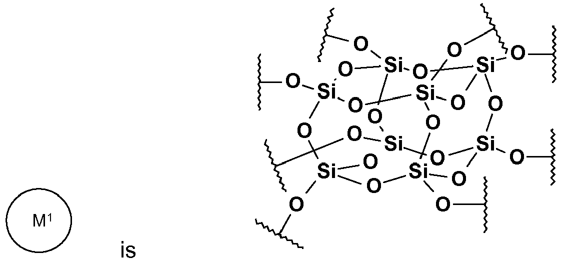

n is 1, 2, 3, 4, 5, 6, 7 or 8,
m is 8 - n,
a is 0 or 1,
b is 0 or 1,
c is 0 or 1,
r is 0 or 1,
s is 0 or 1,
d is 0 or 1,
e is 0 or 1,
f is 0 or 1,
with the proviso that at least b or f is 1, and with the proviso f is 0, then s, d and e are also 0,
R^{1a} and R^{1b} are independently from each other C₁₋₄-alkyl,
R^{2a}, R^{2b} and R^{2c} are independently from each other hydrogen or C₁₋₄-alkyl,
L¹ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L¹ may be substituted with one or more substituents selected from the group consisting of halogen, OC₁₋₆-alkyl, NO₂ and OH,
X¹, X², X³ and X⁴ are independently of each other O, S, C(O) or C(O)O,
L², L³, L⁴ and L⁵ are independently of each other C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L², L³, L⁴ and L⁵ may be substituted with one or more substituents selected from the group consisting of halogen, OC₁₋₆-alkyl, NO₂ and OH, or
L² and R³ or L³ and R³ together with the N linked to both of them form a 5, 6 or 7 membered ring, or
L⁵ and R⁴ together with the N linked to both of them form a 5, 6 or 7 membered ring,
R³, R⁴ and R⁵ are independently of each other C₁₋₂₀-alkyl, which may be substituted with a substituent selected from the group consisting of C₆₋₁₄-aryl, OC₁₋₆-alkyl, and NO₂, or
R⁴ and R⁵ together with the N linked to both of them form a 5, 6 or 7 membered ring, which may also include O or S,
D¹ is a chromophoric moiety, which may be substituted with one or more R⁵⁰, wherein R⁵⁰ are independently from each other selected from the group consisting of C₁₋₂₀-alkyl, C₆₋₁₄-aryl, halogen, OC₁₋₆-alkyl, OH, NH₂ and NO₂,
   with a compound of formula 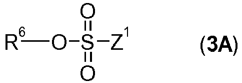 wherein
   R⁶ is C₁₋₂₀-alkyl, which may be substituted with a substituent selected from the group consisting of C₆₋₁₄-aryl, OC₁₋₆-alkyl, and NO₂, and
   Z¹ is C₁₋₁₀₀-alkyl, wherein one or more methylene groups are replaced by -SiR¹⁰⁰R¹⁰¹-,
      -SiR¹⁰⁰R¹⁰¹O-, -O- or -S-, with the proviso that -SiR¹⁰⁰R¹⁰¹-, -SiR¹⁰⁰R¹⁰¹O-, -O- or -S- are not directly linked to the S of 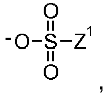 wherein R¹⁰⁰ and R¹⁰¹ are independently from each other C₁₋₆-alkyl.

The compound of formula (**2A**) may be reacted with the compound of formula (**3A**) in the presence of an inert organic solvent. Examples of inert organic solvents are ethers such as dioxane, tetrahydrofuran or diethylether; and halogenated hydrocarbons such as chloroform. Preferably, the compound of formula (**2A**) is reacted with the compound of formula (**3A**) at a temperature in the range from 20 to 200 °C, preferably at a temperature in the range from 50 to 150 °C, more preferably at a temperature in the range from 50 to 110 °C.

The molar ratio of the compound of formula (**3A**)/compound of formula (**2A**) can be in the range of 0.1 to 20, preferably in the range of 0.5 to 15, more preferably in the range of 0.7 to 10.

The compound of formula (2A) may be prepared by reacting a compound of formula 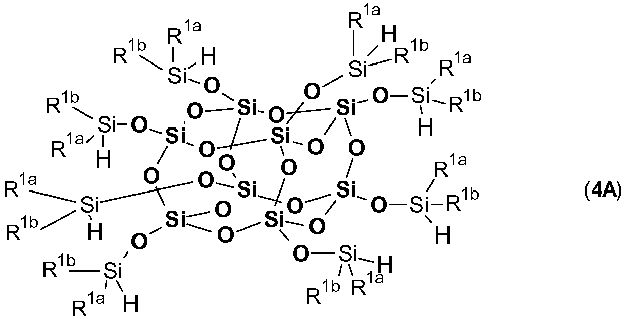 wherein
R^{1a} and R^{1b} are independently from each other C₁₋₄-alkyl,
with a compound of formula 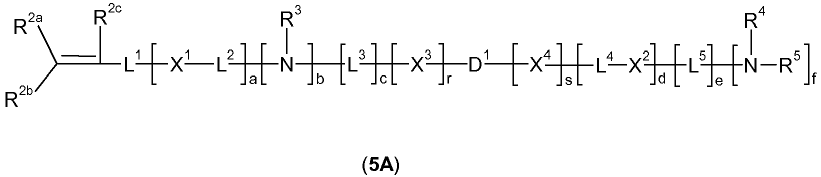 wherein
a is 0 or 1,
b is 0 or 1,
c is 0 or 1,
r is 0 or 1,
s is 0 or 1,
d is 0 or 1,
e is 0 or 1,
f is 0 or 1,
with the proviso that at least b or f is 1, and with the proviso f is 0, then s, d and e are also 0,
R^{2a}, R^{2b} and R^{2c} are independently from each other hydrogen or C₁₋₄-alkyl,
L¹ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L¹ may be substituted with one or more substituents selected from the group consisting of halogen, OC₁₋₆-alkyl, NO₂ and OH,
X¹, X², X³ and X⁴ are independently of each other O, S, C(O) or C(O)O,
L², L³, L⁴ and L⁵ are independently of each other C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L², L³, L⁴ and L⁵ may be substituted with one or more substituents selected from the group consisting of halogen, OC₁₋₆-alkyl, NO₂ and OH, or
L² and R³ or L³ and R³ together with the N linked to both of them form a 5, 6 or 7 membered ring, or
L⁵ and R⁴ together with the N linked to both of them form a 5, 6 or 7 membered ring,
R³, R⁴ and R⁵ are independently of each other C₁₋₂₀-alkyl, which may be substituted with a substituent selected from the group consisting of C₆₋₁₄-aryl, OC₁₋₆-alkyl, and NO₂, or
R⁴ and R⁵ together with the N linked to both of them form a 5, 6 or 7 membered ring, which may also include O or S,
   and
D¹ is a chromophoric moiety, which may be substituted with one or more R⁵⁰, wherein R⁵⁰ are independently from each other selected from the group consisting of C₁₋₂₀-alkyl, C₆₋₁₄-aryl, halogen, OC₁₋₆-alkyl, OH, NH₂ and NO₂.

The compound of formula (**4A**) can be reacted with the compound of formula (**5A**) in the presence of an inert organic solvent. Examples of inert organic solvents are hydrocarbons such as toluene. The compound of formula (**4A**) can be reacted with the compound of formula (**5A**) in the presence of a catalyst. Suitable catalysts are for example platinum containing compounds such as hexachloroplatinic acid, also known as Speier's catalyst, or Pt₂[(CH₂=CH₂Si(Me)₂)₂O]₃, also known as Karstedt's catalyst, or various other catalysts described by N. Sabourault at al. in Org. Lett. 2002, **4**(3), 2117. The compound of formula (**4A**) is usually reacted with the compound of formula (**5A**) at a temperature in the range of 20 to 200 °C, preferably at a temperature in the range of 40 to 120 °C, more preferably at a temperature in the range of 60 to 100 °C.

The compound of formula (**4A**), wherein R^{1a} and R^{1b} are methyl, may be prepared according to D. Höbbel et al., Z. Chem. 1989, 29(7), 260-261 or according to reference example C) of WO 2007/147742. Alternatively, compound (**4A**) can directly be bought from Sigma-Aldrich ("Aldrich"), St. Louis, MO, USA.

The compound of formula (**5A**) can be prepared by methods known in the art.

The compound of formula (**3A**) may be a compound of formula 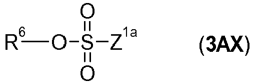 wherein
R⁶ is C₁₋₂₀-alkyl, which may be substituted with a substituent selected from the group consisting of C₆₋₁₄-aryl, OC₁₋₆-alkyl and NO₂, and
Z^{1a} is 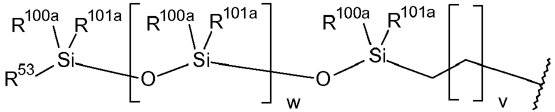 wherein
   R⁵³ is C₁₋₆-alkyl,
   R^{100a} and R^{101a} are methyl,
   v is an integer from 2 to 6,
   w is an integer from 5 to 20;
or of formula 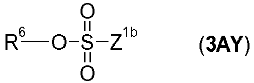 wherein
R⁶ is C₁₋₂₀-alkyl, which may be substituted with a substituent selected from the group consisting of C₆₋₁₄-aryl, OC₁₋₆-alkyl, and NO₂, and
Z^{1b} is 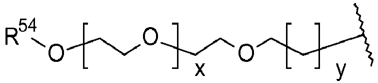 wherein
   R⁵⁴ is C₁₋₁₀-alkyl,
   x is an integer from 5 to 25, and
   y is an integer from 1 to 5.

The compound of formula (**3AX**) may be prepared by reacting a compound of formula 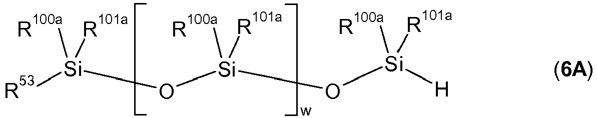 wherein
R⁵³ is C₁₋₆-alkyl,
R^{100a} and R^{101a} are methyl,
w is an integer from 5 to 20;
with a compound of formula 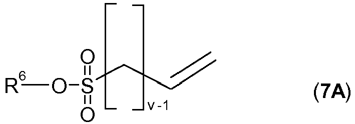 wherein
R⁶ is C₁₋₂₀-alkyl, which may be substituted with a substituent selected from the group consisting of C₆₋₁₄-aryl, OC₁₋₆-alkyl, and NO₂, and
v is an integer from 2 to 6.

The compound of formula (**6A**) can be reacted with the compound of formula (**7A**) in the presence of an inert organic solvent. Examples of inert organic solvents are hydrocarbons such as toluene. The compound of formula (**6A**) can be reacted with the compound of formula (**7A**) in the presence of a catalyst. Suitable catalysts are for example platinum containing compounds such as hexachloroplatinic acid, also known as Speier's catalyst, or Pt₂[(CH₂=CH₂Si(Me)₂)₂O]₃, also known as Karstedt's catalyst, or various other catalysts described by N. Sabourault at al. in Org. Lett. 2002, 4(3), 2117. The compound of formula (**6A**) is usually reacted with the compound of formula (**7A**) at a temperature in the range of 0 to 160°C, preferably at a temperature in the range of 10 to 100 °C, more preferably at a temperature in the range of 15 to 40 °C.

The compound of formula 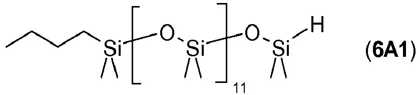 is commercially available (Supplier ABCR).

The compound of formula (**7A**) can be prepared by methods known in the art.

The compounds of formula (**3AY**) can be prepared by reacting a compound of formula (**10**) 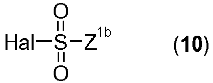 wherein
Hal is halogen, preferably Cl,
Z^{1b} is 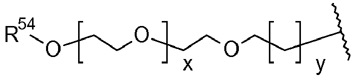 wherein
   R⁵⁴ is C₁₋₁₀-alkyl,
   x is an integer from 5 to 25, and
   y is an integer from 1 to 5.
with R⁶-O-Na,
wherein
R⁶ is C₁₋₂₀-alkyl, which may be substituted with a substituent selected from the group consisting of C₆₋₁₄-aryl, OC₁₋₆-alkyl, and NO₂.

The compounds of formula (**10**) are usually reacted with Na-O-R⁶ in the presence of a suitable solvent such as methanol. The compounds of formula (**10**) are usually reacted with Na-O-R⁶ at a temperature of around 0 °C.

The compounds of formula (**10**) can be prepared by methods known in the art.

Also part of the present invention, is a process for the preparation of compounds of formula (**1B**), which process comprises the step of reacting a compound of formula 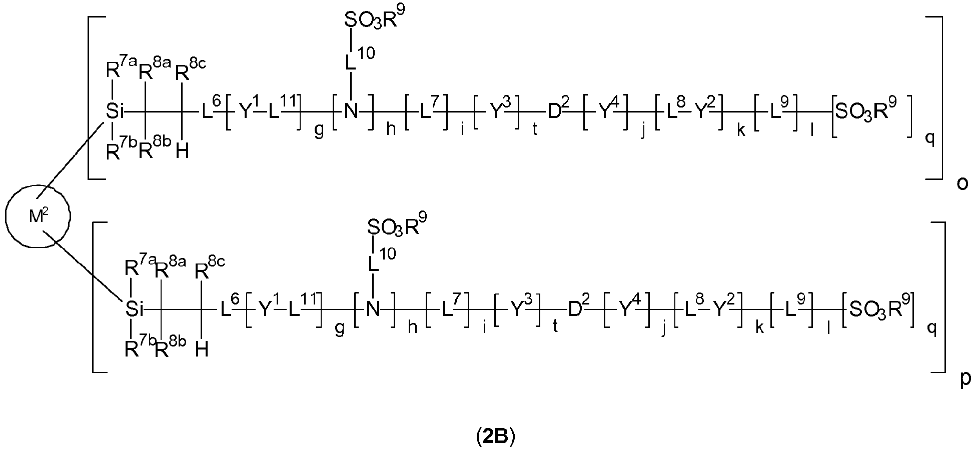 wherein

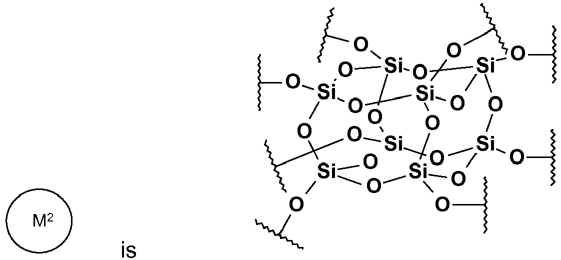

o is 1, 2, 3, 4, 5, 6, 7 or 8,
p is 8 - o,
g is 0 or 1,
h is 0 or 1,
i is 0 or 1,
t is 0 or 1,
j is 0 or 1,
k is 0 or 1,
l is 0 or 1,
q is 0 or 1
with the proviso that at least h or q is 1, and with the proviso that if q is 0, then j, k and I are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₂₀-alkylene, C₁₋₂₀-alkylene-phenylene, C₁₋₂₀-alkylene-C₅₋₈-CyCloalkylene, phenylene or C₅₋₈-cycloalkylene, wherein L⁶ may be substituted with one or more substitutents selected from the group consisting of halogen, OC₁₋₆-alkyl, NO₂ and OH,
Y¹, Y², Y³ and Y⁴ are independently of each other NR⁵¹, O, S, C(O) or C(O)O, wherein R⁵¹ is C₁₋₂₀-alkyl,
L⁷, L⁸, L⁹, L¹⁰ and L¹¹ are independently of each other C₁₋₂₀-alkylene, C₁₋₂₀-alkylene-phenylene or C₁₋₂₀-alkylene-C₅₋₈-cycloalkylene, phenylene or C₅₋₈-cycloalkylene, wherein L⁷, L⁸, L⁹, L¹⁰ and L¹¹ may be substituted with one or more substituents selected from the group consisting of halogen, OC₁₋₆-alkyl, NO₂ and OH, and
R⁹ is C₁₋₁₀-alkyl, and
D² is a chromophoric moiety, which may be substituted with one or more R⁵², wherein R⁵² are independently from each other selected from the group consisting of C₁₋₂₀-alkyl, C₆₋₁₄-aryl, halogen, OC₁₋₆-alkyl, OH, NH₂ and NO₂,
with a compound of formula 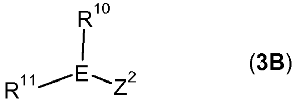 wherein
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P, and
Z² is C₁₋₁₀₀-alkyl, wherein one or more methylene groups are replaced by -SiR¹⁰²R¹⁰³-, -SiR¹⁰²R¹⁰³O-, -O- or -S-, with the proviso that -SiR¹⁰²R¹⁰³-, -SiR¹⁰²R¹⁰³O-, -O- or -S- are not directly linked to E, wherein R¹⁰² and R¹⁰³ are independently from each other C₁₋₆-alkyl.

The compound of formula (**2B**) may be reacted with the compound of formula (**3B**) in the presence of an inert organic solvent. Examples of inert organic solvents are ethers such as dioxane or tetrahydrofuran, hydrocarbons such as toluene, and halogenated hydrocarbons such as chloroform. Preferably, the compound of formula (**2B**) is reacted with the compound of formula (**3B**) at a temperature in the range from 40 to 120 °C, preferably at a temperature in the range from 40 to 70 °C.

The molar ratio of the compound of formula (**3B**)/compound of formula (**2B**) can be in the range of 0.1 to 20, preferably in the range of 0.5 to 15, more preferably in the range of 0.7 to 10.

The compound of formula (**2B**) may be prepared by reacting a compound of formula 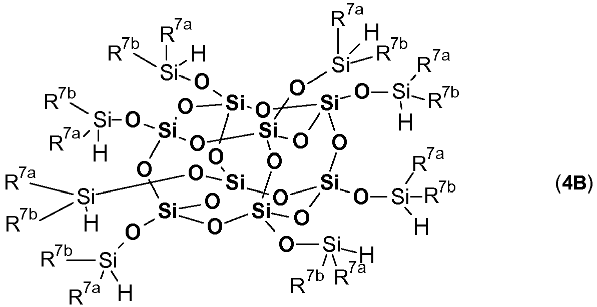 wherein
R^{7a} and R^{7b} are independently of each other C₁₋₄-alkyl,
with a compound of formula 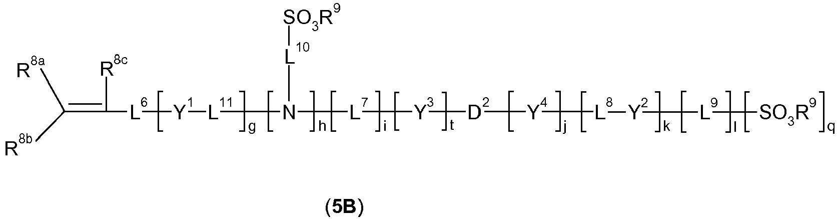 wherein
g is 0 or 1,
h is 0 or 1,
i is 0 or 1,
t is 0 or 1,
j is 0 or 1,
k is 0 or 1,
l is 0 or 1,
q is 0 or 1
with the proviso that at least h or q is 1, and with the proviso that if q is 0, then j, k and I are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L⁶ may be substituted with one or more substitutents selected from the group consisting of halogen, OC₁₋₆-alkyl, NO₂ and OH,
Y¹, Y², Y³ and Y⁴ are independently of each other NR⁵¹, O, S, C(O) or C(O)O, wherein R⁵¹ is C₁₋₂₀-alkyl,
L⁷, L⁸, L⁹, L¹⁰ and L¹¹ are independently of each other C₁₋₂₀-alkylene, C₁₋₂₀-alkylene-phenylene or C₁₋₂₀-alkylene-C₅₋₈-cycloalkylene, phenylene or C₅₋₈-cycloalkylene, wherein L⁷, L⁸, L⁹, L¹⁰ and L¹¹ may be substituted with one or more substituents selected from the group consisting of halogen, OC₁₋₆-alkyl, NO₂ and OH, and
R⁹ is C₁₋₁₀-alkyl, and
D² is a chromophoric moiety, which may be substituted with one or more R⁵², wherein R⁵² are independently from each other selected from the group consisting of C₁₋₂₀-alkyl, C₆₋₁₄-aryl, halogen, OC₁₋₆-alkyl, OH, NH₂ and NO₂.

The compound of formula (**4B**) can be reacted with the compound of formula (**5B**) in the presence of an inert organic solvent. Examples of inert organic solvents are hydrocarbons such as toluene. The compound of formula (**4B**) can be reacted with the compound of formula (**5B**) in the presence of a catalyst. Suitable catalysts are for example platinum containing compounds such as hexachloroplatinic acid, also known as Speier's catalyst, or Pt₂[(CH₂=CH₂Si(Me)₂)₂O]₃, also known as Karstedt's catalyst, or various other catalysts described by N. Sabourault at al. in Org. Lett. 2002, 4(3), 2117. The compound of formula (**4B**) is usually reacted with the compound of formula (**5B**) at a temperature in the range of 20 to 200 °C, preferably at a temperature in the range of 40 to 120 °C, more preferably at a temperature in the range of 60 to 100 °C.

The compound of formula (**4B**), wherein R^{7a} and R^{7b} are methyl, may be prepared according to D. Höbbel et al., Z. Chem. 1989, 29(7), 260-261 or according to reference example C) of WO 2007/147742. Alternatively, compound (**4B**) can directly be bought from Sigma-Aldrich ("Aldrich"), St. Louis, MO, USA.

The compound of formula (**5B**) can be prepared by methods known in the art.

The compound of formula (**3B**) may be a compound of formula 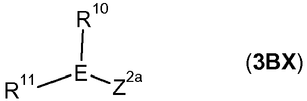 wherein
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P, and
Z^{2a} is 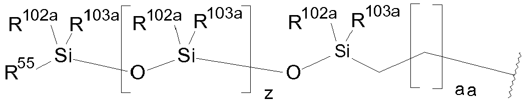 wherein
   R⁵⁵ is C₁₋₁₀-alkyl,
   R^{102a} and R^{103a} are independently from each other C₁₋₆-alkyl,
   aa is an integer from 1 to 12,
   z is an integer from 2 to 25,
or
a compound of formula 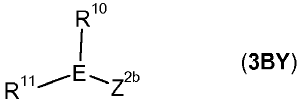 wherein
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P, and
Z^{2b} is 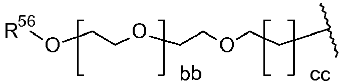 wherein
   R⁵⁶ is C₁₋₁₀-alkyl,
   bb is preferably an integer from 5 to 25,
   cc is an integer from 1 to 5.

The compound of formula (**3BX**) may be prepared by reacting a compound of formula 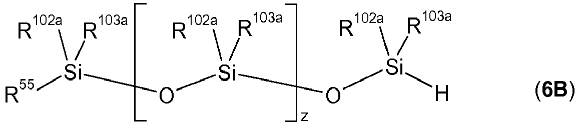 wherein
R⁵⁵ is C₁₋₁₀-alkyl,
R^{102a} and R^{103a} are independently from each other C₁₋₆-alkyl,
z is an integer from 2 to 25,
with a compound of formula 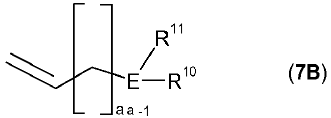 wherein
aa is an integer from 1 to 12,
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P.

The compound of formula (**6B**) can be reacted with the compound of formula (**7B**) in the presence of an inert organic solvent. Examples of inert organic solvents are hydrocarbons such as toluene. The compound of formula (**6B**) can be reacted with the compound of formula (**7B**) in the presence of a catalyst. Suitable catalysts are for example platinum containing compounds such as hexachloroplatinic acid. The compound of formula (**6B**) is usually reacted with the compound of formula (**7B**) at a temperature in the range of 0 to 160°C, preferably at a temperature in the range of 10 to 100 °C, more preferably at a temperature in the range of 15 to 40 °C.

The compound of formula 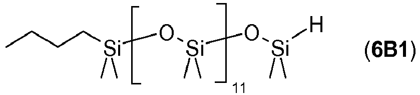 is commercially available (Supplier ABCR).

The compound of formula (**7B**) can be prepared by methods known in the art.

The compounds of formula (**3BY**) can be prepared by reacting a compound of formula (**12**) 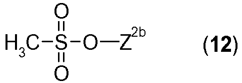 wherein
Z^{2b} is 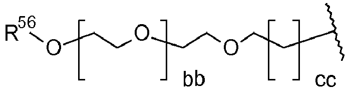 wherein
   R⁵⁶ is C₁₋₁₀-alkyl,
   bb is preferably an integer from 5 to 25,
   cc is an integer from 1 to 5.
with 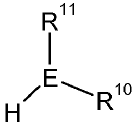 wherein
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P.

The compounds of formula (**12**) is usually reacted with

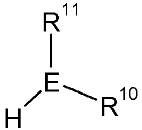

in the presence of a suitable solvent such as dioxane. The reaction is usually performed at a temperature in the range of 5 to 50 °C, preferably 10 to 30 °C.

The compounds of formulae (**1A**) and (**1B**) usually have an average particle size of 0.5 to 1.5 nm, preferably from 0.8 to 1.2 nm.

The compounds of formulae (**1A**) and (**1B**) are coloured. The color of the compounds of formulae (**1A**) and (**1B**) depends on the chromophoric moiety D¹ and D².

For example, if the chromophoric moiety D1 is of formula 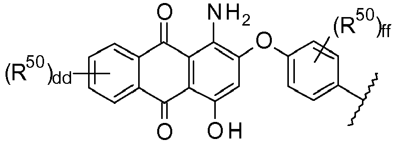 wherein
dd is an integer from 0 to 3,
ff is an integer from 0 to 1, and
R⁵⁰ are independently from each other selected from the group consisting of C₁₋₂₀-alkyl, C₆₋₁₄-aryl, halogen, OC₁₋₆-alkyl, OH, NH₂ and NO₂,
the compound of formula (**1A**) is magenta.

For example, if the chromophoric moiety D¹ is of formulae 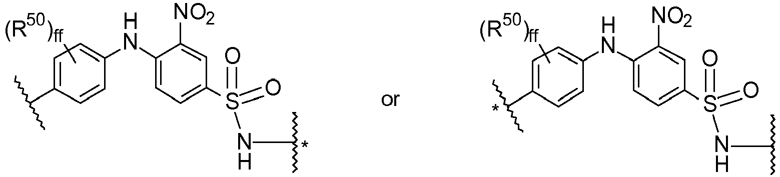 wherein
the bond marked with * is linked to 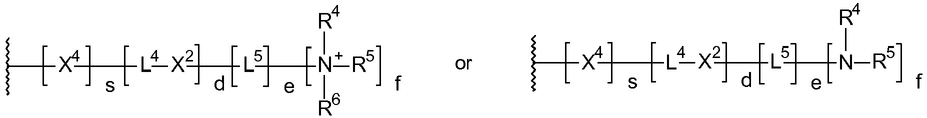 ff is an integer from 0 to 1, and
R⁵⁰ are independently from each other selected from the group consisting of C₁₋₂₀-alkyl, C₆₋₁₄-aryl, halogen, OC₁₋₆-alkyl, OH, NH₂ and NO₂,
the compound of formula (**1A**) is yellow.

For example, if the chromophoric moiety D¹ is of formula 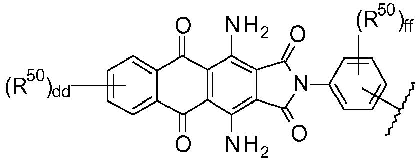 wherein
dd is an integer from 0 to 3,
ff is an integer from 0 to 1, and
R⁵⁰ are independently from each other selected from the group consisting of C₁₋₂₀-alkyl, C₆₋₁₄-aryl, halogen, OC₁₋₆-alkyl, OH, NH₂ and NO₂;
the compound of formula (**1A**) is cyan.

For example, if the chromophoric moiety D² is of formula 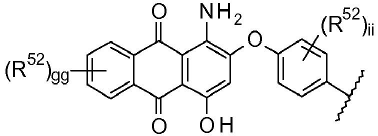 wherein
gg is an integer from 0 to 3,
hh is an integer from 0 to 2,
ii is an integer from 0 to 1, and
R⁵² are independently from each other selected from the group consisting of C₁₋₂₀-alkyl, C₆₋₁₄-aryl, halogen, OC₁₋₆-alkyl, OH, NH₂ and NO₂,
the compound of formula (**1B**) is magenta.

For example, if the chromophoric moiety D² is of formula 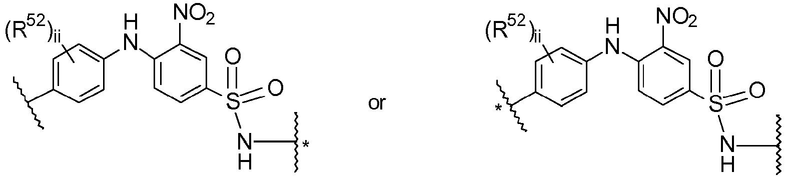 wherein
the bond marked with * is linked to 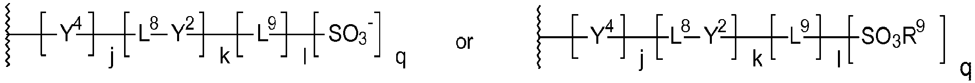 ii is an integer from 0 to 1, and
R⁵² are independently from each other selected from the group consisting of C₁₋₂₀-alkyl, C₆₋₁₄-aryl, halogen, OC₁₋₆-alkyl, OH, NH₂ and NO₂,
the compound of formula (**1B**) is yellow.

For example, if the chromophoric moiety D² is of formula 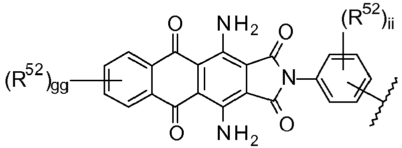 wherein
gg is an integer from 0 to 3,
ii is an integer from 0 to 1, and
R⁵² are independently from each other selected from the group consisting of C₁₋₂₀-alkyl, C₆₋₁₄-aryl, halogen, OC₁₋₆-alkyl, OH, NH₂ and NO₂,
the compound of formula (**1B**) is cyan.

The compounds of formulae (**1A**) or (**1B**) can be used in electronic displays, paints, lacquers, electrostatic toners, inks, additives to plastic and polymers, sealants, color filters, in printing systems, LED coatings, packaging, tagging and labeling applications.

Also part of the present invention is the use of the compounds of formulae (**1A**) or (**1B**) as charged colored particles in electrophoretic devices, preferably in electrophoretic displays, more preferably in electronic paper.

Also part of the present invention is an electrophoretic device comprising compounds of formula (**1A**) or compounds of formula (**1B**). Preferably, the electrophoretic device is an electrophoretic display, more preferably electronic paper. The electronic device can be flexible.

The electrophoretic device comprising compounds of formula (**1A**) or compounds of formula (**1B**) can be prepared by a process comprising the steps of (i) forming a dispersion of the compounds of formula (**1A**) or (**1B**) in a dielectric fluid, and (ii) placing the dispersion obtained in step (i) between a pair of electrodes.

The dielectric fluid is preferably dodecane or a silicon oil having a viscosity which suits this application. The dispersion obtained in step (i) can contain further additives known to a person skilled in the art. The dispersion obtained in step (i) can be encapsulated in microcapsules or incorporated in foils containing microcavities by methods known to a person skilled in the art before being placed between the pair of electrodes in step (ii).

The compounds of formulae (**1A**) and (**1B**) are charged colored particles suitable for use in full-color electronic paper.

The charged colored particles of the present invention have an average particle size of 0.5 to 1.5 nm, preferably 0.8 to .2 nm, and show a narrow size distribution. Thus, the charged colored particles of the present invention are suitable for use in video applications based on CMY technology. The charged coloured particles of the present invention form homogeneous dispersions in dielectric fluids such as dodecane. The Zeta potential of the charged coloured partricles of the present invention in dodecane is above -30 mV and below +30 mV. The dispersion in dodecane has a viscosity (at 25 °C) of below 5 mNs/m². The dispersion in dodecane has a resistivity of about 10¹⁰ Ωcm. The relative permittivity of the dispersion in dodecane is about 2. In additon, the charged coloured particles show a high colour strength.

The process for the preparation of the charged coloured particles of the present invention is advantageous, as the process allows a convenient purification, respectively, isolation of the charged coloured particles. In particular, the process does not produce the charged coloured particles along with considerable high amounts of unwanted by-products such as water or sodium iodide, which are tedious to remove. In addition, the process allows the targeted preparation of the charged coloured particles, consisting of defined supra-molecular structures of the present invention, in particular with regard to the number of charges.

### Examples:

Parts or percentages are by weight.

### Example 1

### Preparation of compound 3AX1

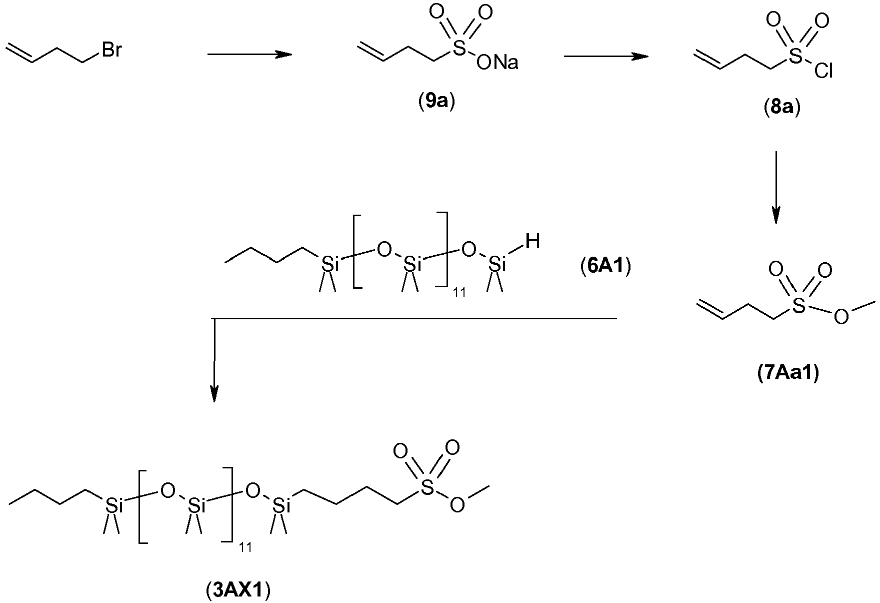

### Preparation of compound 9a

A mixture of 50.0 g 3-butenyl-bromide (Aldrich) and 54.2 g disodium sulfite are refluxed in 300 ml water until all bromide is consumed (TLC). The mixture is cooled and extracted with diethylether, the aqueous phase is evaporated to dryness and the resulting solid is dried in vacuum at 130 °C. 56 g of compound **9a** are obtained sufficiently pure for further elaboration.

### Preparation of compound 8a

A mixture of 50.5 g of crude compound **9a** and 48 ml of phosphoryl chloride are refluxed for four hours. Excess phosphoryl chloride is then distilled off in vacuum (100 mbar) and the resulting residue is taken up in dichloromethane and poured on ice-water. The organic phase is washed with water, dried over sodium sulfate and evaporated giving a liquid which is distilled (65 °C, 0.35 mbar) resulting in 14.6 g of compound **8a** as a colorless liquid. ¹H-NMR (CDCl₃, 300 MHz): δ 2.79 (dt, 2 H); 3.74 (t, 2 H); 5.20 (ddt, 2 H); 5.84 (m, 1 H). ¹³C-NMR (CDCl₃, 75 MHz): δ 28.38; 64.40; 118.79; 131.90.

### Preparation of compound 7Aa1

A solution of 5.3 g of compound **8a** in 15 ml of dry methanol is treated with one equivalent of sodium methanolate at 0 °C until compound **8a** is consumed. The mixture is filtered and the methanol solution diluted with diethyl ether and filtered again to remove sodium chloride. Evaporation of the solvent leaves 4.7 g of compound **7Aa1.** ¹H-NMR (CDCl₃, 300 MHz): δ 2.60 (dt, 2 H); 3.19 (t, 2 H); 3.90 (s, 3 H); 5.17 (ddt, 2 H); 5.84 (m, 1 H). ¹³C-NMR (CDCl₃, 75 MHz): δ 27.58; 48.89; 55.35; 117.46; 133.58.

### Preparation of compound 3AX1

A mixture of 29.5 g commercial polydimethylsiloxane (**6A1**) (supplier ABCR) and 4.0 g of compound **7Aa1** is dissolved in 75 ml of toluene in an argon atmosphere and treated with 0.9 ml of a solution of hexachloro platinic acid in iso-propanol (10% (w/v)) until compound **6A1** is consumed. The mixture is subsequently evaporated and filtered over a small pad of silica (eluent: hexane - ethyl acetate (20 - 1)) to remove the catalyst. Evaporation leaves 19.3 g of compound **3AX1** as colorless oil. ¹H-NMR (CDCl₃, 400 MHz): δ 0.08 (Si(CH₃) ca. 72 H); 0.59 (dt, 4 H); 0.89 (t, 3 H); 1.26 (m, 4 H); 1.51 (quint,. 2 H); 1.91 (quint. 2 H); 3.12 (t, 2 H); 3.91 (s, 3 H). ¹³C-NMR (CDCl₃, 100 MHz): δ 0.09; 1.03; 13.78; 17.69; 17.94; 22.12; 25.43; 26.34; 26.80; 54.88.

### Example 2

### Preparation of compound 3AX2

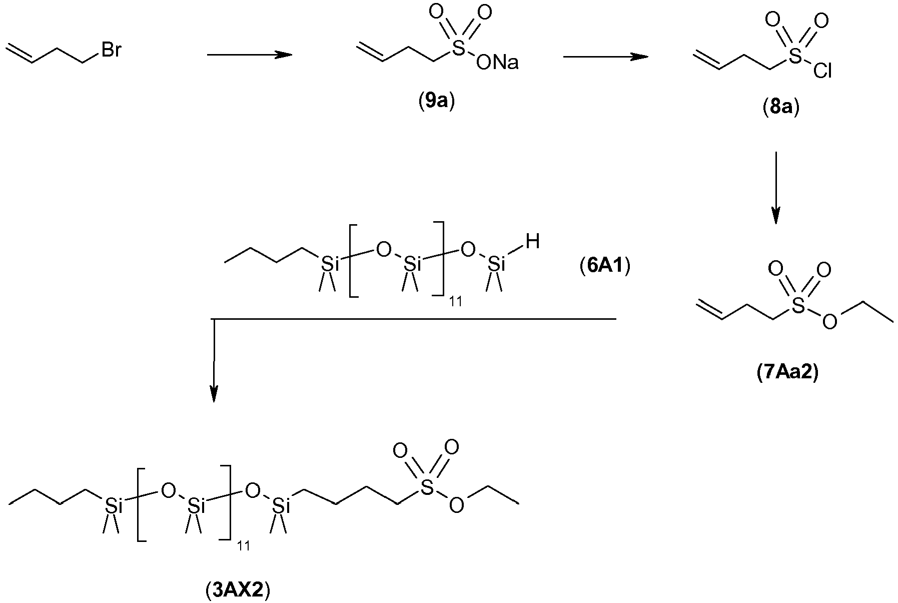

### Preparation of compound 9a and 8a

Compounds **9a** and **8a** are prepared as described in example 1.

### Preparation of compound 7Aa2

Compound **7Aa2** is prepared as described for compound **7Aa1** in example 1, but methanol and methanolate are replaced by ethanol and ethanolate. 2.0 g of compound **7Aa2** are obtained from 2.0 g of compound **8a**. ¹H-NMR (CDCl₃, 300 MHz): δ 1.42 (t, 3 H); 2.60 (dt, 2 H); 3.18 (t, 2 H); 4.30 (q, 2 H); 5.14 (ddt, 2 H); 5.82 (m, 1 H). ¹³C-NMR (CDCl₃, 75 MHz): δ 15.12; 27.65; 49.66; 66.13; 117.37; 133.69.

### Preparation of compound 3AX2

Compound **3AX2** is prepared in analogy to compound **3AX1** in example 1. 2.7 g of compound **3AX2** are obtained from 0.7 g of the compound **7Aa2** and 3.0 g of the compound **6A1**. ¹H-NMR (CDCl₃, 300 MHz): δ 0.08 (Si(CH₃) ca. 72 H); 0.55 (dt, 4 H); 0.82 (t, 6H); 1.33 (m, 6 H); 1.51 (quint,. 2 H); 1.79 (quint. 2 H); 3.00 (t, 2 H); 4.22 (quart. 2 H). ¹³C-NMR (CDCl₃, 75 MHz): δ 0.07; 0.14; 1.01; 13.76; 15.12; 17.70; 17.93; 22.12; 25.42; 26.33; 26.85; 50.24; 65.64.

### Example 3

### Preparation of compound 3AX3

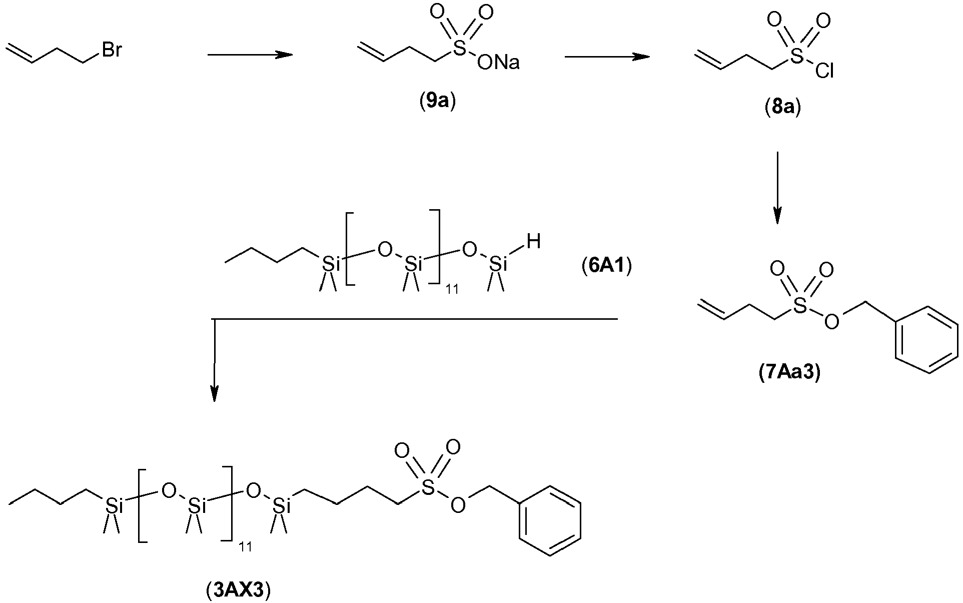

### Preparation of compounds 9a and 8a

Compounds **9a** and **8a** are prepared as described in example 1.

### Preparation of compound 7Aa3

Compound **7Aa3** is prepared as described for compound **7Aa1** in example 1, but methanol and methanolate are replaced by benzylalcohol and benzylate. 6.0 g of compound **7Aa3** are obtained from 6.0 g of compound **8a.** ¹H-NMR (CDCl₃, 300 MHz): δ 2.57 (m, 2 H); 3.10 (t, 2 H); 5.10 (d, 2 H); 5.26 (s, 2 H); 5.76 (ddt, 1 H); 7.43 (s, 5 H). ¹³C-NMR (CDCl₃, 75 MHz): δ 27.60; 50.43; 71.31; 117.41; 128.89; 129.38; 133.57.

### Preparation of compound 3AX3

Compound **3AX3** is prepared in analogy to compound **3AX1** in example 1. 2.5 g of compound **3AX3** are obtained from 0.6 g of the compound **7Aa3** and 3.0 g of the compound **6A1**. ¹H-NMR (CDCl₃, 300 MHz): δ 0.02 (s, ca. 84 H); 0.44 (dt, 4 H); 0.80 (t, 3 H); 1.27 (m, 6 H); 1.75 (quint. 2 H); 2.92 (t, 2 H); 5.18 (s, 2 H); 7.31 (s, 5 H). ¹³C-NMR (CDCl₃, 75 MHz): δ 0.07; 0.16; 1.04; 13.79; 17.65; 17.95; 22.05; 25.44; 26.35; 26.79; 50.97; 70.96; 128.84; 129.28; 133.72.

### Example 3a

### Preparation of compound 8b

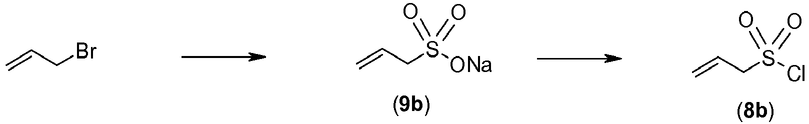

### Preparation of compound 9b

Compound **9b** is prepared in analogy to compound **9a** in example 1. 31.2 g of compound **9b** are obtained from 20 ml allylbromide and 34.9 g of sodium sulfite in 150 ml water.

### Preparation of compound 8b

Compound **8b** is prepared in analogy to compound **8a** in example 1. 20.6 g of compound **8b** are obtained from 55.0 g of crude compound **9b** and 56 ml of phosphoryl chloride. ¹H-NMR (CDCl₃, 400 MHz): δ 4.39 (d, 2 H); 5.67 (dt, 2 H); 6.00 (ddt, 1 H). ¹³C-NMR (CDCl₃, 100 MHz): δ 68.8; 123.1; 127.8.

### Example 3b

### Preparation of compound 8c

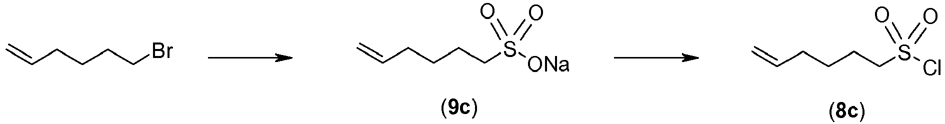

### Preparation of compound 9c

Compound **9c** is prepared in analogy to compound **9a** in example 1. 4.1 g of compound **9c** are obtained from 3.0 ml 5-hexenylbromide and 3.4 g of sodium sulfite in 15 ml water.

### Preparation of compound 8c

Compound **8c** is prepared in analogy to compound **8a** in example 1. 20.6 g of compound **8c** are obtained from 55.0 g of crude compound **9c** and 56 ml of phosphoryl chloride. ¹H-NMR (CDCb, 400 MHz): δ 1.58 (quint. 2 H); 1.86 (quint. 2H); 2.14 (quart. 2 H); 3.16 (t 2H); 5.05 (m, 2 H); 5.78 (ddt 1 H). ¹³C-NMR (CDCl₃, 100 MHz): δ 23.3; 27.4; 33.1; 55.1; 115.4; 137.7.

### Example 4

### Preparation of compound 3AY1

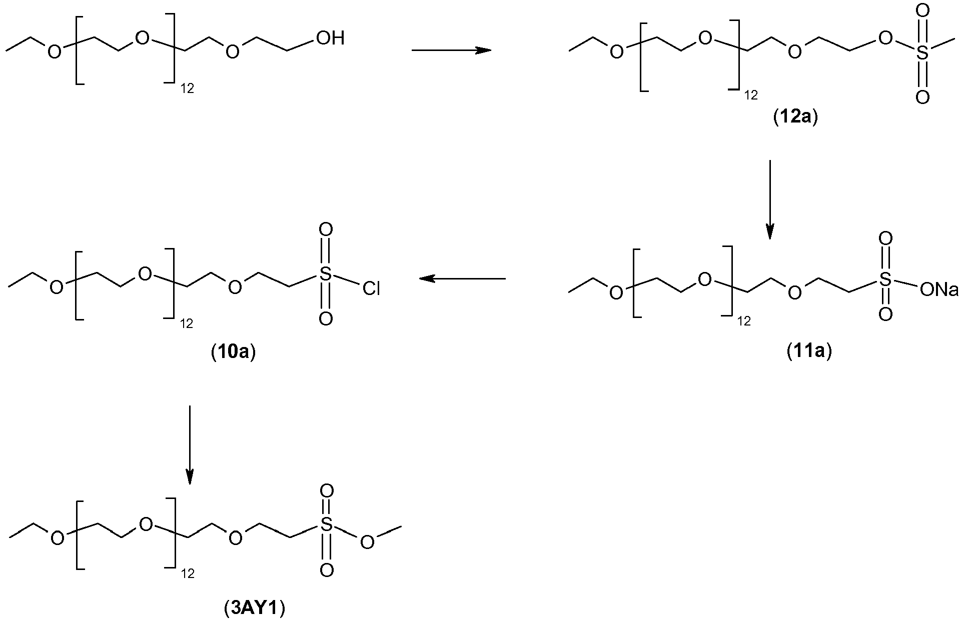

### Preparation of compound 12a

A solution of 20.0 g of commercial polyethyleneglycolethyl ether (Fluka) in 3.1 ml of pyridine and 100 ml of dichloromethane is treated with 2.9 ml methane sulfonylchloride at 0 °C for 24 h. The mixture is subsequently diluted with 50 ml dichloromethane and extracted successively with 1 N hydrochloric acid, satured sodium hydrogen carbonate solution and brine. Evaporation of the organic phase leaves 20.6 g of colorless compound **12a**. ¹H-NMR (CDCl₃, 300 MHz): δ 3.08 (s, 3 H); 3.38 (s, 3 H); 3.69 (m, ca. 45 H); 4.38 (t, 2 H). ¹³C-NMR (CDCl₃, 75 MHz): δ 37.72; 59.01; 69.01; 69.30; 70.56; 71.92.

### Preparation of compound 11a

A mixture of 10.0 g of compound **12a** and 2.4 g sodium sulfite in 30 ml of water is refluxed for 24 h, cooled to room tempaerature and extracted with diethyl ether. The aqueous phase is subsequently evaporated to dryness and stored at 110 °C and 100 mbar to give 4.0 g of a sticky compound **11a,** which is used without further purifications.

### Preparation of compound 10a

Compound **10a** is prepared as described for compound **8a** in example 1. 4.1 g of compound **10a** are obtained from 4.0 g of crude compound **11a** and 10 ml of phosphoryl chloride. ¹H-NMR (CDCl₃, 300 MHz): δ 3.65 (m). ¹³C-NMR (CDCl₃, 75 MHz): δ 42.72; 52.58; 53.51; 62.79; 68.80; 70.57; 70.82; 71.29; 71.35.

### Preparation of compound 3AY1

Compound **3AY1** is prepared in analogy to compound **7Aa1** in example 1. 3.9 g of compound **3YA1** are obtained from 4.1 g of crude compound **10a** in 13 ml of methanol and 1.1 equivalent sodium methoxide. ¹H-NMR (CDCb, 300 MHz): δ 3.49 (m, 5 H); 3.71 (m, ca. 46 H); 3.92 (s, 3 H).

### Example 5

### Preparation of yellow compound 5A1

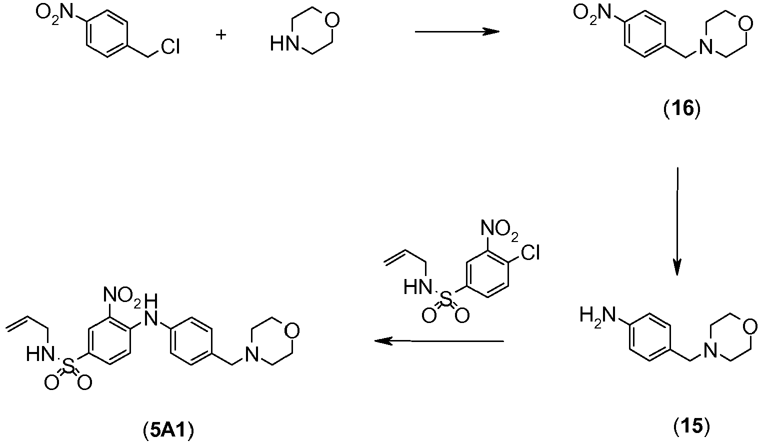

### Preparation of compound 16

A solution of 20.0 g of morpholine in 600 ml chloroform is successively treated with 40.0 g of p-nitrobenzylchloride and 24.0 g of sodium carbonate at 65 °C for 18 h. Usual work-up and purification by column chromatography (eluent: hexane - ethyl acetate (8 - 10)) gives 40.4 g of compound **16.** ¹H-NMR (CDCl₃, 300 MHz): δ 2.43 (m, 4 H); 3.56 (s, 2 H); 3.68 (m, 4 H); 7.49 (d, 2 H); 8.12 (d, 2 H). ¹³C-NMR (CDCl₃, 75 MHz): δ 53.59; 62.40; 66.65; 123.45; 129.50; 145.94; 147.15.

### Preparation of compound 15

A mixture of 250 ml of dioxane and 80 ml of concentrated hydrochloric acid is charged under vigourous stirring with 30.0 g tin granules and 34.8 g of compound **16.** The mixture is stirred at 35 °C until compound **16** is consumed, filtered and diluted with ethyl acetate. Usual extraction procedures leave 23.4 g of compound **15**. ¹H-NMR (CDCl₃, 300 MHz): δ 2.43 (t, 4 H); 3.40 (s, 2 H); 3.67 (broad, NH₂); 3.69 (t, 4 H); 6.64 (d, 2 H); 7.13 (d, 2 H). ¹³C-NMR (CDCl₃, 75 MHz): δ 53.50; 63.04; 67.02; 114.87; 127.39; 130.40; 145.58.

### Preparation of yellow compound 5A1

A solution of 10 ml satured sodium carbonate is charged with 1.0 g 4-chloro-3-nitro-benzene-allylsulfonamide and 0.6 g of compound **15** and stirred at 100 °C for 8 h until compound **15** is consumed. After cooling down the mixture is diluted with dichloromethane and worked-up in the usual extractive manner to give 1.0 g of yellow compound **5A1** after purification by column chromatography (eluent: hexane - ethyl acetate (4 - 6)). ¹H-NMR (CDCl₃, 300 MHz): δ 2.43 (t, 4 H); 3.49 (s, 2 H); 3.57 (NH); 3.67 (t, 4 H);5.08 (ddd, 2 H); 5.69 (ddt, 1 H); 7.17 (d, 1 H); 7.21 (d, 2 H); 7.39 (d, 2 H); 7.71 (dd 1 H); 8.65 (dd, 1 H); 9.74 (NH). ¹³C-NMR (CDCl₃, 75 MHz): δ 45.66; 53.53; 62.66; 66.90; 116.59; 117.60; 125.07; 126.93; 128.43; 130.65; 131.47; 133.04; 133.26; 134.13; 136.99; 145.73.

### Example 6

### Preparation of magenta compound 5A2

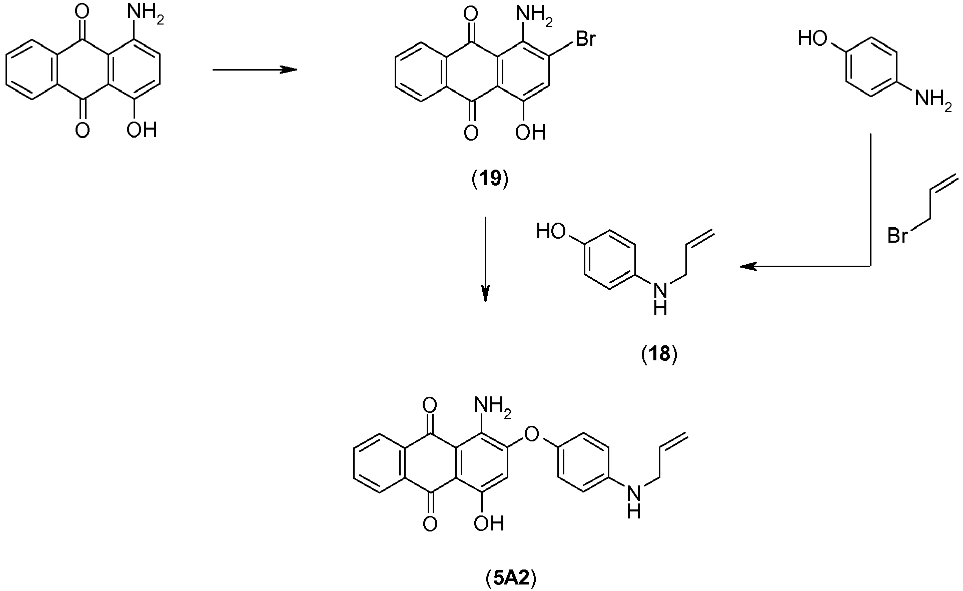

### Preparation of compound 19

31.0 g of 1-amino-4-hydroxyanthrachinone are dissolved in 300 ml of nitrobenzene and heated to 100 °C in an argon atmosphere. During one hour 23.0 g of bromine are dropped into that mixture which is subsequently heated to 130 °C for additional three hours. After cooling down to room temperature the mixture is poured into 100 ml methanol and filtered. The residue is thouroughly washed with methanol and hexane and finally dried at 100 °C in vacuum. By concentrating the mother liquors an additional crop of compound **19** is obtained resulting in an overall yield of 33.9 g. ¹H-NMR (CDCl₃, 300 MHz): δ 7.03 (s, 1 H); 7.55 (m, 2 H); 8.03 (m, 2 H).

### Preparation of compound 18

55.0 g *para*-aminophenol and 60.0 g of allylbromide are dissolved in 300 ml ethanol and treated at reflux with 35.0 g potassium carbonate until para-aminophenol is consumed. The mixture is filtered while hot and the organic phase is evaporated. The resulting residue is chromatographed on silica gel (eluent: hexane - ethyl acetate (10 - 1)) to give 10.1 g of compound **18**. ¹H-NMR (CD₃OD 300 MHz): δ 3.66 (d, 2 H); 3.88 (OH, NH); 5.11 (d, 1 H); 5.24 (d, 1H); 5.94 (ddt, 1 H); 6.65 (m, 4 H). ¹³C-NMR (CD₃OD, 100 MHz): δ 115.09; 115.43; 115.53; 135.92; 141.42; 149.32.

### Preparation of magenta compound 5A2

A suspension of 1.0 g cesium carbonate in 2 ml dimethylformamide is charged with 1.0 g of compound **19** and 0.5 g compound **18** and heated to 80 °C until compound **19** is consumed. The mixture is subsequently dropped into water und the precipitate filtered off, dissolved in ethyl acetate, dried over sodium sulfate yielding 1.0 g of magenta compound **5A2** after removal of solvent. ¹H-NMR (CDCl₃, 300 MHz): δ 3.80 (d, 2 H); 5.27 (dd, 2 H); 5.93 (ddt, 1 H); 6.39 (s, 1 H); 6.68 (m, 2 H); 6. 97 (m, 2 H); 7.75 (m, 2 H); 8.33 (M, 2 H). ¹³C-NMR (CDCl₃, 75 MHz): δ 46.75; 107. 86; 108.21; 109.08; 113.96; 114.49; 116.14; 116.56; 121.99; 126.28; 126.77; 132.80; 133.44; 133.52; 135.00; 139.17; 144.27; 146.37; 156.52; 159.91; 183.16; 185.18.

### Example 7

### Preparation of magenta compound 5A3

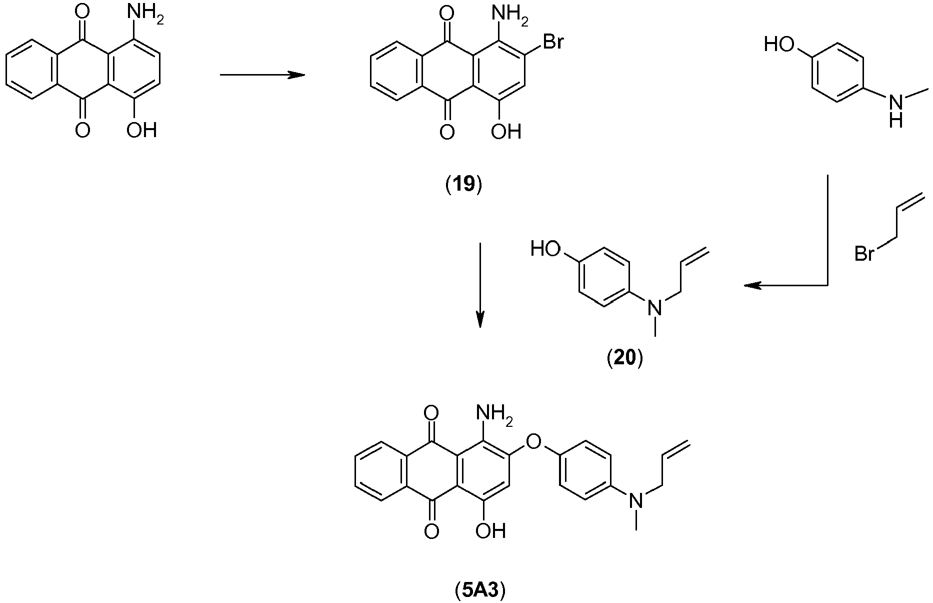

### Preparation of compound 19

Compound **19** is prepared as described in example 6.

### Preparation of compound 20

10.0 g of *para*-N-methylaminophenol and 7.5 ml of allybromide are heated to 40 °C in 60 ml water containing 12.2 g sodium hydrogencarbonate for four hours. The mixture is then extracted with ethyl acetate. Usual work-up and column chromatograpgy over silica gel (eluent: ethyl acetate) gives 4.6 g of compound **20.** ¹H-NMR (CD₃OD, 300 MHz): δ 2.75 (s, 3 H); 3.33 (d, 2 H); 5.16 (dd, 2 H); 5.84 (ddt, 1 H); 6.71 (dd, 4 H). ¹³C-NMR (CD₃OD, 100 MHz): δ 38.45; 57.39; 115.62; 116.24; 116.76; 134.46; 143.76; 149.68.

### Preparation of magenta compound 5A3

Compound **5A3** is prepared in analogy to compound **5A2** in example 6. 4.7 g of magenta compound **5A3** are obtained from 3.5 g of compound **20** and 6.2 compound **19.** ¹H-NMR (CDCl₃, 300 MHz): δ 3.00 (s, 3 H); 3.96 (d, 2 H); 5.21 (dd, 2 H); 5.89 (ddt, 1 H); 6.40 (s, 1 H); 6.77 (d, 2 H); 7.01 (d 2 H); 7.77 (m, 2 H); 8.35 (dd, 2 H). ¹³C-NMR (CDCl₃, 75 MHz): δ 38.40; 55.56; 107.86; 108.21; 109.08; 113.46; 116.46; 120.73; 126.26; 126.77; 132.75; 133.33; 133.41; 133.49; 135.00; 139.19; 143.54; 147.83; 156.61; 159.95; 183.14; 185.15.

### Example 8

### Preparation of magenta compound 5A4

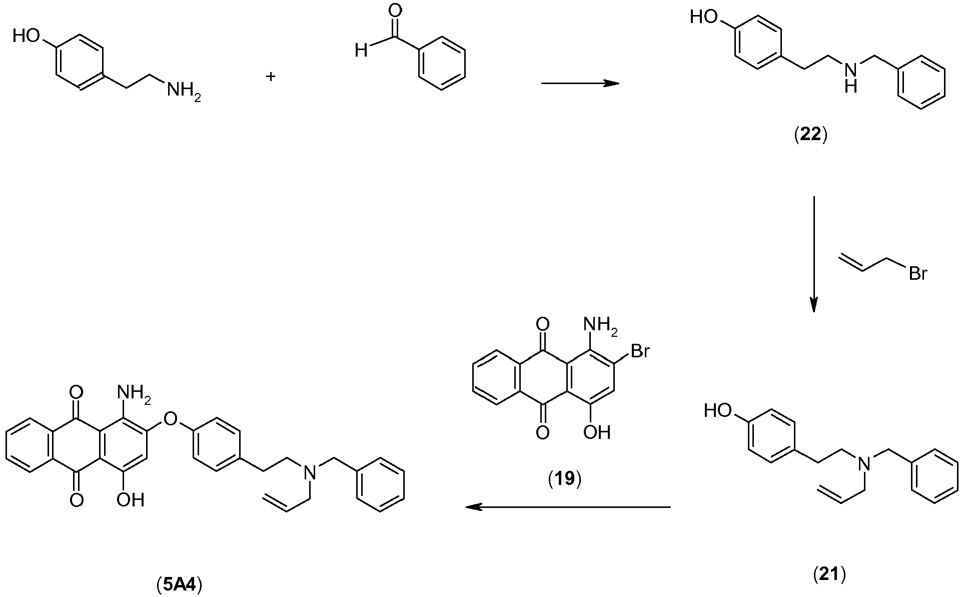

### Preparation of compound 22

12.0 g of tyramine and 9.3 g of benzaldehyde are strirred in 250 ml of methanol containing 100 g of activated molecular sieves (4A) for 24 h. The mixture is then filtered, cooled to 0 °C and treated with excess solid sodium boronate for 3 h. The solvent is then evaporated and the residue taken up in a small volume of brine and extracted with diethyl ether, yielding after usual work-up 13.7 g of compound **22.** ¹H-NMR (CD₃OD, 300 MHz): δ 2.76 (m, 2 H); 2.85 (m, 2 H); 3.81 (s, 2 H); 6.73 (d, 2 H); 7.01 (d, 2 H); 7.30 (m, 5 H). ¹³C-NMR (CD₃OD, 100 MHz): δ 33.64; 49.59; 52.63; 114.98; 127.17; 128.26; 128.35; 129.20; 138.01; 155.85.

### Preparation of compound 21

9.0 g of compound **22** and 2.8 ml allylbromide are refluxed in 25 ml of acetonitrile containg 6.8 g of potassium carbonate and 0.1 g sodium iodide for 24 h. Filtration and evaporation of solvent gives a residue which is taken up in ethyl acetate and acidified with 1 N hydrochloric acid to pH = 3. The aqueous phase is separated and repeatedly extracted with ethyl acetate to give after removal of solvent 7.0 g of compound **21** as a white solid. ¹H-NMR (CD₃OD, 300 MHz): δ 2.80 (m, 4 H); 3.28 (d, 2 H); 3.78 (s, 2 H); 5.28 (dd, 2 H); 6.00 (dddt, 1 H); 6.76 (d, 2 H); 7.02 (d, 2 H); 7.40 (m, 5 H). ¹³C-NMR (CDCl₃, 75 MHz): δ 31.85; 55.19; 56.51; 57.98; 115.65; 118.33; 127.24; 128.38; 129.44; 129.82; 131.80; 134.92; 138.15; 154.39.

### Preparation of compound 19

Compound **19** is prepared as described in example 6.

### Preparation of magenta compound 5A4

Compound **5A4** is prepared in analogy to compound **5A2** in example 6. 7.2 g of magenta compound **5A4** are obtained from 5.9 g of compound 21 and 6.5 g of compound **19.** ¹H-NMR (CDCl₃, 300 MHz): δ 2.78 (m, 4 H); 3.18 (d, 2 H); 5.17 (d, 1 H); 5.27 (d, 1 H); 5.91 (ddt, 1 H); 6.35 (s, 1 H); 7.03 (d, 2 H); 7.20 (d, 2 H); 7.30 (m, 5 H); 7.73 (m, 2 H); 8.30 (m, 2 H). ¹³C-NMR (CDCl₃, 75 MHz): δ 32.97; 55.02; 56.85; 58.20; 108.52; 117.41; 120.82; 126.31; 126.93; 128.24; 128.81; 130.70; 132.85; 133.37; 133.61; 134.95; 135.82; 138.71; 139.45; 151.53; 155.51; 159.69; 169.20; 183.16; 185.38.

### Example 9

### Preparation of magenta compound 5A5

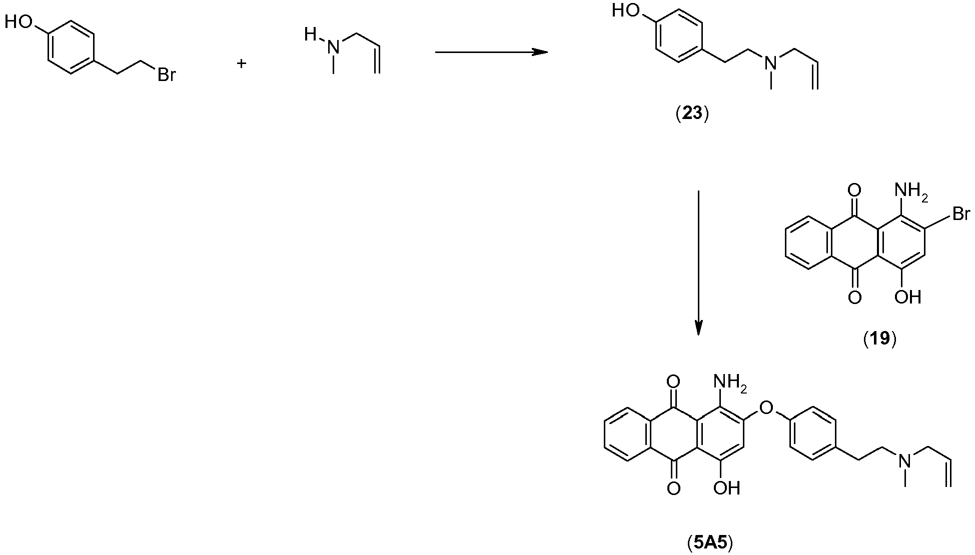

### Preparation of compound 23

10.6 g of 4-hydroxyphenethylbromide and 3.9 g of N-methylallylamine are dissolved in 100 ml of chloroform containing 5.6 g of potassium carbonate and heated to reflux for 3 d. The mixture is then filtered and evaporated. The residue is chromatographed on silica gel (eluent: dichloromethane - methanol (10 - 1.5)) to give 5.8 g of compound **23**. ¹H-NMR (CDCl₃, 300 MHz): δ 2.36 (s, 3 H); 2.74 (m, 4 H); 3.16 (d, 2 H); 5.23 (dd, 2 H); 5.91 (ddt, 1 H); 6.74 (d, 2 H); 7.01 (d, 2 H). ¹³C-NMR (CDCl₃, 75 MHz): δ 32.03; 41.46; 54.94; 60.65; 115.78; 119.23; 129.66; 130.52; 133.70; 155.26.

### Preparation of compound 19

Compound **19** is prepared as described in example 6.

### Preparation of magenta compound 5A5

Compound **5A5** is prepared in analogy to compound **5A2** in example 6. 11.8 g of magenta compound **5A5** are obtained from 7.6 g of compound **23** and 14.0 g of compound **19**. ¹H-NMR (CDCl₃, 300 MHz): δ 2.35 (s, 3 H); 2.67 (m, 2 H); 2.85 (m, 2 H); 3.11 (d, 2 H); 5.19 (d, 1 H); 5.25 (d, 1 H); 5.90 (ddt, 1 H); 6.37 (s, 1 H); 7.08 (d, 2 H); 7.30 d, 2 H); 7.75 (m, 2 H); 8.31 (dd, 2 H). ¹³C-NMR (CDCl₃, 75 MHz): δ 33.25; 42.03; 58.81; 60.84; 108.55; 109.32, 117.85; 120.96; 126.28; 126.77; 130.60; 132.82; 133.32; 133.53; 134.91; 135.34; 138.56; 139.07; 151.65; 155.42; 159.41; 183.11; 185.36.

### Example 9a

### Preparation of cyan compound 5A6

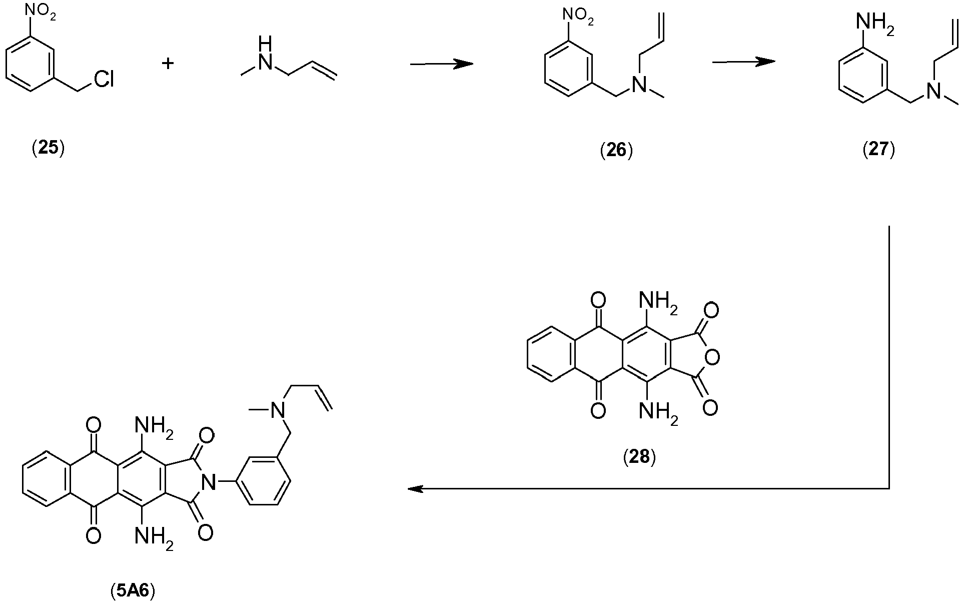

### Preparation of compound 26

A mixture of 1.55 g of dry sodium carbonate, 0.85 g of N-allylmethyl amine and 2.00 g of compound 25 are suspended in 25 ml of chloroform and refluxed for 48 h. The mixture is filtered and the solvent evaporated to leave 2.40 g of compound **26** as an oil. ¹H-NMR (CDCl₃, 300 MHz): 2.18 (s, 3 H); 3.03 (dt, 2 H); 3.55 (s, 2 H); 5.17 (dd, 2 H); 5.88 (ddd, 1 H); 7.45 (t, 1 H); 7.64 (d, 1 H); 8.07 (ddd, 1 H); 8.17 (d, 1 H). ¹³C-NMR (CDCl₃, 75 MHz): 42.0; 60.5; 117.8; 121.9; 123.5; 129.1; 134.9; 135.4; 141.7; 148.3.

### Preparation of compound 27

The compound **26** is dissolved in 25 ml dioxane containing 2.2 g of tin granules and treated with 6.2 ml conc. hydrogenchloride at room temperature dropwise. The mixture is filtered, diluted with ethyl acetate and neutralized with sodium hydroxide solution (2 N). Separation and evaporation of the organic pühase leaves an oily residue which is further purified over silicagel (eluent: hexane - ethyl acetate: 1 - 1) to yield 1.40 g of compund **27**. ¹H-NMR (CDCl₃, 300 MHz): 2.20 (s, 3 H); 3.06 (dt, 2 H); 3.59 (s, 2 H); 5.20 (dd, 2 H); 5.93 (ddd, 1 H); 6.57 (dd, 1 H); 6.71 (s, 1 H); 6.73 (dd, 1 H); 7.12 (t, 1 H). ¹³C-NMR (CDCl₃, 75 MHz): 43.1; 60.6; 61.8; 113.9; 115.7; 117.6; 119.4; 129.1; 135.9; 140.2; 146.5.

### Preparation of compound 5A6

A mixture of 0.50 g of compound **28,** obtained according to FR 1410259, and 0.34 g of compound 27 are heated in 10 ml of cellosolve for 2 h at 130 °C. The mixture is cooled to room temperature and filtered, and the residue washed with methanol and diethyl ether to give 0.51 g of cyan compound **5A6.** ¹H-NMR (CDCl₃, 300 MHz): 2.26 (s, 3 H); 3.11 (d, 2 H); 3.61 (s, 2 H); 5.22 (ddd, 2 H); 5.96 (ddd, 1 H); 6.57 (dd, 1 H); 7.36 (t, 1 H); 7.50 (m, 3 H); 7.77 (dd, 2 H); 8.26 (dd, 2 H). ¹³C-NMR (CDCl₃, 75 MHz): 42.1; 60.5; 61.2; 117.7; 119.3; 119.5; 124.4; 126.6; 126.8; 128.8; 129.0; 133.5; 133.7; 135.7; 140.6; 140.9; 167.3; 184.8.

### Example 9b

### Preparation of cyan compound 5A7

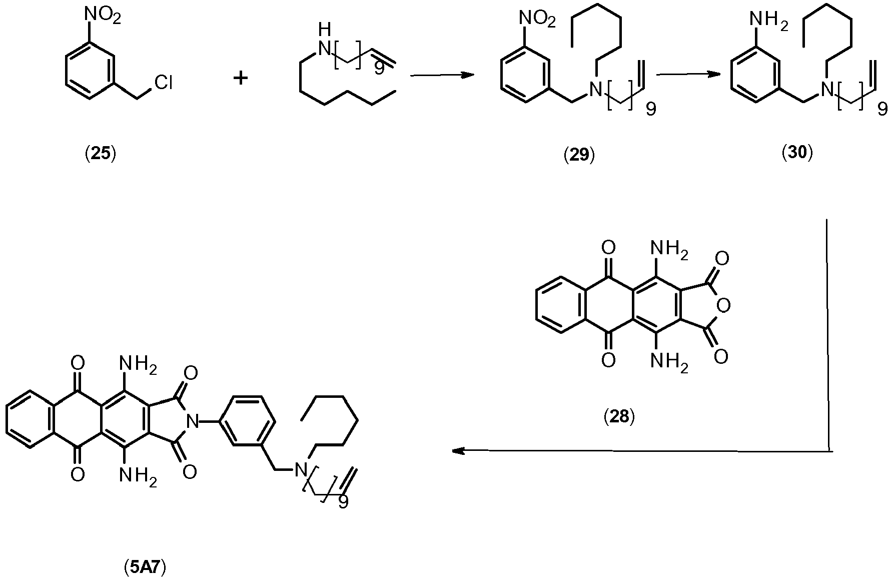

### Preparation of compound 29

In analogy to the preparation of compound **26** in example 9a, compound **29** is obtained from 5.75 g of compound 25 and 8.50 g of N-allylundecenylamine to give 8.60 g of compound 29. ¹H-NMR (CDCl₃, 300 MHz): 0.89 (t, 3 H); 1.40 (m, 25 H); 2.03 (2 H); 2.43 (t, 4 H); 3.64 (s, 2 H); 4.94 (ddd, 2 H); 5.83 (ddd, 1 H); 7.47 (t, 1 H); 7.69 (d, 1 H); 8.08 (dd, 1 H); 8.21 (dd, 1 H). ¹³C-NMR (CDCl₃, 75 MHz): 11.0; 22.6; 24.9; 27.1; 27.4; 28.5; 29.1; 29.4; 29.5; 29.6; 30.7; 30.8; 53.9; 56.1; 114.1; 121.7; 123.4; 128.8; 134.6; 139.2; 144.6; 148.3.

### Preparation of compound 30

In analogy to the preparation of compound **27** in example 9a, compound **30** is obtained from 8.5 g of compound **29** and 7. 80 g tin granules in 5.00 ml conc. hydrogenchloride and 40 ml dioxane. Purification of the crude oil (silicagel eluent: ethyl acetate - hexane: 2 - 1) yields 5.10 g of compound 30. ¹H-NMR (CDCl₃, 300 MHz): 0.89 (t, 3 H); 1.39 (m, 25 H); 2.06 (2 H); 2.45 (t, 4 H); 3.57 (s, 2 H); 4.98 (ddd, 2 H); 5.82 (ddd, 1 H); 6.57 (t, 1 H); 6.72 (dd, 1 H); 6.93 (t, 1 H); 7.12 (dd, 1 H). ¹³C-NMR (CDCl₃, 75 MHz): 14.1; 22.7; 26.5; 26.9; 27.4; 28.9; 29.1; 29.5; 29.6; 29.7; 29.8; 31.7; 33.8; 53.7; 58.5; 113.0; 113.8; 114.1; 119.5; 123.9; 139.2; 148.4; 154.3.

### Preparation of compound 5A7

A mixture of compound **28** (3.1 g) and methoxy ethanol (15 ml) is heated under argon to 120 °C until complete dissolution. Thereafter, a solution of compound **30** (2.3 g) in methoxy ethanol (10 ml) is added dropwise under vigorous stirring. The reaction mixture is heated for 24 h and then cooled using an ice bath. The resulting precipitate is filtered off and washed with ethanol. The mother liquor is collected and furher diluted with methanol to harvest a second crop of product. The combined material is purified by silica gel chromatography (eluent: dichloromethane/ methanol : 20/1) to give 2.3 g of compound **5A7.** ¹H-NMR (CDCl₃, 300 MHz): 0.99 (t, 3 H); 1.33 (m, 14 H); 1.44 (m, 4 H); 1.95 (dt, 2 H); 2.41 (m, 4 H); 4.2 (d, 2 H); 4.89 (ddd, 2 H); 5.74 (ddd, 1 H); 6.7 (broad, NH₂), 7.19 (m, 1 H); 7.45 (m, 3 H); 7.43 (dd, 2 H); 8.23 (dd, 2 H); 8.9 (broad, NH₂). ¹³C-NMR (CDCl₃, 75 MHz): 14.2; 22.7; 27.1; 27.4; 28.9 (2C); 29.2 (2C); 29.5; 29.7; 31.6; 32.6 (2 C); 53.7; 53. 8; 53.9; 114.1; 118.4; 119.3; 126.6; 128.8; 128. 9; 129.1; 131.9; 133.3 (2 C); 133.6 (4 C); 139.2; 140.8 (2 C); 153.9; 162 (2 C); 167.3 (2 C); 184.6 (2 C).

### Example 9c

### Preparation of magenta compound 5A8

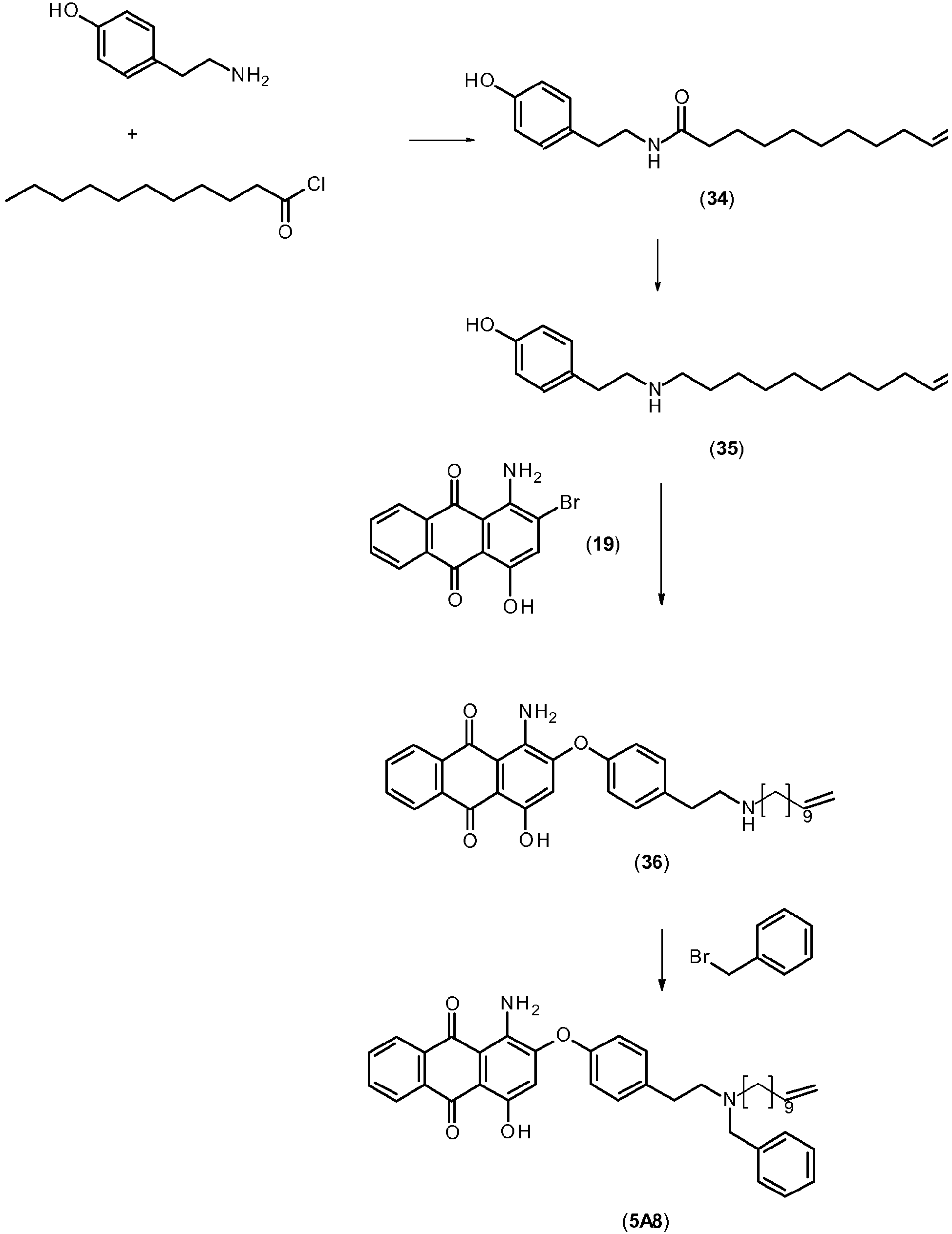

### Preparation of compound 34

17 g of commercial tyramine and 42 ml of di-isopropyl ethylamine are dissolved in 300 ml of dry dimethyl formamide at 0 °C. To this mixture are added dropwise 30.1 g of undecylenic acid chloride. The clear solution is stirred for 16 h and thereby slowly warmed to room temperature. The solution is diluted with water and ethyl acetate, the organic phase separated and successively extracted with 1 N hydrogenchloride, brine and water. The organic phase is then dried over sodium sulfate, filtered and evaporated to give 36.4 g of compound **34** as a slightly yellow oil, which crystalizes at room temperature. ¹H-NMR (CDCl₃, 300 MHz): δ 1.26 (m, 10 H); 1.34 (m, 2 H); 1.55 (m, 2 H); 2.01 (t, 2 H); 2.16 (t, 2 H); 2.69 (t, 2 H); 3.46 (dd, 2 H); 4.95 (ddd, 2 H); 5.84 (ddd, 1 H); 6.01 (NH); 6.82 (d, 2 H); 7.00 (d; 2 H); 8.20 (OH). ¹³C-NMR (CDCl₃, 75 MHz): δ 21.0; 29.0; 29.1, 29.2; 29.3; 33.1; 34.7; 36.7; 41.9; 114.2; 115.7; 121.6; 129.5; 129.7; 139.1; 155.7; 174.9.

### Preparation of compound 35

36.4 g of compound **34** is dissolved in 150 ml THF at room temperature under argon, and treated with two portions of a suspension of 8.6 g lithium aluminium hydride in 300 ml THF at 60 °C for 24 h. The reaction mixture is cooled to 0 °C and quenched with 1 N sodium hydroxide. Dilution with ethyl acetate and successive extraction with brine and water gives an organic phase, which is dried over sodium sulfate, filtered and evaporated. The resulting residue is purified by and silica gel chromatography (eluent: dichloromethane/methanol : 20/1) to yield 18.1 g compound **35**. ¹H-NMR (CDCl₃, 300 MHz): δ 1.26 (m, 10 H); 1.38 (m, 2 H); 1.51 (m, 2 H); 2.06 (dd, 2 H); 2.66 (t, 2 H); 2.77 (t, 2 H); 2.90 (t, 2 H); 4.99 (ddd, 2 H); 5.34 (OH, NH); 5.83 (ddd, 1 H); 6.75 (d, 2 H); 7.02 (d; 2 H). ¹³C-NMR (CDCl₃, 75 MHz): δ 27.3; 28.9; 29.1, 29.2; 29.4; 29.5; 33.6; 34.5; 49.4; 50.1; 50.5; 114.1; 116.0; 129.7; 129.8; 139.2; 155.9.

### Preparation of compound 36

5.3 g of compound **35** and 7.0 g of compound **19** are dissolved in 100 ml dimethyl formamide and treated with 11.9 g of cesium carbonate at 85 °C for 30 h. After cooling to room temperature the reaction mixture is diluted with ethyl acetate and washed with water and brine to give crude compound **38** which is purified by silica gel chromatography (eluent: dichloromethane/methanol : 20/1) to yield 7.8 g of compound **36**. ¹H-NMR (CDCl₃, 300 MHz): δ 1.29 (m, 12 H); 1.55 (m, 2 H); 2.05 (dt, 2 H); 2.70 (t, 2 H); 2.95 (m, 4 H); 4.95 (ddd, 2 H); 5.83 (ddd, 1 H); 6.37 (s, 1 H); 7.08 (d, 2 H); 7.31 (d; 2 H); 7.75 (m, 2 H); 8.32 (m, 2 H). ¹³C-NMR (CDCl₃, 75 MHz): δ 27.3; 28.9; 29.1, 29.2; 29.4; 29.5; 29.6; 33.8; 35.4; 43.7; 50.9; 108.6; 106.6; 114.1; 121.1; 126.3; 126.4; 130.6; 132.8; 133.3; 133.4; 134.9; 137.9; 159.1; 159.2; 151.9; 155.3; 156.3; 158.8; 185.6.

### Preparation of compound 5A8

A mixture of 5.9 g of compound **36,** 1.55 g of potassium carbonate and 0.1 g of potassium iodide are dissolved in 70 ml dioxane and warmed to 45 °C under vigorous stirring. To this mixture are added 1.9 g of benzyl bromide and the reaction mixture is stirred for 24 h. After cooling to room temperature the mixture is diluted with dichloromethane and extracted with water. Evaporation of the organic solvent gives crude compound **5A8** which is purified by silica gel chromatography (eluent: dichloromethane/methanol : 10/1) to yield 4.2 g of pure compound **5A8**. ¹H-NMR (CDCl₃, 300 MHz): δ 1.32 (m, 10 H); 1.43 (m, 2 H); 1.55 (m, 2 H); 2.08 (dt, 2 H); 2.56 (t, 2 H); 2.76 (t, 2 H); 2.82 (t, 2 H); 3.69 (s, 2 H); 4.99 (ddd, 2 H); 5.87 (ddd, 1 H); 6.33 (s, 1 H); 7.07 (d, 2 H); 7.24 (d; 2 H); 7.28 (m, 1 H); 7.36 (m. 4 H); 7.70 (m, 2 H); 8.27 (m, 2 H). ¹³C-NMR (CDCl₃, 75 MHz): δ 27.2; 27.5; 29.0; 29.2, 29.6; 29.7; 29.8; 33.1; 33.9; 53.9; 55.6; 56.7; 108.4; 106.5; 109.2; 114.2; 120.8; 126.2; 126.8; 126.9; 128.2; 128.8; 130.7; 132.7; 133.3; 133.4; 134.8; 138.1; 139.2; 139.9; 151.5; 155.4; 159.4; 182.9; 185.1.

### Example 10

### Preparation of yellow compound 2A1

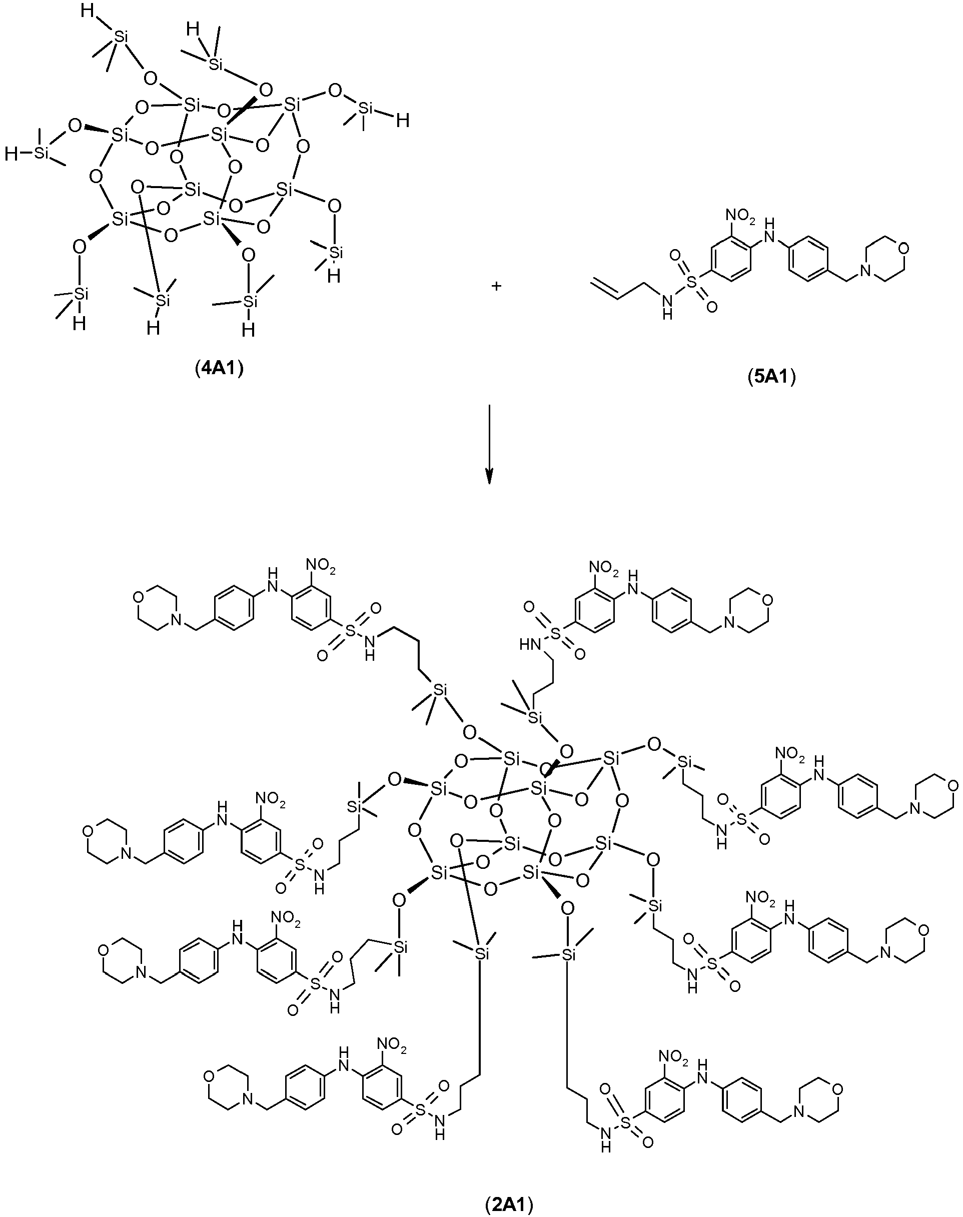

A solution of 2.0 g of compound **4A1** and 7.47 g of compound **5A1,** prepared as described in example 5, are dissolved in 50 ml toluene under an argon atmosphere and treated with 0.6 ml of a solution of hexachloroplatinic acid in iso-propanol (10% (w/v)) at 80 °C until a ²⁹Si-NMR confirms the consumption of all Si-H moieties (ca. 24 h). The mixture is then cooled down and dropped into diethyl ether to precipitate the product. The resulting solid is taken up in dichloromethane and precipitated a second time with diethyl ether. This procedure is repeated a third time to yield 6.1 g of yellow compound **2A1**. ¹H-NMR (CDCl₃, 300 MHz): δ 0.15 (s, 6 H); 0.61 (t, 2 H); 1.62 (quint, 2 H); 2.48 (m, 4 H); 2.94 (t, 2 H); 2.72 (m, 4 H); 7.21 (d, 1 H); 7.25 (d, 2 H); 7.42 (d, 2 H); 7.78 (m, 2 H); 8.67 (d, 2 H); 9.76 (NH). ²⁹Si-NMR (CDCl₃, 80 MHz): δ -109; +13.

### Example 11

### Preparation of magenta compound 2A2

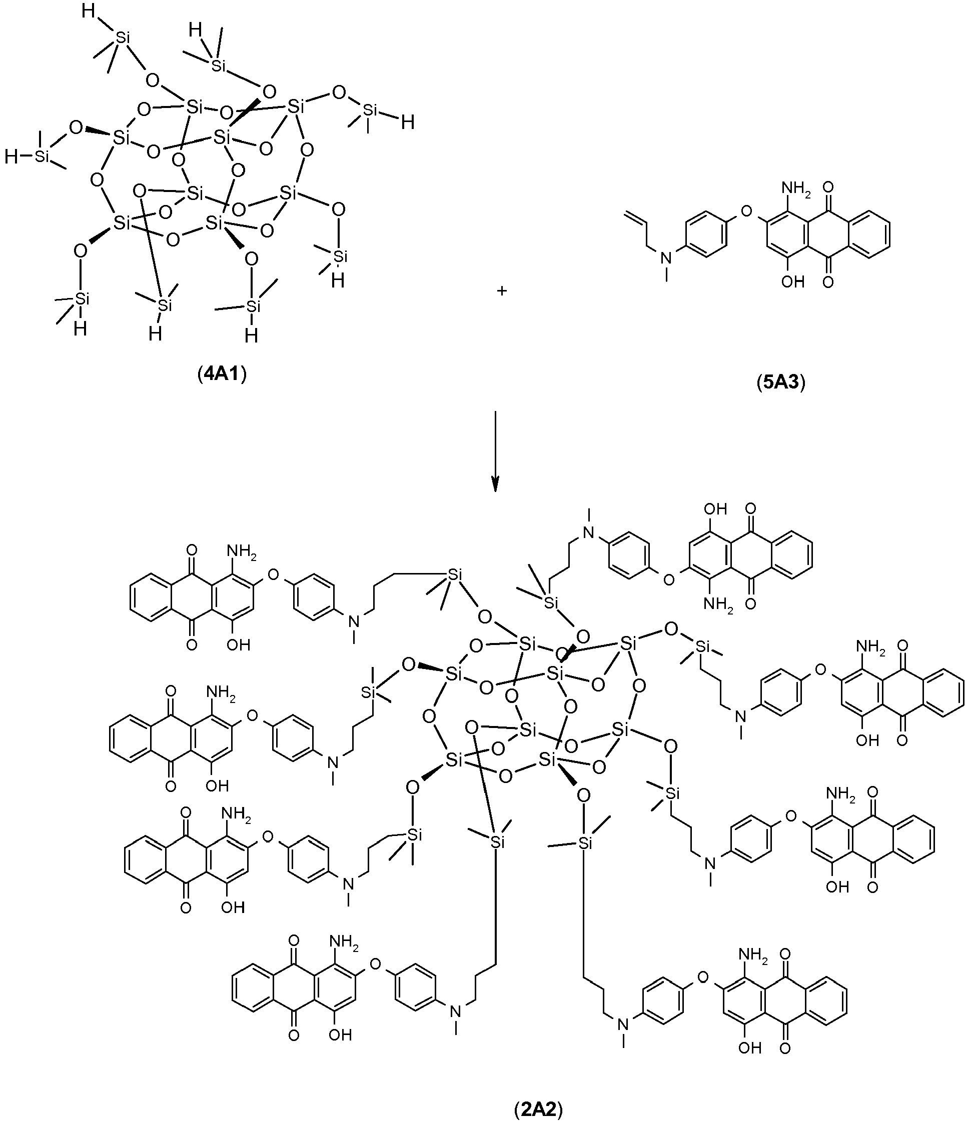

Magenta compound **2A2** is prepared in analogy to compound **2A1** in example 10. 1.0 g of compound **5A3,** prepared as described in example 7, and 289 mg of compound **4A1** are reacted to yield 975 mg of compound **2A2.** ¹H-NMR (CDCl₃, 300 MHz): δ 0.20 (s, 6 H); 0.66 (dd, 2 H); 1.67 (quint. 2 H); 2.93 (s, 3 H); 3.30 (t, 2 H); 6.31 (s, 1 H); 6.67 (d, 2 H); 6.95 (d, 2 H); 7.66 (m, 2 H); 8.22 (dd, 2 H). ²⁹Si-NMR (CDCl₃, 80 MHz): δ -110; +14.

### Example 12

### Preparation of magenta compound 2A3

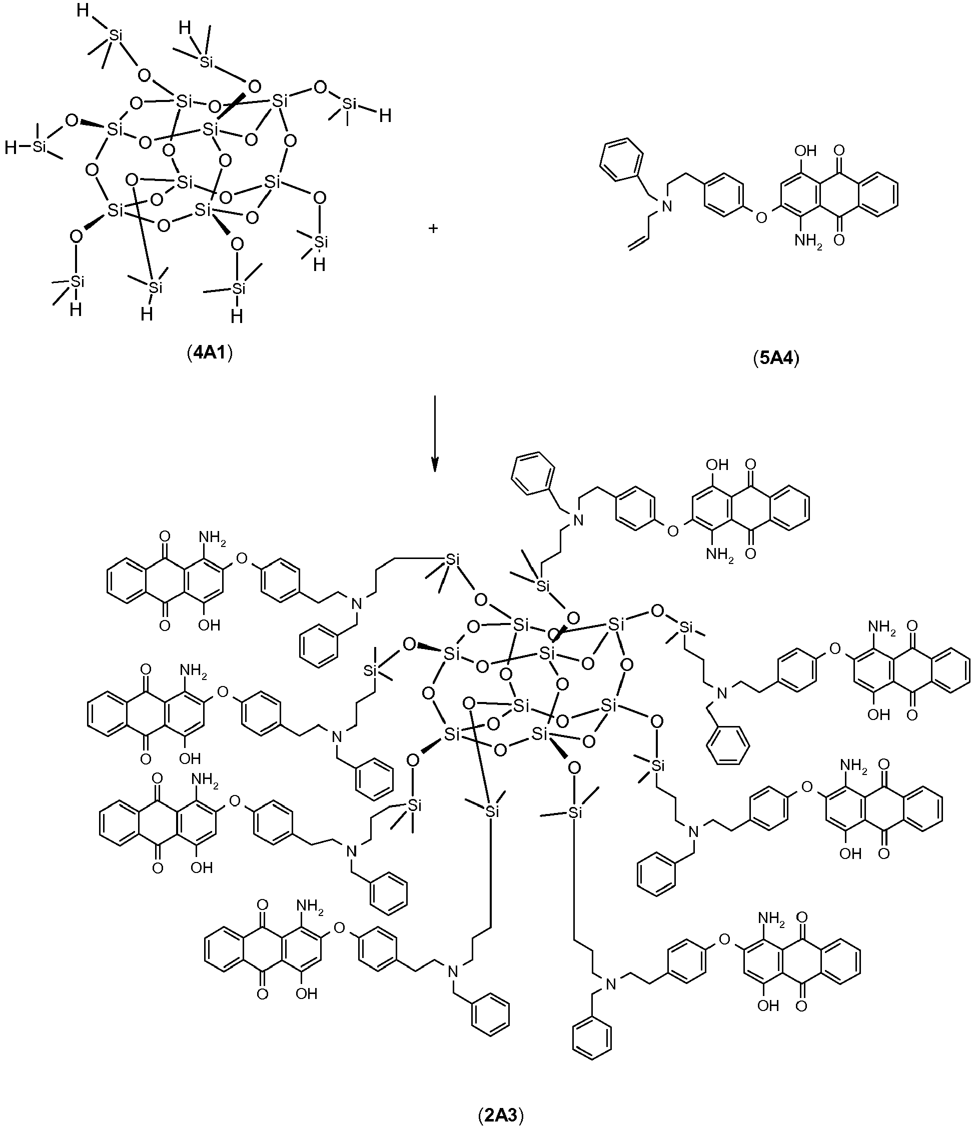

Magenta compound **2A3** is prepared in analogy to compound **2A1** in example 10. 5.2 g of compound **5A4,** prepared as described in example 8, and 1.2 g of compound **4A1** are reacted to yield 4.4 g of magenta compound **2A3**. ¹H-NMR (CDCl₃, 300 MHz): all signals broad δ 0.21 (48 H); 0.65 (16 H); 1.61 (16 H); 2.59 (16 H); 2.88 (32 H); 3.69 (16 H); 6.23 (8 H); 7.03 (16 H); 7.19 (16 H); 7.34 (40 H); 7.68 (16 H); 8.22 (16 H). ¹³C-NMR (CDCl₃, 75 MHz): δ 0.31; 15.20; 20.52; 33.00; 55.53; 57.26; 58.55; 108.32; 108.42; 109.18; 120.87; 126.13; 126.67; 126.96; 128.26; 128.85; 129.31; 129.76; 130.61; 132.70; 133.19; 133.47; 134.778; 133.97; 151.59; 155.35; 159.34; 182.78; 185.09. ²⁹Si-NMR (CDCl₃, 80 MHz): δ -110; +14.

### Example 13

### Preparation of magenta compound 2A4

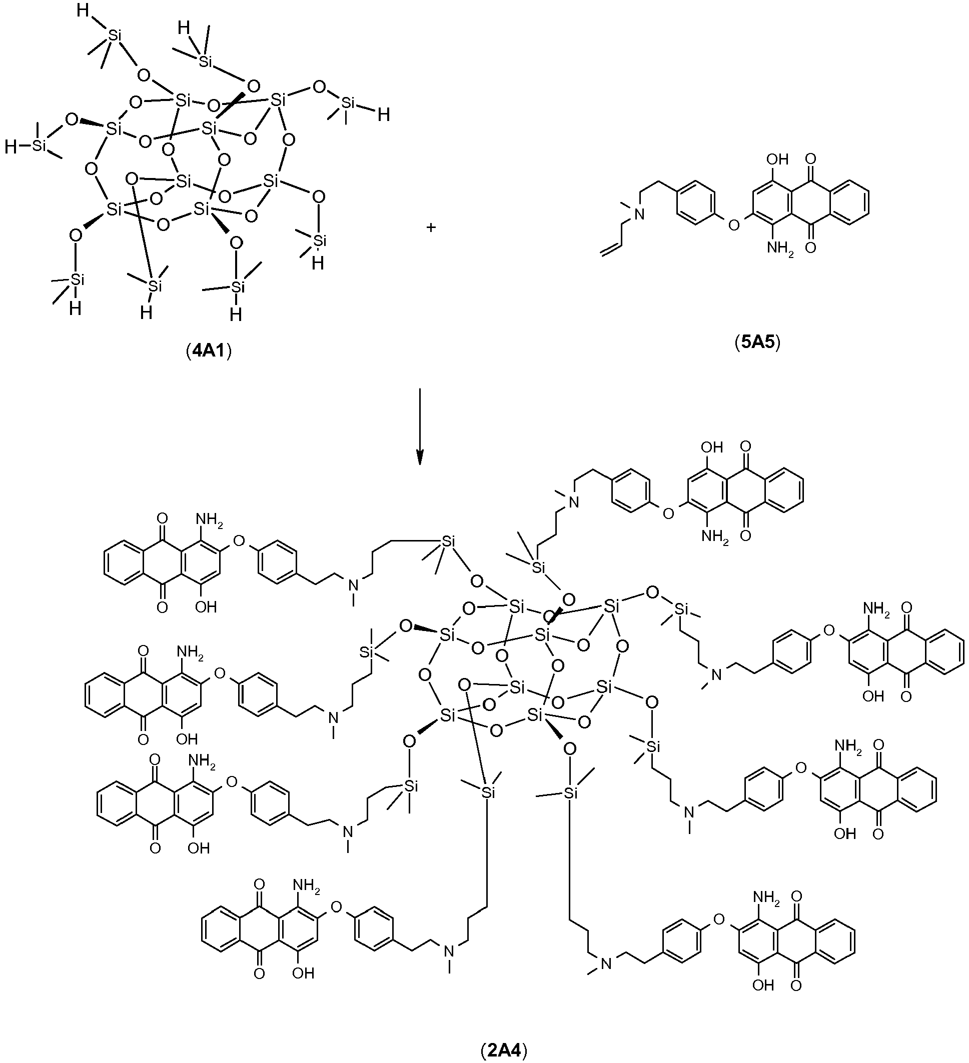

Magenta compound **2A4** is prepared in analogy to compound **2A1** in example 10. 5.0 g of compound **5A5,** prepared as described in example 9, and 1.5 g of compound **4A1** are reacted to yield 4.4 g of magenta compound **2A4**. ¹H-NMR (CDCl₃, 300 MHz): all signals broad δ 0.22 (48 H); 0.65 (16); 1.60 (16 H); 2.36 (24 H); 2.37 (16 H); 2.55 (16 H); 2.85 (16 H); 6.30 (8 H); 7.06 (16 H); 7.27 (46 H); 7.70 (16 H); 8.36 (16). ²⁹Si-NMR (CDCl₃, 80 MHz): δ -110; +14.

### Example 13a

### Preparation of cyan compound 2A5

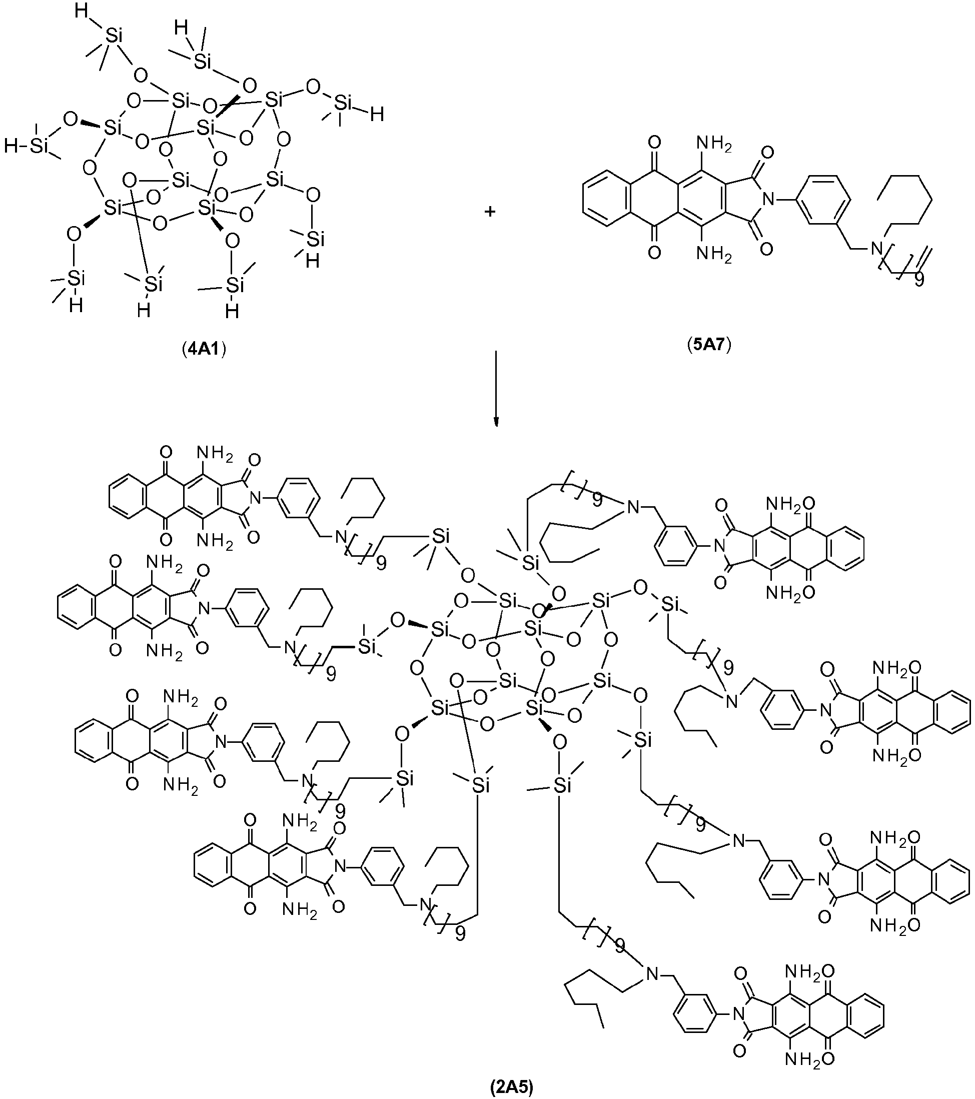

A mixture of 20 mg of compound **4A1** and 101 mg of compound **5A7,** prepared as described in example 9b, are dissolved in 5 ml of toluene in argon atmosphere. After addition of 10 mg of PtO₂ the mixture is heated to 80 °C for 72 h. After cooling down to room temperature the mixture is diluted with diethyl ether and the resulting precipitate is filtered off, washed with dichloromethane and centrifuged at 4000 rpm. The resulting solid is washed with dichloromethane and again centrifuged at 4000 rpm. Traces of catalyst are removed by dissolving the precipitate in hot dioxane, followed by repeated centrifugation. The combined dioxane supernatents are distilled off to give 72 mg of compound **2A5.** ¹H-NMR (CDCl₃, 300 MHz): all signals broad δ 0.20 (48 H); 0.59 (16 H); 0.99 (24 H); 1.29 (112 H); 1.51 (32 H); 1.60 (16 H); 1.59 (24 H); 2.02 (16 H); 2.50 (32 H); 3.69 (16 H); 7.39 (8 H); 7.51 (24 H); 7.78 (16 H); 8.26 (16 H). ²⁹Si-NMR (CDCl₃, 80 MHz): δ -110; +14.

### Example 13b

### Preparation of yellow compound 2A6

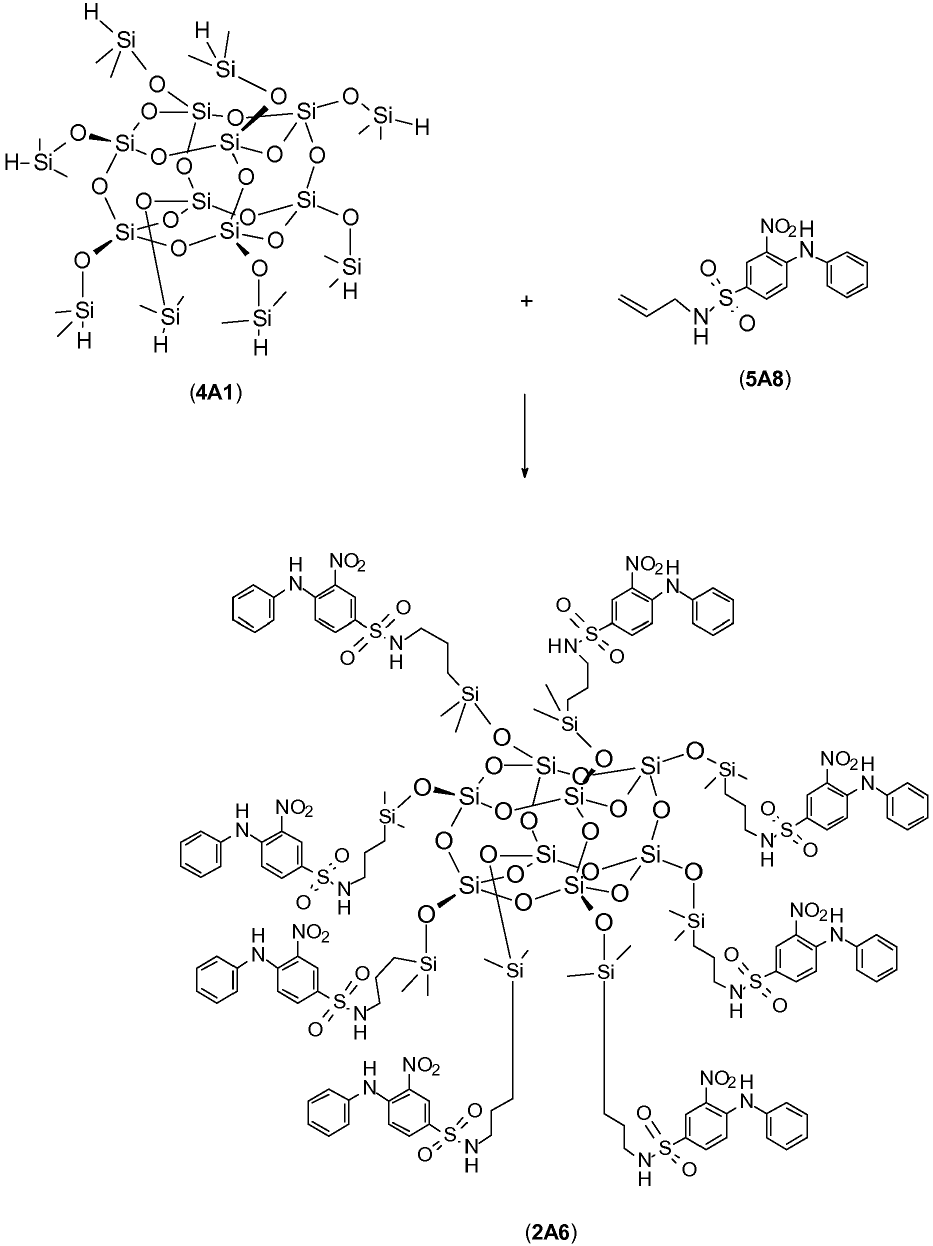

Yellow compound **2A6** is prepared in analogy to compound **2A1** in example 10. 288 mg of compound **5A8,** which is commercially available, and 100 mg of compound **4A1** are reacted to yield crude compound **2A6,** which is purified by repeated precipitation and washing with diethyl ether to yield 348 mg compound **2A6.** ¹H-NMR (CDCl₃, 300 MHz): all signals broad δ 0.17 (48 H); 0.64 (16 H); 1.64 (16 H); 2.95 (16 H); 5.49 (8 NH); 7.21 (8 H); 7.32 (24 H); 7.46 (16 H); 7.80 (8 H); 8.69 (8 H); 9.78 (NH). ¹³C-NMR (CDCl₃, 75 MHz): δ 0.4; 14.7; 23.3; 116.7; 125.2 (2 C); 126.9; 127.0; 128.1; 130.0 (2 C); 131.5; 133.4; 137.3; 145.7. ²⁹Si-NMR (CDCl₃, 80 MHz): δ -110; +14.

### Example 13c

### Preparation of magenta compound 2A7

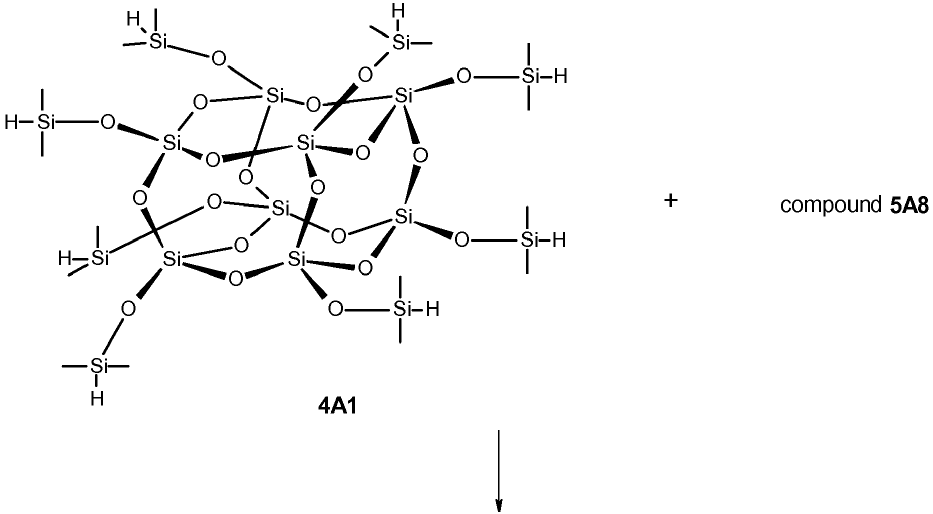

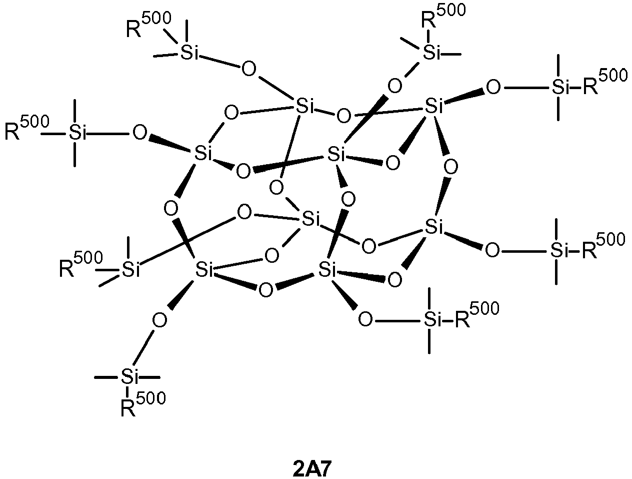

wherein
R⁵⁰⁰ is

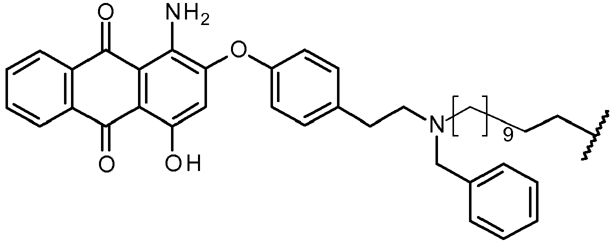

530 mg of compound **5A8**, prepared as described in example 9c, are dissolved in 8 ml of dichloromethane and treated with a mixture of 90 mg of Karstedt-catalyst and 30 µl diethyl sulfide solution (0.01 mol diethyl sulfide/10 ml dichloromethane). Then, the reaction mixture is warmed to 40 °C under argon. 100 mg of compound **4A1** are added and the reaction mixture is stirred for 24 h until disappearance of compound **5A8** according to 1 H-NMR. Dilution of the reaction mixture with 130 ml hexane gives a precipitate which is filtered off and taken up in 30 ml dichloromethane. The hexane precipitation is repeated two more times to yield 380 mg of compound **2A7**. ¹H-NMR (CDCl₃, 300 MHz): all signals broad δ 0.19 (6 H); 0.63 (2 H); 1.29 (16 H); 1.56 (2 H); 2.57 (s, 3 H); 2.79 (4 H); 3.70 (2 H); 6.33 (1 H); 7.04 (2 H); 7.13 (2 H); 7.30 (4 H); 7.72 (2 H); 8.28 (2 H). ²⁹Si-NMR (CDCl₃, 80 MHz): δ -110; +14.

### Example 14

### Preparation of yellow compound 1A1

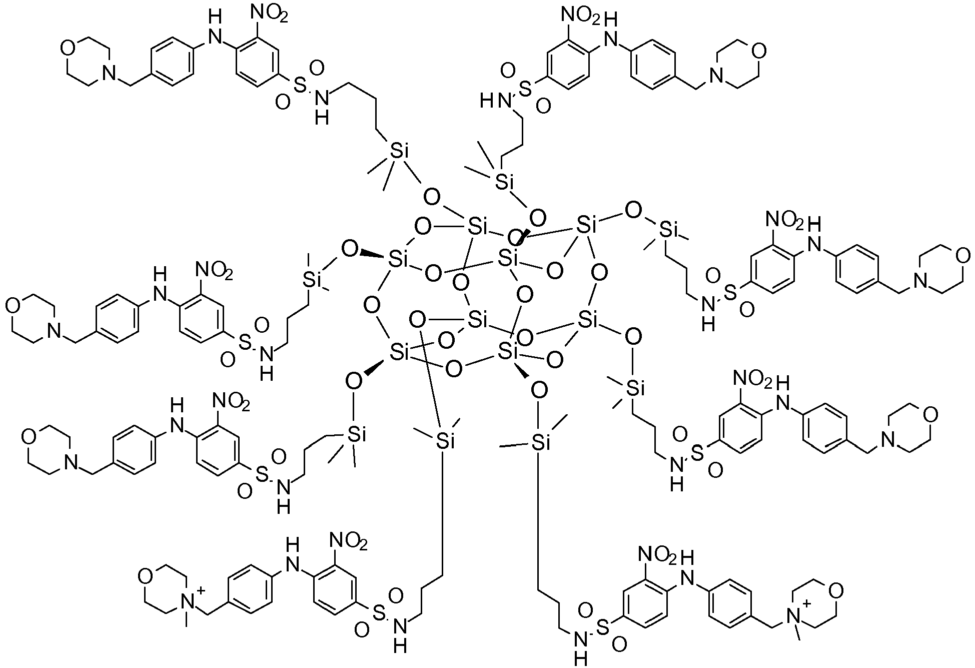

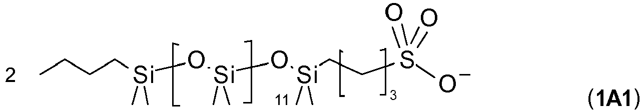

A solution of 60 mg of compound **2A1,** prepared as described in example 10, and 29 mg of compound **3AX1,** prepared as described in example 1, are dissolved in 0.5 ml dioxane and heated to 90 °C until a ¹H-NMR shows disappearance of the methoxide signal to give yellow compound **1A1** quantitatively which carries two charges per cage structure. ¹H-NMR (dioxane, 300 MHz): δ 0.17 (s, ca. 144); 0.20 (s, 48 H); 0.66 (m, 24 H); 0.91 (t, 6 H); 1.34 (m, 8 H); 1.53 (m, 20 H); 1.88 (broad m, 4 H); 2.43 (broad, 36 H); 2.96 (m, 16 H); 3.49 (m, 16 H); 3.62 (m, 38); 6.74 (broad, 8NH); 7.22 (d, 8 H); 7.30 (d, 16 H); 7.47 (m, 16 H); 7.73 (d, 8 H); 8.59 (broad 8H); 9.74 (broad 8 NH).

### Example 15

### Preparation of yellow compound 1A2

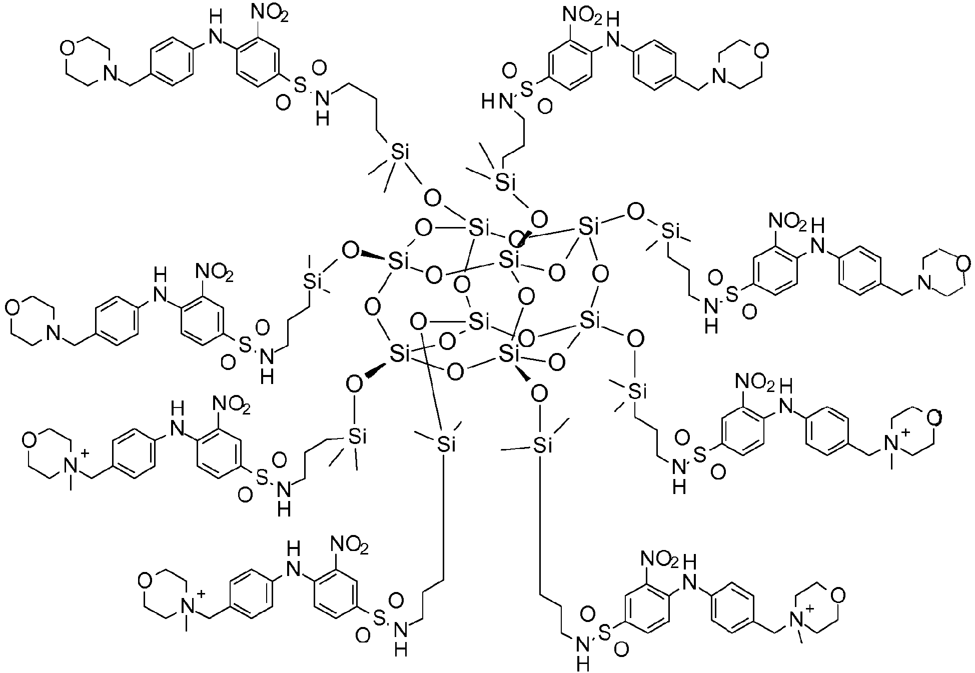

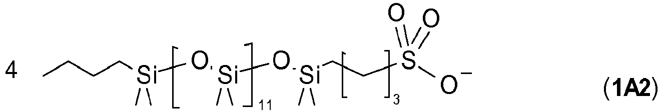

Heating 60 mg of compound **2A1,** prepared as described in example 10, with 8 mol equivalents of compound **3AX1,** prepared as described in example 1, in dioxane results in yellow compound **1A2** with 4 charges per cage as indicated by 1 H-NMR analysis. ¹H-NMR (CDCl₃, 300 MHz): 0.20 (m, Si-CH3); 0.6 (m, Si-CH₂); 0.90 (t, CH₃); 1.2 - 1.7 (broad, C-CH₂-C); 1.8 - 2.0 (broad CH₂); 2.7 - 3.0 (CH₂-N, -CH₂-S); 3.5 (broad, NCH₃); 3.6 - 3.7 (braod -CH₂-O); 3.8 - 4.1 (broad, CH₂N); 7.1 - 7.2 (phenyl-H); 7.5 - 7. 6 (phenyl-H); 7.8 - 8.0 (phenyl.H); 8.5 - 8.7 (phenyl-H); 9.7 - 9.8 (NH).

### Example 16

### Preparation of magenta compound 1A3

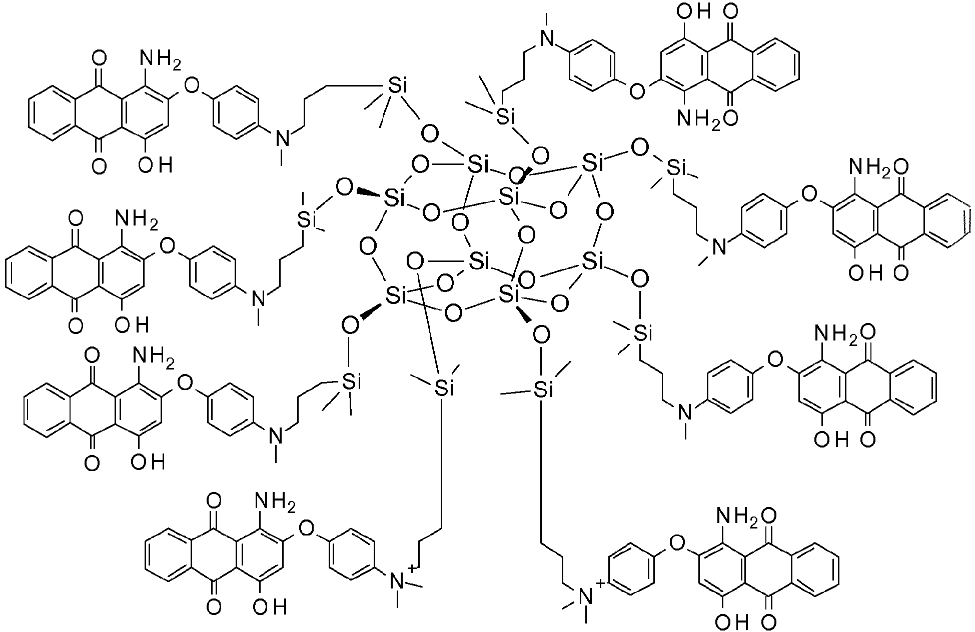

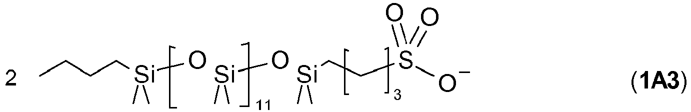

A solution of 50 mg of magenta compound **2A2,** prepared as described in example 11, and 26 mg of **3AX1,** prepared as described in example 1, are dissolved in 0.5 ml dioxane and heated to 90 °C until a ¹H-NMR shows disappearance of the methoxide signal to give magenta compound **1A3** quantitatively which carries two charges per cage structure. ¹H-NMR (dioxane, 300 MHz): all signals broad δ 0.17 (s, ca. 78); 0.20 (s, 48 H); 0.66 (m, 32 H); 0.91 (t, 12 H); 1.35 (m, 16 H); 1.53 (quint. 8 H); 1.69 (quint. 16 H); 1.92 (quint. 8 H); 2.96 (broad, 36 H); 3.11 (d, 8 H); 3.30 (m, 16 H); 6.29 (s, 8 H); 6.66 (d, 16 H); 6.95 (d, 16 H); 7.66 (m, 16 H); 8.20 (dd, 16 H).

### Example 17

### Preparation of magenta compound 1A4

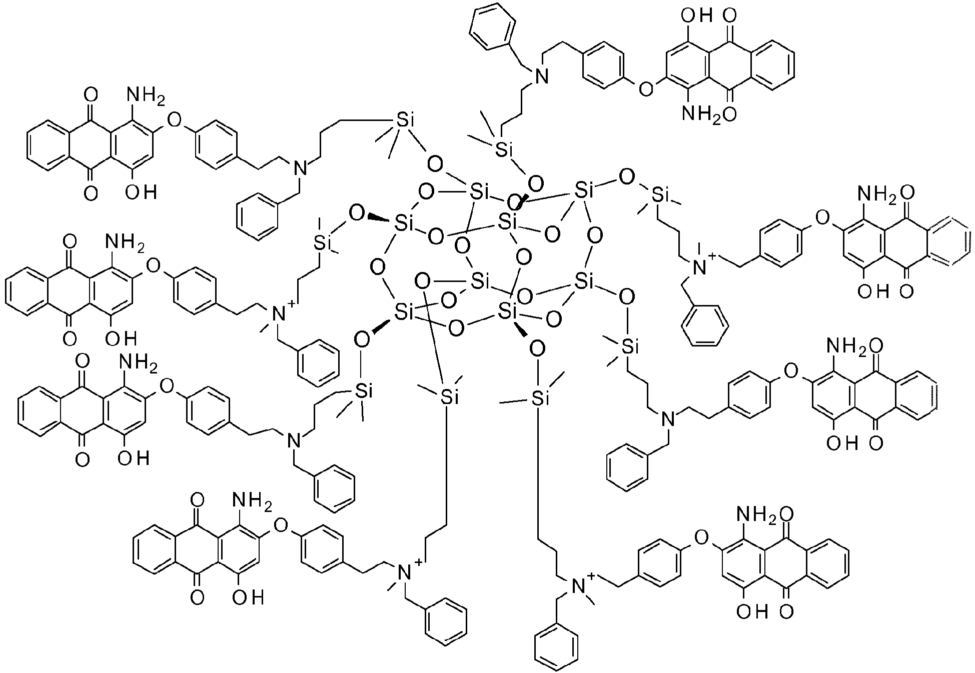

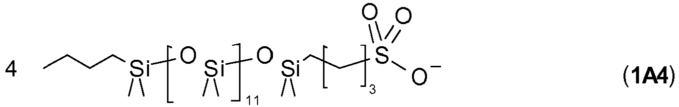

A solution of 50 mg of magenta compound **2A3,** prepared as described in example 12, and 84 mg of **3AX1,** prepared as described in example 1, are dissolved in 0.5 ml dioxane and heated to 90 °C until a ¹H-NMR shows disappearance of the methoxide signal to give magenta compound **1A4** quantitatively which carries four charges per cage structure. ¹H-NMR (dioxane, 300 MHz): all signals broad δ 0.24 (ca. 360 H); 0.62 (32 H); 0.92 (12 H); 1.29 (16 H); 1.54 (24 H); 1.92 (8 H); 2.55 (16 H); 2.73 (44 H); 3.14 (8 H); 3.62 (16 H); 6.29 (8 H); 7.28 (56 H); 7.58 (16 H); 8.23 (16 H).

### Example 18

### Preparation of magenta compound 1A5

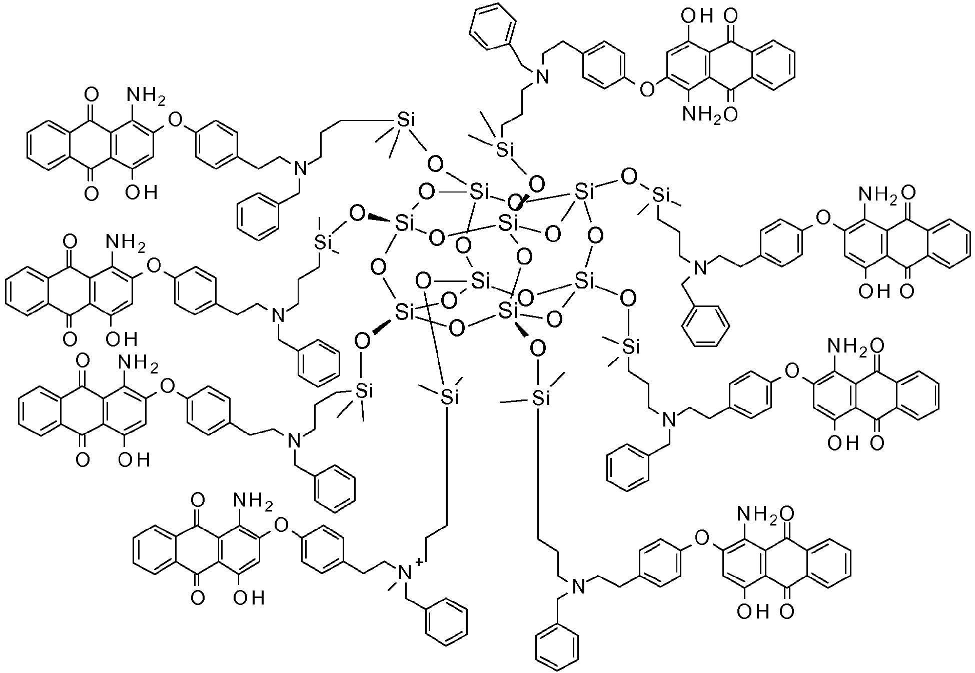

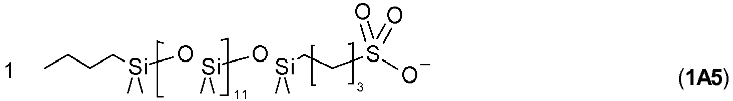

A solution of 60 mg of magenta compound **2A3,** prepared as described in example 12, and 12 mg of **3AX1**, prepared as described in example 1, are dissolved in 0.5 ml dioxane-and heated to 90 °C until a ¹H-NMR shows disappearance of the methoxide signal to give magenta compound **1A5** quantitatively which carries one charge per cage structure. ¹H-NMR (dioxane, 300 MHz): all signal broad δ 0.24 (ca. 130 H); 0.62 (20 H); 0.94 (3 H); 1.30 (4 H); 1.57 (18 H); 1.85 (2 H); 2.62 (16 H); 2.76 (35 H); 3.14 (2 H); 3.62 (16 H); 6.32 (8 H); 7.28 (56 H); 7.61 (16 H); 8.28 (16 H).

### Example 19

### Preparation of magenta compound 1A6

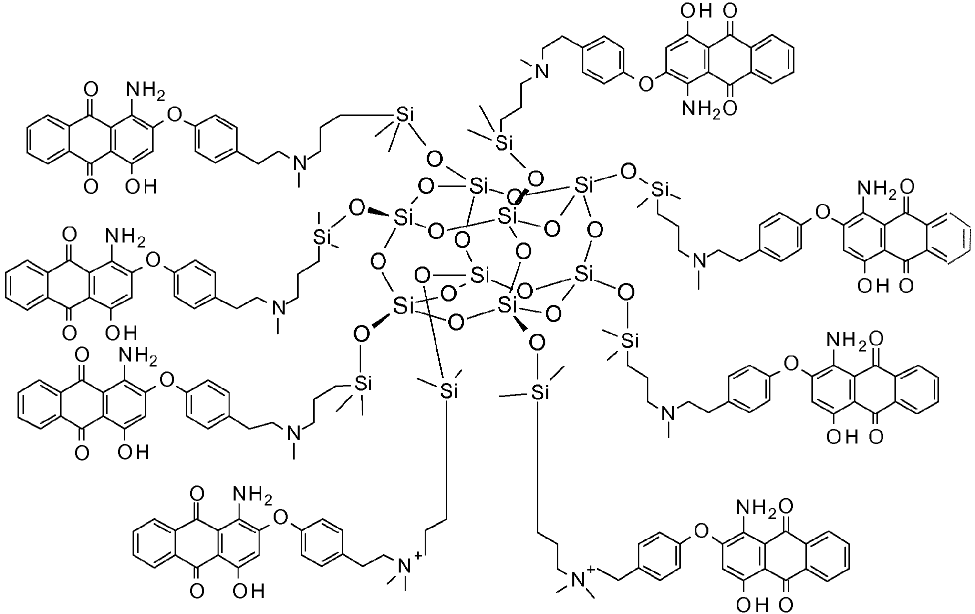

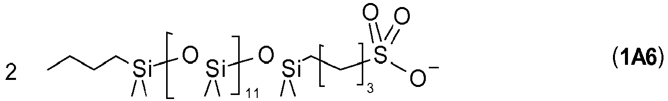

A solution of 50 mg of magenta compound **2A4,** prepared as described in example 12, and 25 mg of **3AX1,** prepared as described example 1, are dissolved in 0.5 ml dioxane and heated to 90 °C until a ¹H-NMR shows disappearance of the methoxide signal to give magenta compound **1A6** quantitatively which carries two charges per cage structure. ¹H-NMR (CDCl₃, 300 MHz): all signal broad δ 0.17 (ca. 204 H); 0.69 (24 H); 0.89 (6 H); 1.32 (12 H); 1.59 (8 H); 1.82 (8 H); 2.25 (30 H); 2.76 (12 H); 2.83 (16 H); 3.50 (24 H); 6.29 (8 H); 7.06 (16 H); 7.29 (16 H); 7.68 (16 H); 8.31 (16 H).

### Example 20

### Preparation of magenta compound 1A7

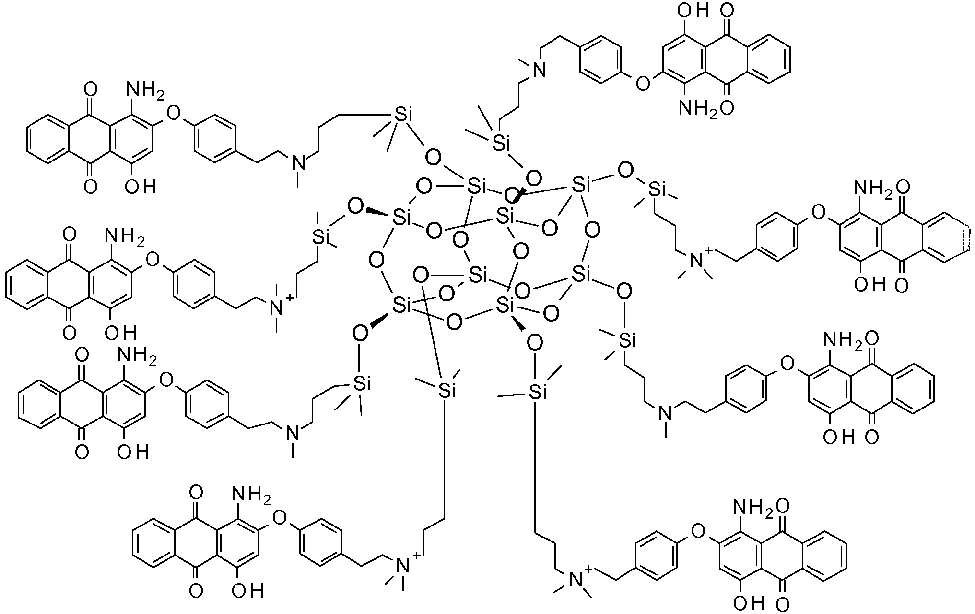

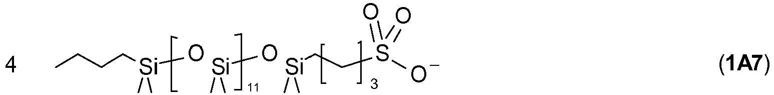

A solution of 50 mg of magenta compound **2A4,** prepared as described in example 13, and 97 mg of compound **3AX1,** prepared as described in example 1, are dissolved in 0.5 ml dioxane and heated to 90 °C until a ¹H-NMR shows disappearance of the methoxide signal to give magenta compound **1A7** quantitatively which carries four charges per cage structure. ¹H-NMR (CDCl₃, 300 MHz): all signal broad δ 0.17 (ca. 360 H); 0.69 (32 H); 0.89 (12H); 1.32 (12 H); 1.59 (8 H); 1.82 (8 H); 2.25 (36 H); 2.76 (12 H); 2.83 (16 H); 3.50 (32); 6.29 (8 H); 7.06 (16 H); 7.29 (16 H); 7.68 (16 H); 8.31 (16 H).

### Example 21

### Preparation of magenta compound 1A8

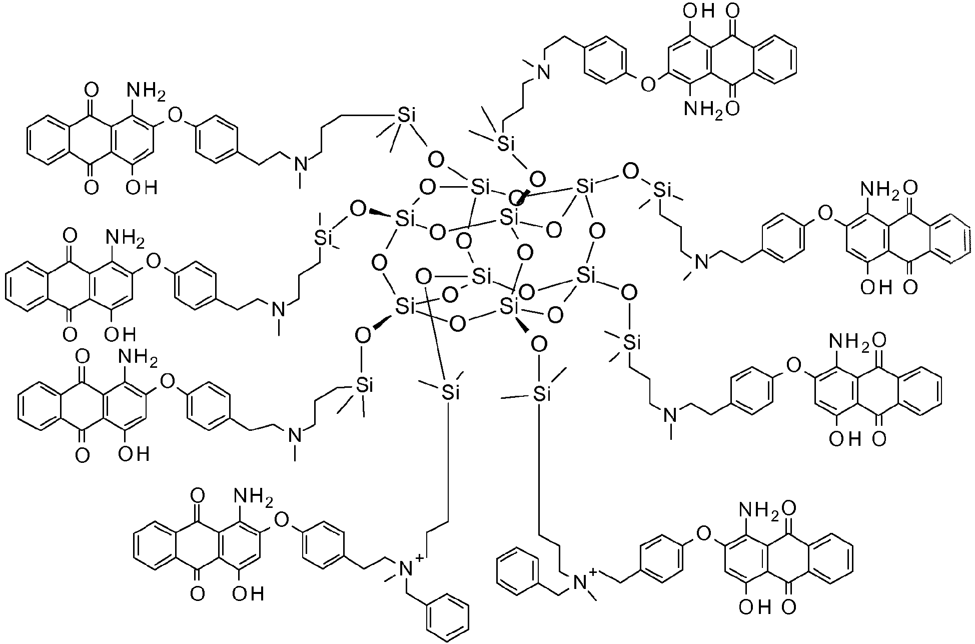

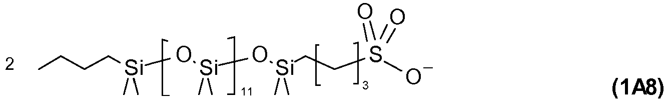

A solution of 60 mg of magenta compound **2A4,** prepared as described in example 13, and 97 mg of **3AX3,** prepared as described in example 3, are dissolved in 0.5 ml dioxane and heated to 90 °C until a ¹H-NMR shows disappearance of the methoxide signal to give magenta compound **1A8** quantitatively which carries two charges per cage structure. ¹H-NMR (CDCb, 300 MHz): all signal broad δ 0.19 (ca. 204 H); 0.65 (24 H); 0.88 (6 H); 1.36 (12 H); 1.50 (8 H); 1.82 (8 H); 2.35 (28 H); 2.70 (12 H); 2.83 (28 H); 3.30 (12 H); 6.29 (8 H); 7.08 (16 H); 7.23 (16 H); 7.45 (10); 7.71 (16 H); 8.24 (16 H).

### Example 22

### Preparation of magenta compound 1A9

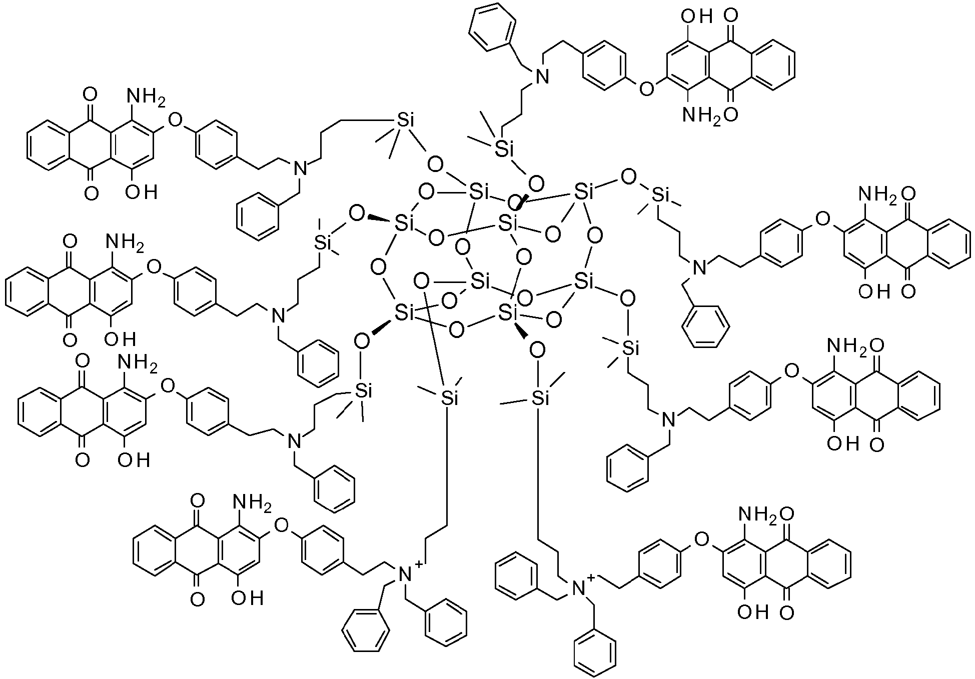

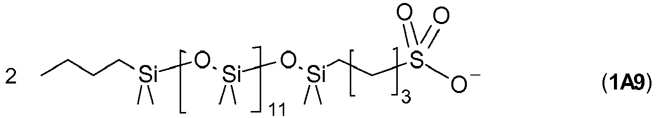

A solution of 60 mg of compound **2A3,** prepared as described in example 12, and 27 mg of compound **3AX3,** prepared as described in example 3, are dissolved in 0.5 ml dioxane and heated to 90 °C until a ¹H-NMR shows disappearance of the methoxide signal to give magenta compound **1A9** quantitatively which carries two charges per cage structure. ¹H-NMR (CDCb, 300 MHz): all signal broad δ 0.19 (ca. 204 H); 0.65 (24 H); 0.88 (6 H); 1.36 (12 H); 1.60 (16 H); 1.92 (4 H); 2.75 (52 H); 3.65 (20 H); 6.29 (8 H); 7.08 (16 H); 7.30 (66 H); 7.72 (16 H); 8.24 (16 H).

### Example 22a

### Preparation of magenta compound 1A10

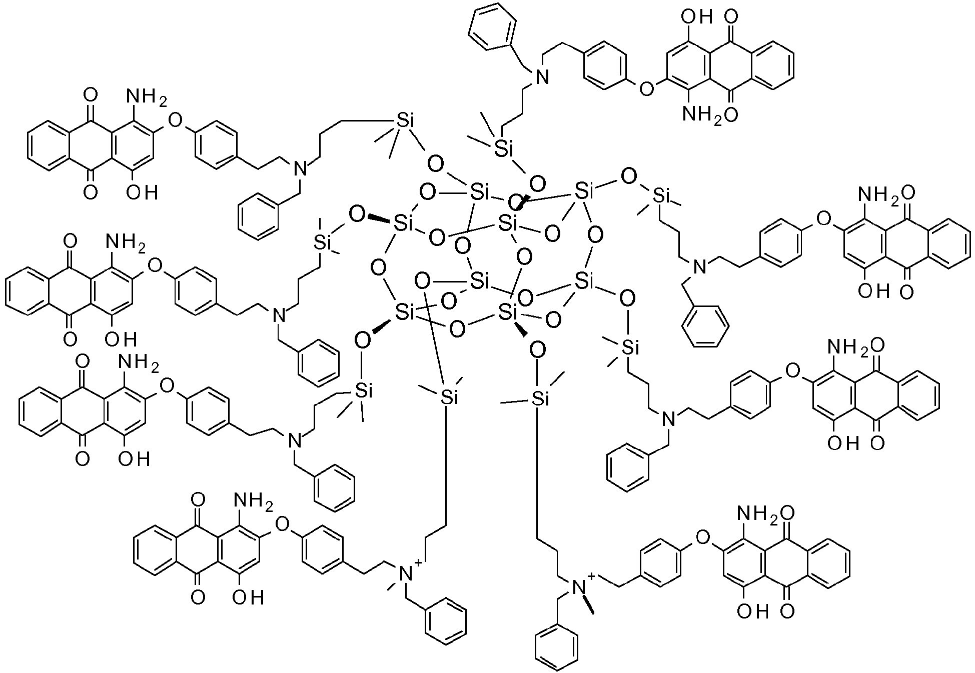

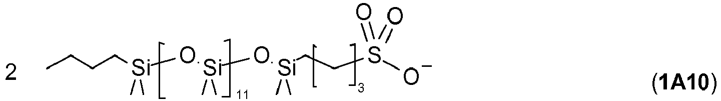

A solution of 156 mg of magenta compound **2A3,** prepared as described in example 12, and 64 mg of **3AX1**, prepared as described in example 1, are dissolved in 0.5 ml chloroform and are heated to 65 °C for 48 h until a ¹H-NMR shows disappearance of the methoxide signal to give magenta compound **1A10** quantitatively which carries two charges per cage structure. ¹H-NMR (CDCl₃, 300 MHz): all signal broad δ 0.24 (ca. 68 H); 0.61 (24 H); 0.94 (6 H); 1.35 (8 H); 1.67 (20 H); 1.92 (4 H); 2.58 (12 H); 2.78 (38 H); 3.34 (4 H); 3.69 (20 H); 6.32 (8 H); 7.02 (16 H); 7.31 (56 H); 7.61 (16 H); 8.28 (16 H).

### Example 22b

### Preparation of magenta compound 1A11

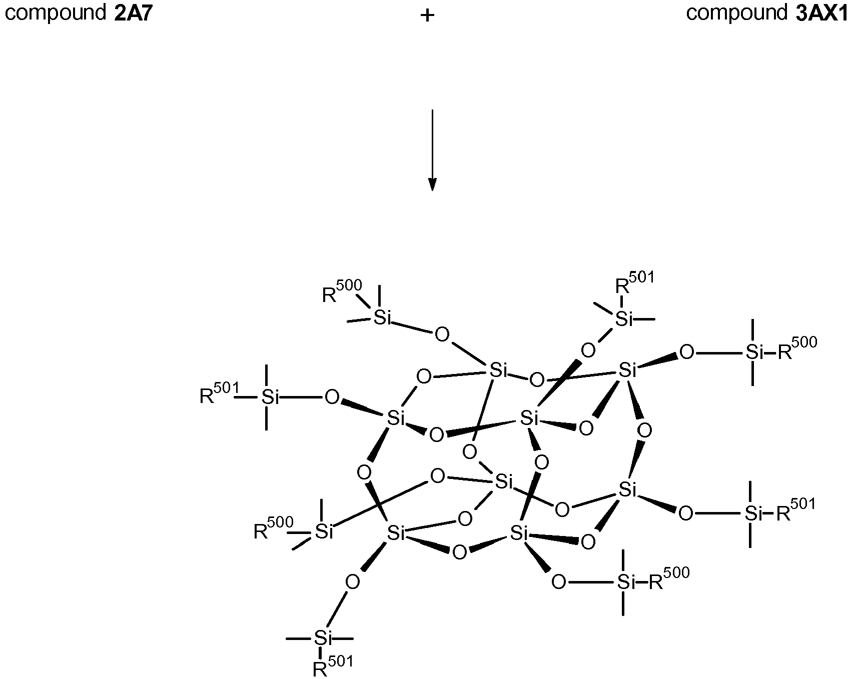

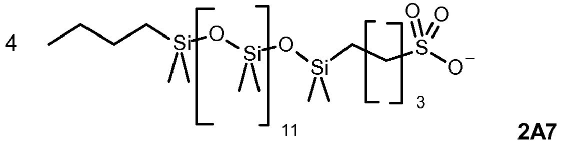

wherein
R⁵⁰⁰ is 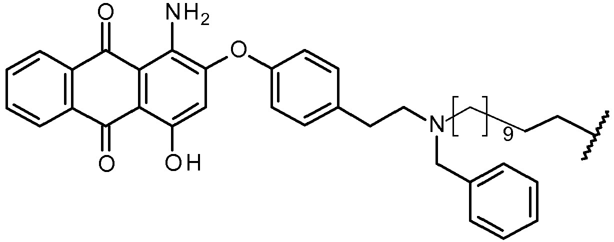
and R⁵⁰¹ is

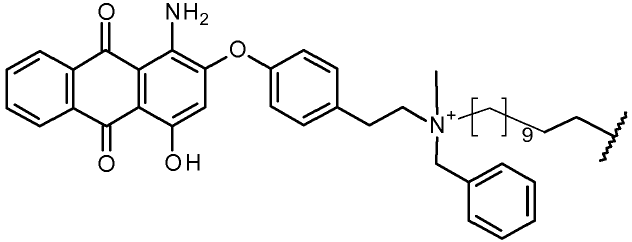

71 mg of magenta compound **2A7,** prepared as described in example 13c, are dissolved in 1 ml chloroform containing 103 mg of compound **3AX1** in a tube. The tightly capped tube is heated to 60 °C until the methyl sulfonate signal of the chain does not diminish any more in the ¹H-NMR to give a solution of compound **1A11.** ¹H-NMR (CDCl₃, 300 MHz): all signals broad δ 0.95 (t, 3 H); 3.95 (remnant sulfonate 1.5 H ca. 50 %); 4.90 (1 H); 6.33 (1 H); 7.04 (2 H); 7.13 (2 H); 7.30 (4 H); 7.72 (2 H); 8.28 (2 H).

### Application Example 1

4 mg of compound **1A8,** prepared as described in example 21, are dissolved in a mixture of 24.9 microliter of silicon oil (1.5 cStokes, Gelest) and 0.1 microliter tetrachloroethylene (Fluka). The magenta solution is placed between a comb electrode (CSEM) beyond transparent glass covers which are connected to a voltage of 40 V. Movement of a magenta particle front is observed at that voltage and a frequency of 5 Hz.

### Application example 2

40 mg of compound **1A4,** prepared as described in example 17, are dissolved in 360 microliter - dodecane (Fluka). The mixture is placed between a comb electrode (CSEM) beyond transparent glass covers which are connected to voltage of 40 V. Movement of the magenta particle front is observed at that voltage and a frequency of 5 Hz. A rapid pusation of the particles is obtained at frequence of 15 Hz.

### Example 23

### Preparation of compound 3BX1

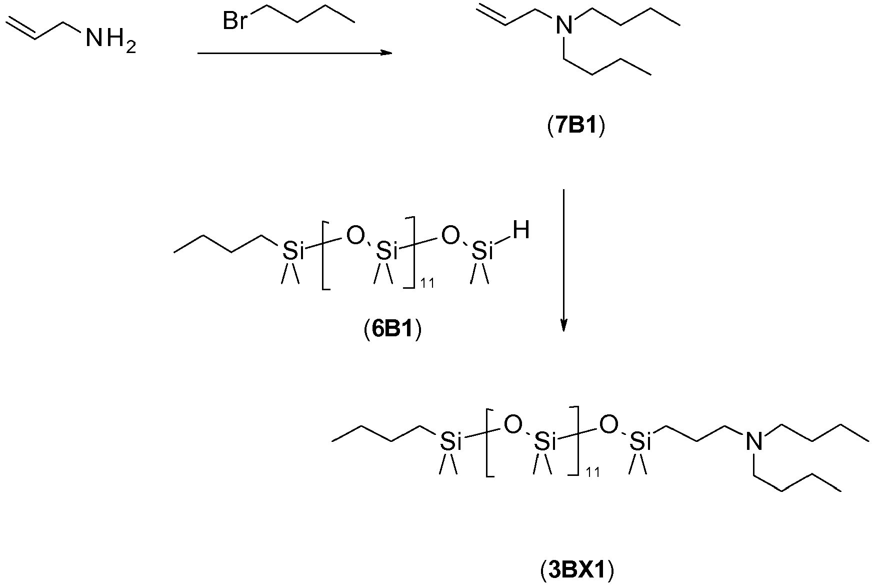

### Preparation ofcompound 7B1

A suspension of 106.0 g sodium carbonate in 28.5 g of allylamine and 270 ml of butyl bromide are stirred at 90°C for 5 h. The mixture is cooled to room temperature, diluted with dichloromethane, filtered and successively extracted with 0.5 N hydrochloric acid, saturated hydrogen sodiumcarbonate solution and brine. Evaporation of the organic solvent leaves an oil which is distilled at 45 °C and 0.5 mbar to give 44.2 g of compound **7B1.** ¹H-NMR (CDCl₃, 300 MHz): δ 0.93 (t, 6 H); 1.28 (quint. 4 H); 1.42 (quint. 4 H); 2.43 (t, 4 H); 3.09 (t, 2 H); 5.10 (d, 1 H); 5.19 (d, 1 H); 5.87 (ddt, 1 H). ¹³C-NMR (CDCl₃, 75 MHz): δ 14.02; 20.68; 29.13; 53.48; 57.29; 116.75; 136.17.

### Preparation of compound 3BX1

Compound **3BX1** is prepared in analogy to compound **3AX1** in example 1. 39.6 g of compound **3BX1** are obtained from 50.0 g of polydimethylsiloxane **6B1** (supplier ABCR) and 10.8 g of compound **7B1.** ¹H-NMR (CDCl₃, 300 MHz): δ 0.94 (t, 6 H); 1.39 (m, 22 H); 1.95 (dt, 2 H); 2.33 (dt, 6 H); 4.89 (dd, 2 H); 7.73 (ddt, 1 H). ¹³C-NMR (CDCl₃, 75 MHz): δ 13. 09; 19.78; 25.95; 26.63; 27.93; 28.13; 28.45; 28.59; 32.81; 52.90; 53.21; 113.07; 138.2.

### Example 23a

### Preparation of compound 7B2

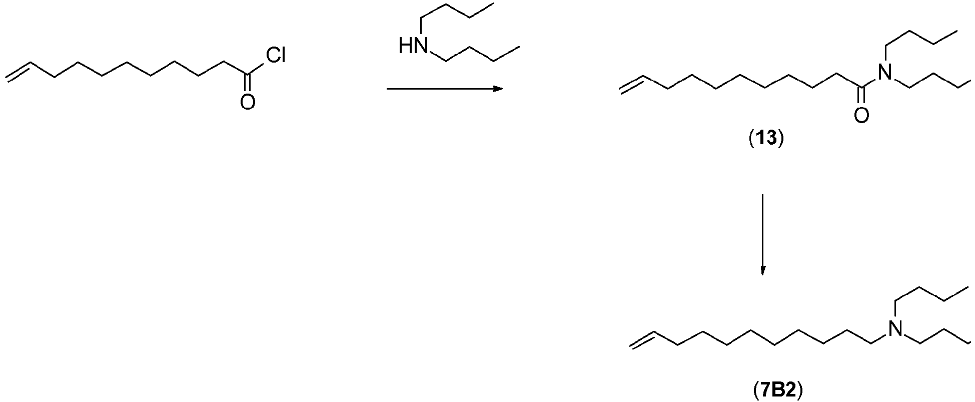

### Preparation of compound 13

A mixture of 26.5 ml of 10-undecenoyl chloride and 31.4 ml dibutyl amine are cautiously dissolved in 100 ml toluene and then heated to 80 °C for 24 h. Usual work-up gives an oily residue which is purified by column chromatography over silica gel (eluent: hexane - ethyl acetate (10 - 3)) to yield 30.8 g of compound **13.**

### Preparation of compound 7B2

5.0 g of compound **13** is added to a mixture of 0.7 g of lithium aluminiumhydride in 30 ml of tetrahydrofurane in an argon atmosphere and refluxed until consumption of the starting material. After cooling down to room temperature, excess hydride is cautiously destroyed with 15% sodium hydroxide and compound **7B2** extracted with hexane. Evaporation of the solvent gives 4.5 g of compound **7B2.** ¹H-NMR (CDCl₃, 300 MHz): δ 0.94 (t, 6 H); 1.39 (m, 22 H); 1.95 (dt, 2 H); 2.33 (dt, 6 H); 4.89 (dd, 2 H); 7.73 (ddt, 1 H). ¹³C-NMR (CDCl₃, 75 MHz): δ 13. 09; 19.78; 25.95; 26.63; 27.93; 28.13; 28.45; 28.59; 32.81; 52.90; 53.21; 113.07; 138.2.

### Example 23b

### Preparation of 7B3

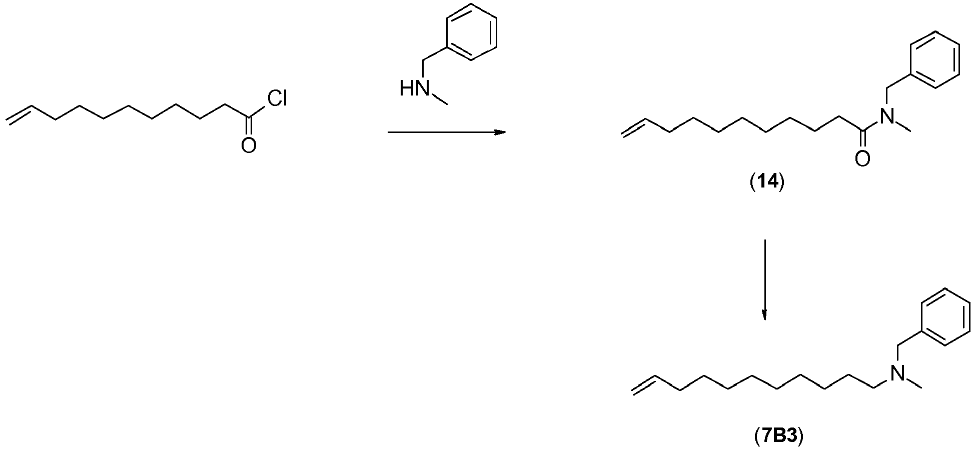

### Preparation of compound 14

Compound **14** is prepared in analogy to compound **13** in example 8. 26.3 g of compound **14** are obtained from 33.4 ml of 10-undecenoyl chloride and 30.0 ml N-benzyl-N-methyl amine.

### Preparation of compound 7B3

Compound **7B3** is prepared in analogy to compound **7B2** in example 8. Reduction of 13.2 g of compound **14** yields 11.2 g of compound **7B3.** ¹H-NMR (CDCl₃, 300 MHz): δ 1.32 (m, 10 H); 1.40 (quint, 2 H); 1.55 (quint. 2 H); 2.07 (dt, 2 H); 2.22 (s, 3 H); 2.39 (t, 2 H); 3.51 (s, 2 H); 4.99 (dd, 2 H); 5.85 (ddt, 1 H); 7.34 (s, 5 H). ¹³C-NMR (CDCl₃, 75 MHz): δ 27.47; 28.97; 29.16; 29.49; 29.60; 33.84; 42.29; 57.65; 62.38; 114.12; 126.82; 128.15; 129.05; 139.23.

### Example 24

### Preparation of compound 3BY1

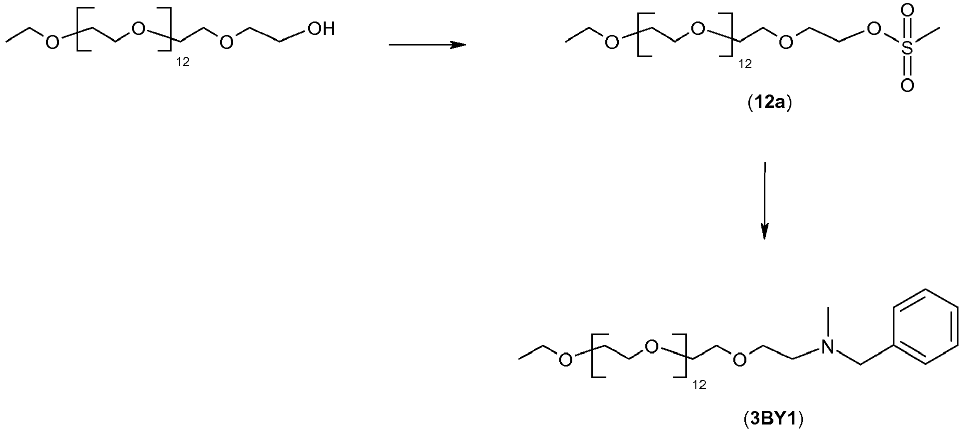

### Preparation of compound 12a

Compound **12a** is prepared as described in example 4.

### Preparation of compound 3BY1

A mixture of 0.2 g of compound **12a** and 4.1 ml N-benzyl, N-methylamine is stirred together in 0.5 ml of dioxane to give 0.2 g compound **3BY1** after neutralization with the appropriate amount of sodium hydroxide and filtration and evaporation of solvent. ¹H-NMR (dioxane, 300 MHz): δ 2.48 (s, 3 H); 3.38 (s, 3 H); 3.61 (m, ca. 45 H); 3.95 (s, 2 H); 7.35 (m, 5 H).

### Example 25

### Preparation of yellow compound 5B1

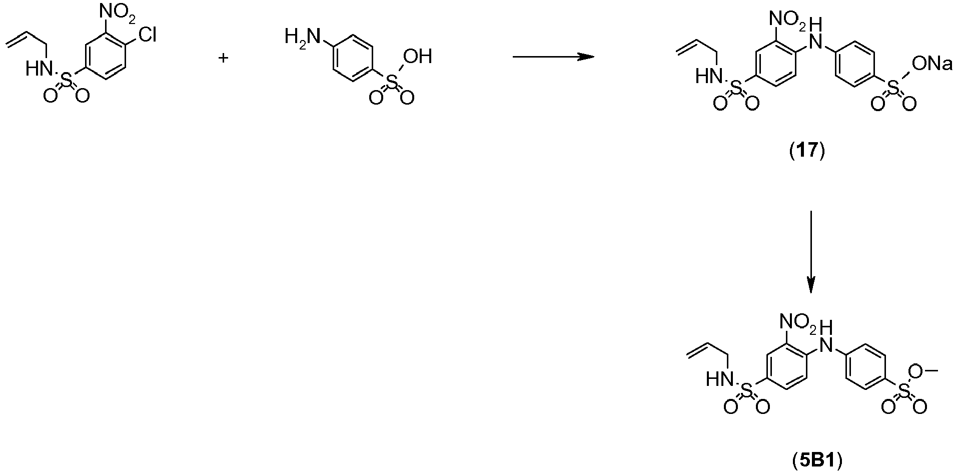

### Preparation of compound 17

A solution of 30 ml of water containing 7.3 g of sodium carbonate, 10.0 g 4-chloro-3-nitrobenzene-allylsulfonamide and 5.9 g of sulfanilic acid is stirred at 100 °C for 48 h. Evaporation of water leaves a solid which is further pruified by column chromatography (eluent: dichloromethane - methanol (10 - 2)) to give 3.4 g of compound **17.** ¹H-NMR (CD₃OD, 300 MHz): δ 3.49 (d, 2 H); 5.05 (dd, 2 H); 5.62 (ddt, 1 H); 7.37 (d, 1 H); 7.40 (d, 2 H); 7.55 (d, 1 H); 7.80 (d, 2 H); 8.55 (d, 1 H). ¹³C-NMR (CD₃OD, 75 MHz): δ 45.18; 115.99; 116.90; 124.02; 126.13; 127.38; 129.46; 132.40; 132.91; 133.57; 139.90; 142.67; 144.53.

### Preparation of yellow compound 5B1

A mixture of 50 mg of compound **17** and 400 µl dimethylsulfate are heated to 120 °C for 2 h. The mixture is directly applied to a silica gel column and eluted with dichloromethane - methanol (10 - 1) to give 40 mg of compound **5B1**. ¹H-NMR (CDCl₃, 300 MHz): δ 3.66 (t, 2 H); 3.80 (s, 3 H); 5.19 (ddd, 2 H); 5.76 (ddt, 1 H); 7.49 (d, 3 H); 7.90 (d, 1 H); 7.97 (d 2 H); 8.73 (d, 1 H); 9.85 (NH).

### Example 26

### Preparation of magenta compound 5B2

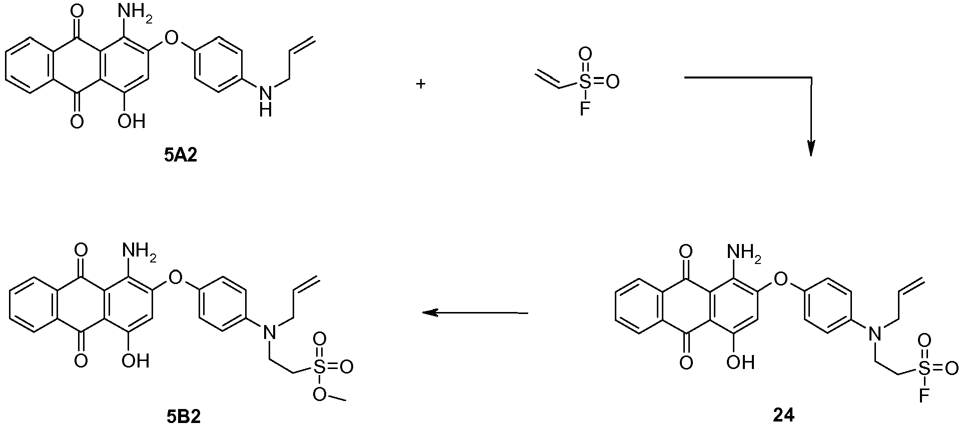

5.10 g of allylic compound **5A2**, prepared as described in example 6, and vinylsulfonyl flouride are dissolved in 6 ml of dry dimethyl formamide and heated to 60 °C until TLC shows complete consumption of the starting materials (ca. 16 h). After cooling to room temperature the mixture is diluted with ethyl acetate and extracted with water. Evaporation of the solvent leaves a residue which is purified over silica gel (eluent: dichloremethane - hexane (10 - 2)) to give 5.05 g of the intermediate compound **24.** 4.00g of the intermediate compound **24** are dissolved in 70 ml dichloromethane and 7 ml methanol containing 1 equivalent of sodium methanolate and are stirred at room temperature for 4 h. The mixture is extracted with ice-water and the organic solvent evaporated. The residue is purified over silica gel (eluent: dichloremethane - methanol (10 - 1)) to give 3.35 g of magenta compound **5B2**. ¹H-NMR (CDCl₃, 300 MHz): δ 3.43 (t, 2 H); 3.93 (t, 2 H); 3.96 (s, 3 H); 4.02 (d, 2 H); 5.26 (ddd, 2 H); 5.90 (dt, 1 H); 6.42 (s, 1 H); 6.80 (d, 2 H); 7.06 (d, 2 H); 7.79 (quint. 2 H); 8.37 (dd, 2 H). ¹³C-NMR (CDCl₃, 75 MHz): δ 45.39; 46.63; 53.95; 55.23; 107.96; 108.36; 109.21; 113.75; 117.29; 122.33; 126.29; 126.80; 132.84; 133.03; 133.40; 133.59; 134.98; 139.07; 144.51; 145.12; 156.24; 159.68; 183.18; 185.30.

### Example 26a

### Preparation of compound 33

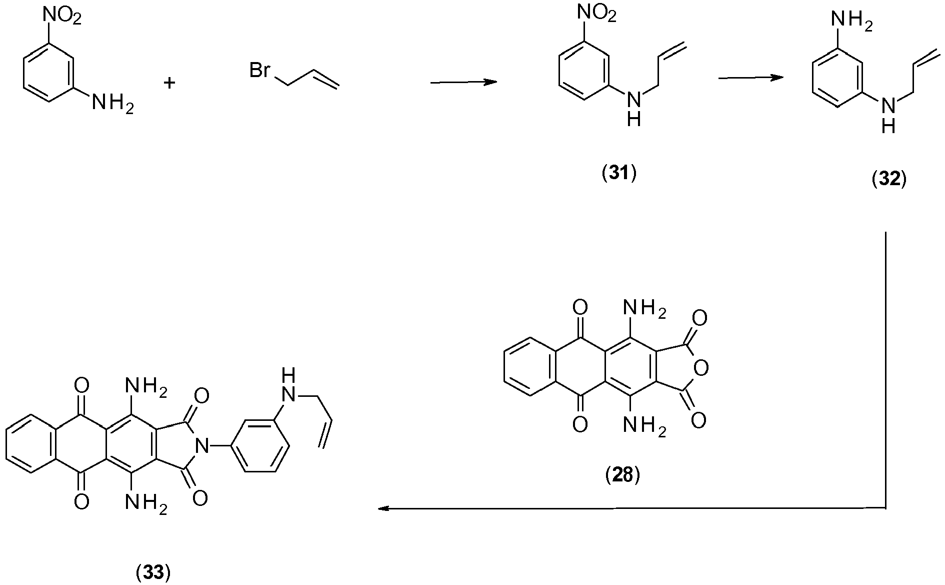

### Preparation of compound 31

A mixture of 19.0 g of 3-nitroaniline, 18.0 g of potassium carbonate and 10.3 ml of allylbromide are heated to 90 °C for 30 h in 170 ml of toluene. After cooling down the mixture is filtered and the toluene evaporated. The residue is filtered over silicagel (eluent: hexane - ethyl acetate: 10 - 1) to give 7.9 g of compound **31.** ¹H-NMR (CDCl₃, 300 MHz): 3.85 (s, 2 H); 4.25 (NH); 5.31 (ddd, 2 H); 5.94 (ddd, 1 H); 6.39 (dd, 1 H); 7.30 (dd, 1 H); 7.41 (dd, 1 H); 7.54 (dd, 1 H); ¹³C-NMR (CDCl₃, 75 MHz): 46.1 ; 106.5 ; 112.0; 116.3; 118.9; 129.7; 134.1; 148.7; 149.4.

### Preparation of compound 32

In analogy to the preparation of compound **26** in example 9a, 7.8 g of nitrocompound **31** are dissolved in 80 ml of dioxane containing 23 ml of conc. hydrogenchloride and 8.3 g of tin granules. Pure compound **32,** 5.2 g, is obtained after distillation at 175 °C /0.12 mbar at a Kugelrohr. ¹H-NMR (CDCb, 300 MHz): 3.62 (2 x NH); 3.84 (s, 2 H); 5.34 (ddd, 2 H); 5.98 (s, **1** H); 6.04 (ddd, 1 H); 6.15 (dd, 2 H); 7.07 (dd, 1 H); ¹³C-NMR (CDCl₃, 75 MHz): 46.6 ; 99.9; 104.1; 105.1; 116.1; 130.1; 135.8; 147.7; 149.4.

### Preparation of compound 33

A mixture of 0.50g of compound **28,** obtained according to FR1410259, and 0.27 g of compound **32** are heated to reflux in 10 ml of n-propanol for 24 h. After colloing down in an ice-bath the mixture is filtered and the residue washed successively with propanol and methanol to yield 0.41 g of the cyan compound **33**. ¹H-NMR (DMSO-D₆, 300 MHz): 3.72 (d, 2 H); 5.13 (d, 103 1 H); 5.33 (dd, 1 H); 5.94 (ddd, 1 H); 6.58 (dd, 1 H); 6.64 (s, 1 H); 6.68 (d, 1 H); 7.22 (t, 1 H); 7.80 (dd, 2 H); 8.19 (dd, 2 H).

### Example 27

### Preparation of magenta compound 2B1

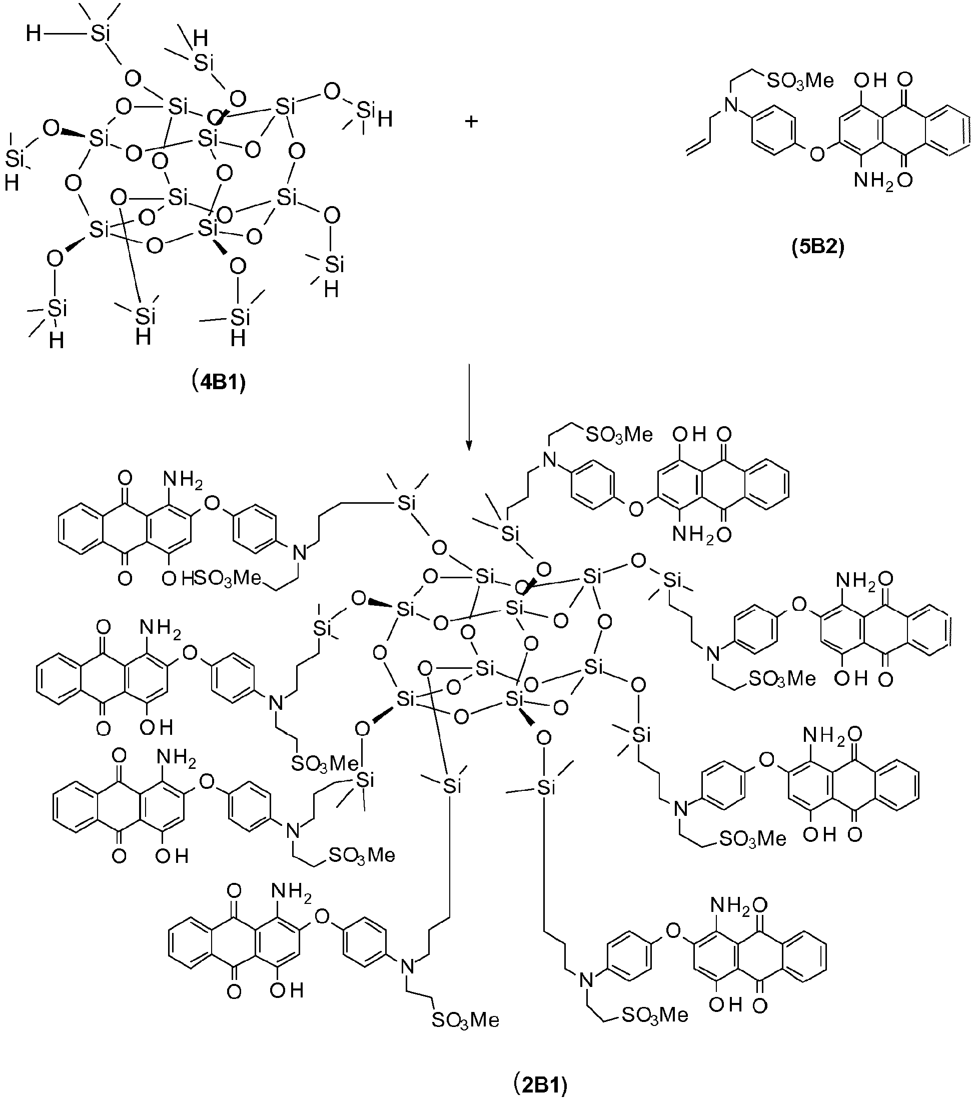

Magenta compound **2B1** is prepared in analogy to compound **2A1** in example 10. 3.0 g of compound **5B2,** prepared as described in example 26, and 0.67 g of compound **4B1** are reacted to yield 1.60 g of magenta compound **2B1.**¹H-NMR (CDCl₃, 300 MHz): all signal broad δ 0.21 (48 H); 0.65 (16 H); 1.66 (16 H); 3.31 (16 H); 3.37 (16 H); 3.86 (16 H); 3.92 (24 H); 6.28 (8 H); 6.68 (16 H); 7.00 (16 H); 7.70 (16 H); 8.23 (16 H). ¹³C-NMR (CDCl₃, 75 MHz): δ -0.26; 14.77; 20.83; 45.41; 46.26; 54.63; 55.44; 107.70; 108.23; 109.06; 113.30; 122.41; 126.15; 126.60; 132.72; 133.25; 133.48; 134.84; 138.99; 144.10; 144.83; 156.20; 159.55; 182.90; 185.07. ²⁹Si-NMR (CDCl₃, 80 MHz): δ-110, +14.

### Example 27a

### Preparation of yellow compound 2B2

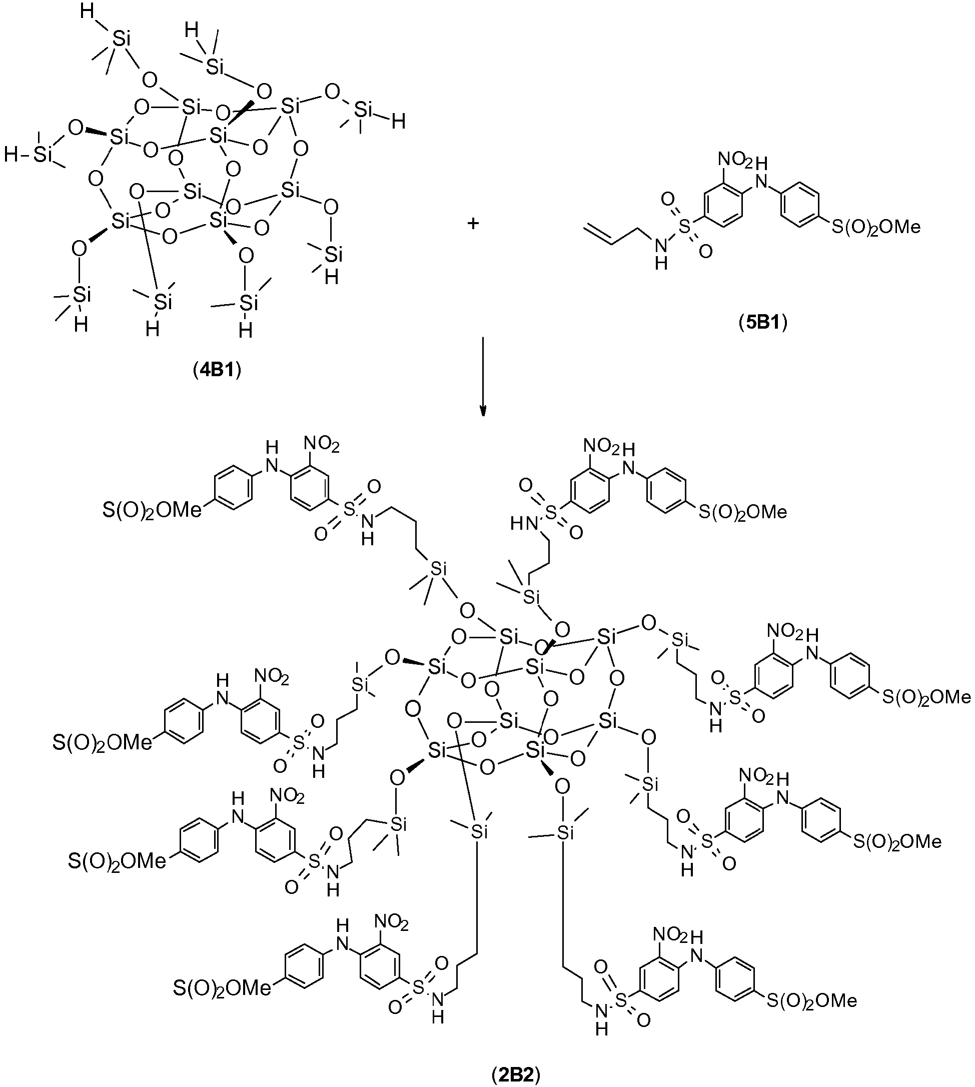

In an argon atmosphere 0.100 ml of a xylene solution (2 % in platinum, Fluka) and 0.035 ml of diethylsulfide are stirred in 3 ml dichloromethane at room temperature for 30 min. A solution of 0.370 g of compound **5B1**, prepared as described in example 25, in 10 ml dichloromethane and 0.100 g of compound **4B1** are added successively and stirring is continued at 40 °C for 3 d. The mixture is evaporated and the residue extracted with diethyl ether until the supernatant is colorless. Compound **2B2,** 0.188 g, is obtained as a yellow solid. ¹H-NMR (CDCb, 300 MHz): all signal broad δ 0.24 (ca. 48 H); 0.60 (16 H); 1.59 (16 H); 2.90 (16 H); 3.83 (24 H); 7.50 (dd, 24 H); 8.01 (24 H); 8.82 (8 H).

### Example 28

### Preparation of compound magenta 1B1

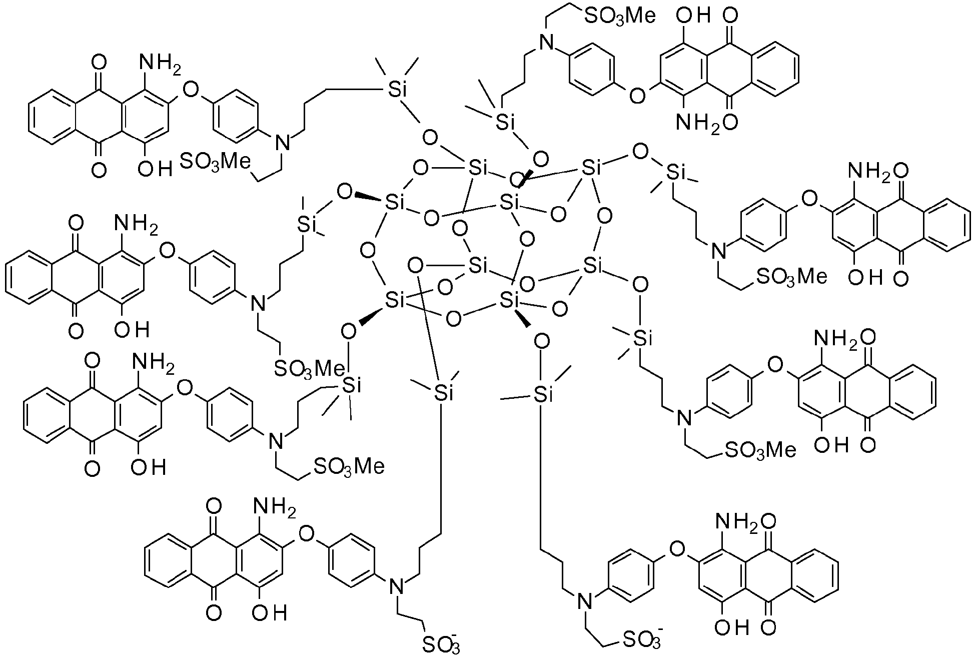

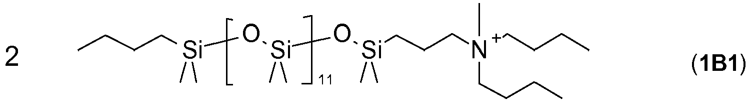

A solution of 50.0 mg of compound **2B1,** prepared as described in example 27, and 26.0 mg of compound **3BX1**, prepared as described in example 23, are heated to 65 °C in 0.5 ml chloroform to form 76 mg of magenta compound **1 B1** after 24 h. According ¹H-NMR data compound **3BX1** has been completely alkylated resulting in magenta compound **1 B1** with two negative charges. ¹H-NMR (CDCb, 300 MHz): all signal broad δ 0.21 (44 H); 0.64 (24 H); 0.90 (t, 6 H); 0.98 (t, 12 H); 1.41 (20 H); 1.64 (24 H); 3.01 (18 H); 3.46 (32 H); 3.85 (32 H); 6.38 (8 H); 6.69 (16 H); 6.97 (16 H); 7.67 (16 H); 8.21 (16 H).

### Example 29

### Preparation of magenta compound 1B2

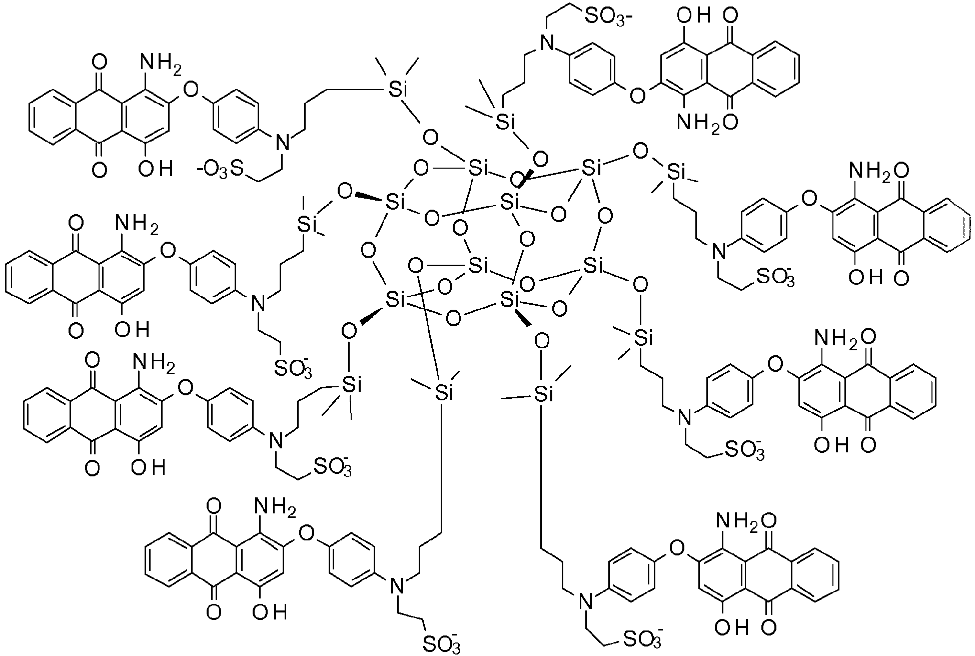

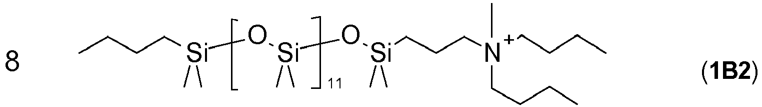

A solution of 50.0 mg of compound 2B1, prepared as described in example 27, and 105.0 mg of compound **3BX1**, prepared as described in example 23, are heated to 65 °C in 0.5 ml chloroform to form 155 mg of compound **1B2** after 24 h. According ¹H-NMR data compound **3BX1** has been completely alkylated resulting in compound **1B2** with eight negative charges. ¹H-NMR (CDCl₃, 300 MHz): all signal broad δ 0.21 (252 H); 0.63 (48 H); 0.96 (72 H); 1.36 (80 H); 1.64 (48 H); 2.76 (32 H); 3.07 (27 H); 3.28 (16 H); 3.36 (16 H); 3.82 (16 H); 6.38 (8 H); 6.69 (16 H); 6.97 (16 H); 7.67 (16 H); 8.21 (16 H).

## Claims

1. Compounds of formula 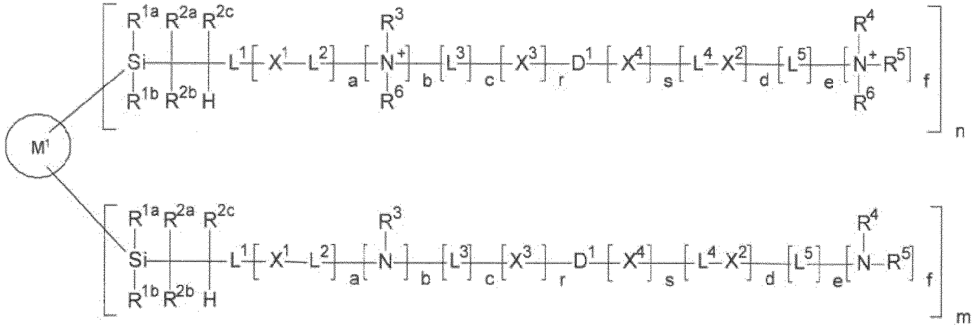 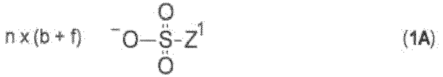 wherein 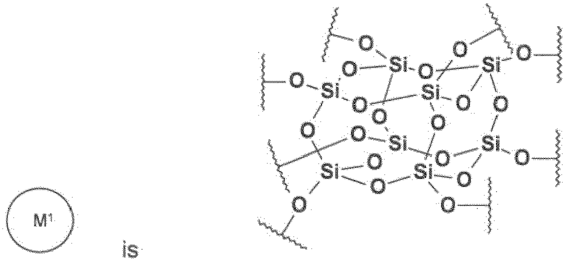
n is 1, 2, 3, 4, 5, 6, 7 or 8,
m is 8-n,
a is 0 or 1,
b is 0 or 1,
c is 0 or 1,
r is 0 or 1,
s is 0 or 1,
d is 0 or 1,
e is 0 or 1 ,
f is 0 or 1,
with the proviso that at least b or f is 1, and with the proviso f is 0, then s, d and e are also 0,
R^{1a} and R^{1b} are independently from each other C₁₋₄-a1kyl,
R^{2a}, R^{2b}, and R^{2c} are independently from each other hydrogen or C₁₋₄-alkyl,
L¹ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L¹ may be substituted with one or more substituents selected from the group consisting of halogen, OC₁₋₆-alkyl, NO₂ and OH,
X¹, X², X³ and X⁴ are independently of each other O, S, C(O) or C(O)O,
L², L³, L⁴ and L⁵ are independently of each other C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L², L³, L⁴ and L⁵ may be substituted with one or more substituents selected from the group consisting of halogen, OC₁₋₆-alkyl, NO₂ and OH,
R³, R⁴ and R⁵ are independently of each other C₁₋₂₀-alkyl, which may be substituted with a substituent selected from the group consisting of C₆₋₁₄-aryl, OC₁₋₆-alkyl, and NO₂, or
R⁴ and R⁵ together with the N linked to both of them form a 5, 6 or 7 membered ring, which may also include O or S,
R⁶ is C₁₋₂₀-alkyl, which may be substituted with a substituent selected from the group consisting of C₆₋₁₄-aryl, OC₁₋₆-alkyl, and NO₂,
D¹ is a chromophoric moiety, which may be substituted with one or more R⁵⁰, wherein R⁵⁰ are independently from each other selected from the group consisting of C₁₋₂₀-alkyl, C₆₋₁₄-aryl, halogen, OC₁₋₆-alkyl, OH, CH₂ and NO₂, and
Z¹ is C₁₋₁₀₀-alkyl, wherein one or more methylene groups are replaced by-SiR¹⁰⁰R¹⁰¹-,
-SiR¹⁰⁰R¹⁰¹O-, -O- or -S-, with the proviso that -SiR¹⁰⁰R¹⁰¹-, -SiR¹⁰⁰R¹⁰¹O-, -O- or-S- are not directly linked to the S of 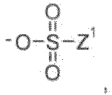 wherein R¹⁰⁰ and R¹⁰¹ are independently from each other C₁₋₆-alkyl,
or formula 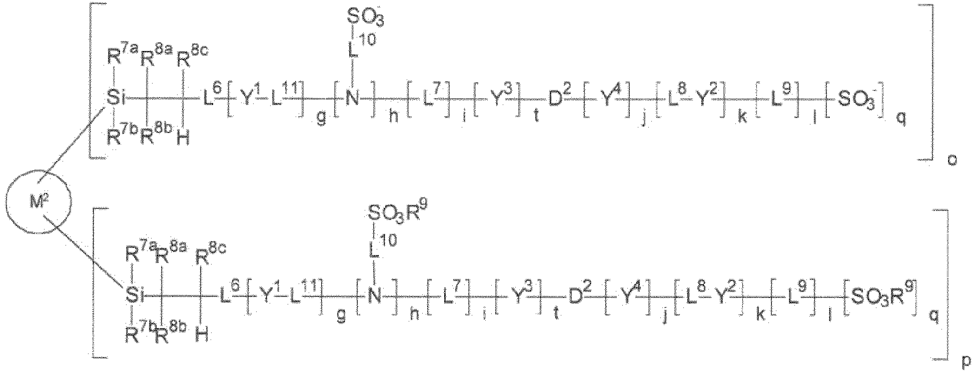 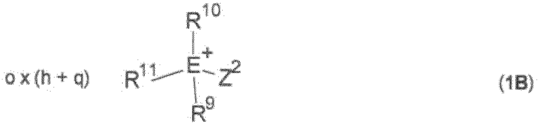 wherein 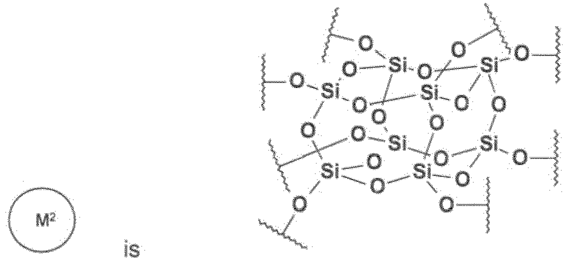
o is 1, 2, 3, 4, 5, 6, 7 or 8,
p is 8-o,
g is 0 or 1,
h is 0 or 1,
i is 0 or 1,
t is 0 or 1,
j is 0 or 1,
k is 0 or 1,
l is 0 or 1,
q is 0 or 1
with the proviso that at least h or q is 1, and with the proviso that if q is 0, then j, k and l are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L⁶ may be substituted with one or more substitutents selected from the group consisting of halogen, OC₁₋₆-alkyl, NO₂ and OH,
Y¹, Y², Y³ and Y⁴ are independently of each other NR⁵¹, O, S, C(O) or C(O)O, wherein R⁵¹ is C₁₋₂-alkyl,
L⁷, L⁸, L⁹, L¹⁰ and L¹¹ are independently of each other C₁₋₂₀-alkylene, C₁₋₂₀-alkylene-phenylene or C₁₋₂₀-alkylene-C₅₋₈-cycloalkylene, phenylene or C₅₋₈-cycloalkylene, wherein L⁷, L⁸, L⁹, L¹⁰ and L¹ may be substituted with one or more substituents selected from the group consisting of halogen, OC₁₋₆-alkyl, NO₂ and OH, preferably,
D² is a chromophoric moiety, which may be substituted with one or more R⁵², wherein R⁵²are independently from each other selected from the group consisting of C₁₋₂₀-alkyl, C₆₋₁₄-aryl, halogen, OC₁₋₆-alkyl, OH, NH₂ and NO₂,
R⁹ is C₁₋₁₀-alkyl,
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P, and
Z² is C₁₋₁₀₀-alkyl, wherein one or more methylene groups are replaced by -SiR¹⁰²R¹⁰³,
-SiR¹⁰²R¹⁰³O-, -O- or -S-, with the proviso that -SiR¹⁰²R¹⁰³-, -SiR¹⁰²R¹⁰³O-, -O- or -S- are not directly linked to E, wherein R¹⁰² and R¹⁰³ are independently from each other C₁₋₆-alkyl,

2. The compounds of formula (**1A**) of claim 1, wherein
R⁶ is C₁₋₁₀-alkyl, which may be substituted with phenyl; or
the compounds of formula (**1B**) of claim 1, wherein
R⁹ is C₁₋₆-alkyl, preferably methyl.

3. The compounds of formula (**1A**) of claim 1 or 2, wherein
R^{1a} and R^{1b} are methyl, and
R^{2a}, R^{2b}and R^{2c} are hydrogen,
or
the compounds of formula (**1B**) of claim 1 or 2, wherein
R^{7a} and R^{7b} are methyl, and
R^{8a}, R^{8b} and R^{8c} are hydrogen.

4. The compounds of formula (**1A**) of any of claims 1, 2 or 3, wherein
L¹ is C₁₋₁₀-alkylene or phenylene,
X¹, X², X³ and X⁴ are independently of each other O or S,
L², L³, L⁴ and L⁵ are independently of each other C₁₋₂₀-alkylene or C₁₋₂₀-alkylene-phenylene or phenylene,
and
R³, R⁴ and R⁵ are independently of each other C₁₋₁₀-alkyl, which may be substituted with phenyl, or
R⁴ and R⁵ together with the N linked to both of them form a 6 membered ring, which may also include O or S; or
the compounds of formula (**1B**) of claim 1 or 2, wherein
L⁶ is C₁₋₁₀-alkylene or phenylene,
Y¹, Y², Y³ and Y⁴ are independently of each other O or NR⁵¹, wherein R⁵¹ is C₁₋₆-alkyl, and
L⁷, L⁸, L⁹, L¹⁰ and L¹¹ are independently of each other C₁₋₂₀-alkylene or C₁₋₂₀-alkylene-phenylene or phenylene.

5. The compounds of formula (**1A**) of any of claims 1 to 4, wherein
L¹ is C₁₋₁₀-alkylene, and
X¹, X², X³ and X⁴ are O,
L², L³, L⁴ and L⁵ are independently of each C₁₋₁₀-alkylene or C₁₋₁₀-alkylene-phenylene,
and
R³, R⁴ and R⁵ are independently of each C₁₋₆-alkyl or benzyl, or
R⁴ and R⁵ together with the N linked to both of them form 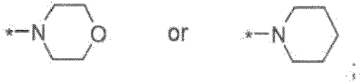 or
the compounds of formula (**1B**) of any of claims 1 to 4, wherein
L⁶ is C₁₋₁₀-alkylene or phenylene,
Y¹, Y², Y³ and Y⁴ are independently of each other O or NR⁵¹, wherein R⁵¹ is methyl, and
L⁷, L⁸, L⁹, L¹⁰ and L¹¹ are independently of each C₁₋₁₀-alkylene or C₁₋₁₀-alkylene-phenylene.

6. The compounds of formulae (**1A**) of any of claims 1 to 5, wherein
D1 is of formula 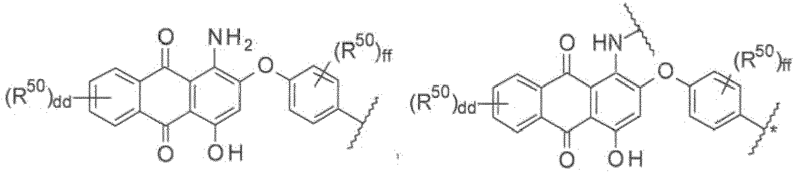 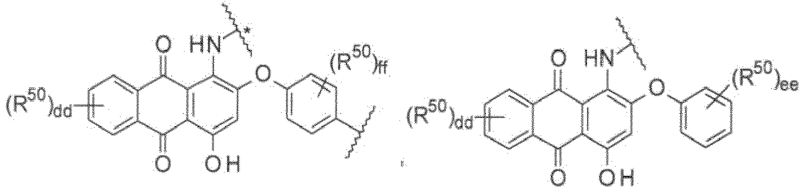 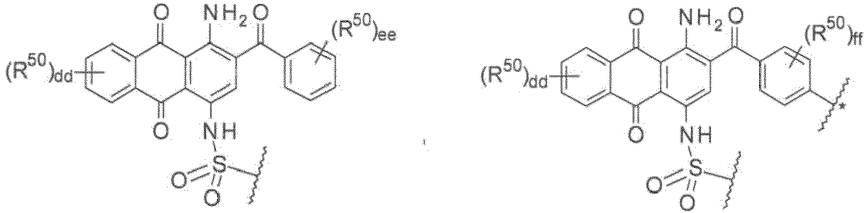 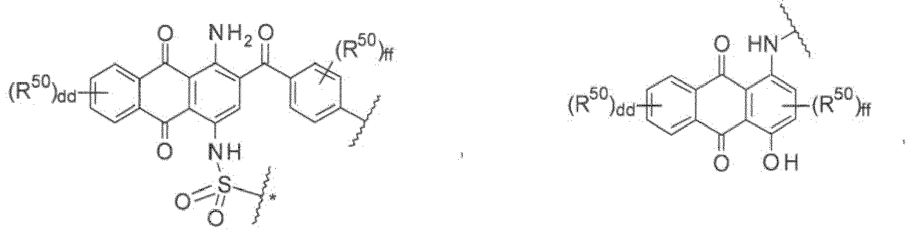 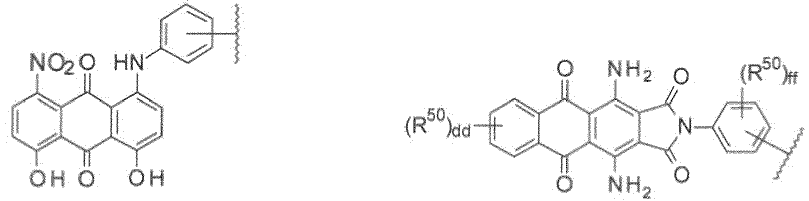 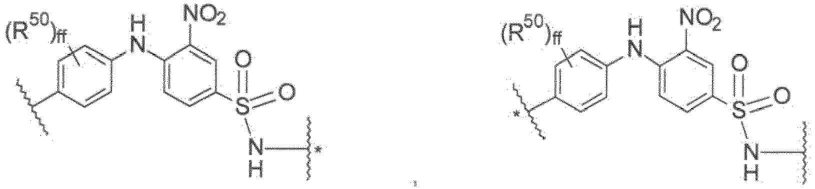 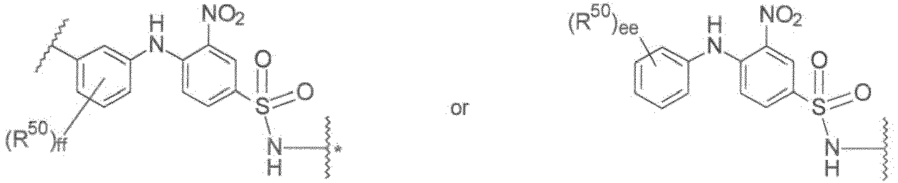 wherein
the bond marked with * is linked to 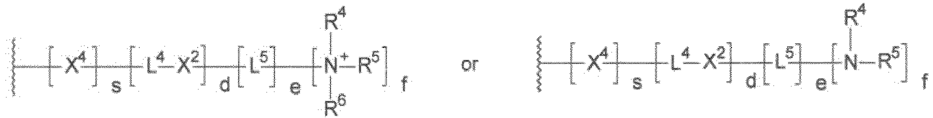
dd is an integer from 0 to 3,
ee is an integer from 0 to 2,
ff is an integer from 0 to 1, and
R⁵⁰ are independently from each other selected from the group consisting of C₁₋₂₀-alkyl, C₆₋₁₄-aryl, halogen, OC₁₋₆-alkyl, OH, NH₂ and NO₂; or
the compounds of formulae (**1B**) of any of claims 1 to 5, wherein
D2 is of formula 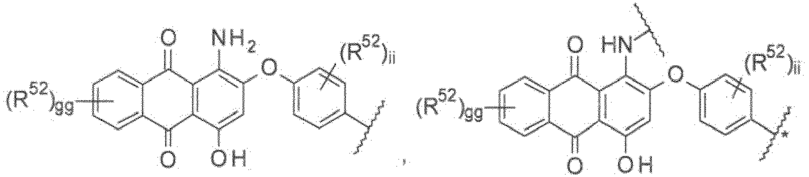 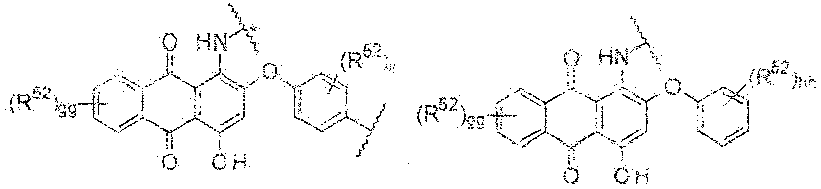 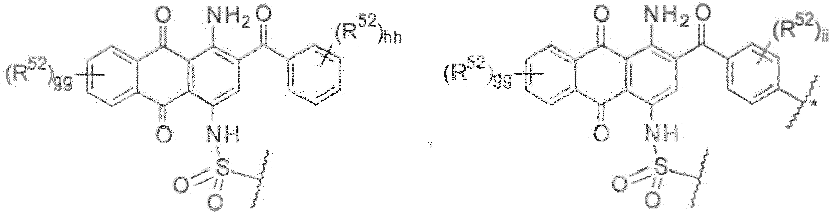 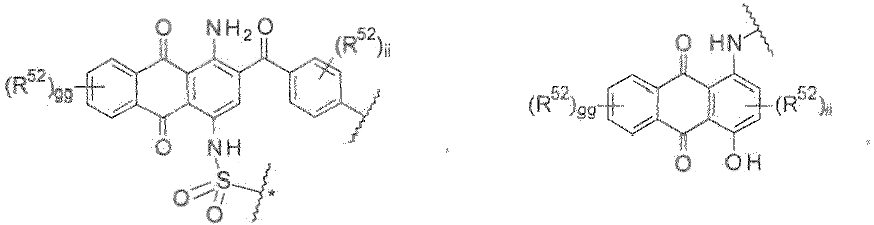 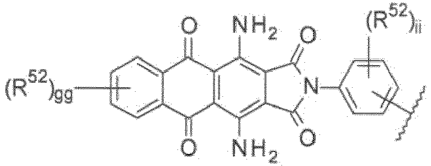 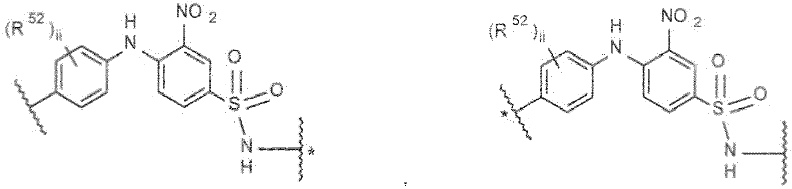 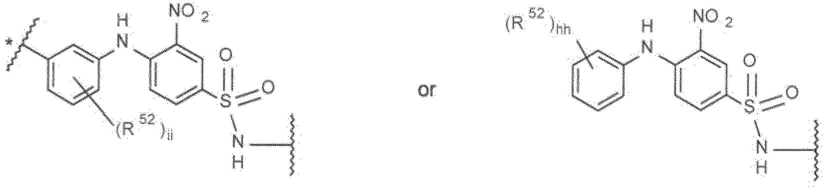 wherein
the bond marked with * is linked to 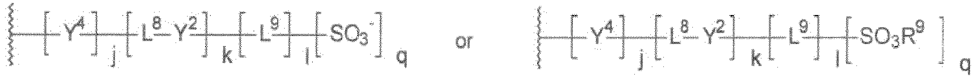
gg is an integer from 0 to 3,
hh is an integer from 0 to 2,
ii is an integer from 0 to 1, and
R⁵² are independently from each other selected from the group consisting of C₁₋₂₀-alkyl, C₆₋₁₄-aryl, halogen, OC₁₋₆-alkyl, OH, NH₂ and NO₂.

7. The compounds of formula (**1A**) of any of claims 1 to 6, wherein
D1 is of formula 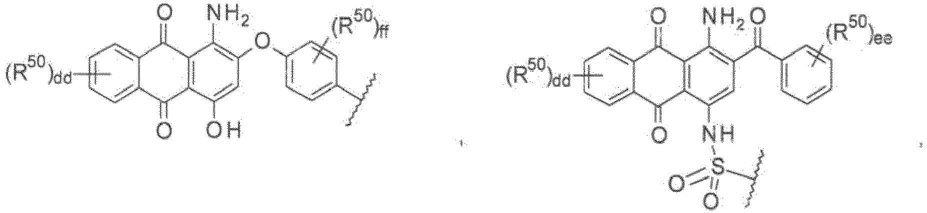 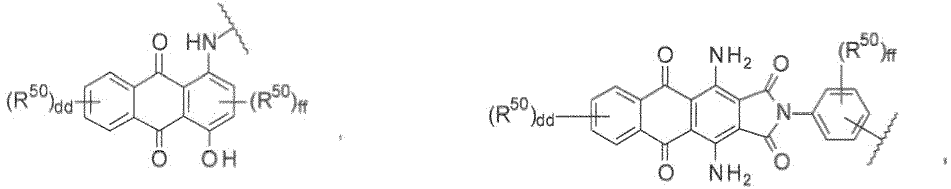 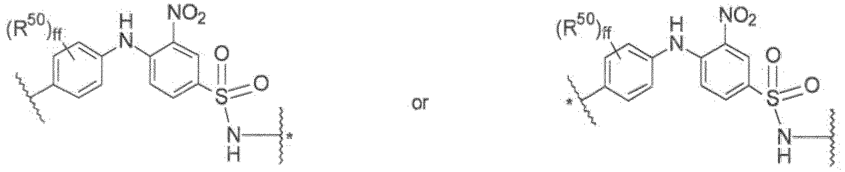 wherein
the bond marked with ** is linked to 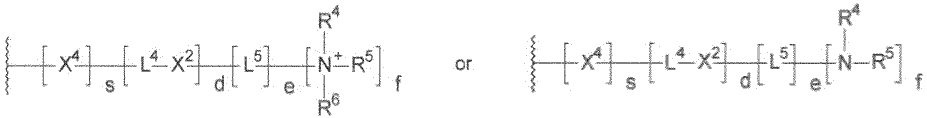
dd is an integer from 0 to 3,
ee is an integer from 0 to 2,
ff is an integer from 0 to 1, and
R⁵⁰ are independently from each other selected from the group consisting of C₁₋₂₀-alkyl, C₆₋₁₄-aryl, halogen, OC₁₋₆-alkyl, OH, NH₂ and NO₂; or
the compounds of formula (**1B**) of any of claims 1 to 6, wherein
D2 is of formula 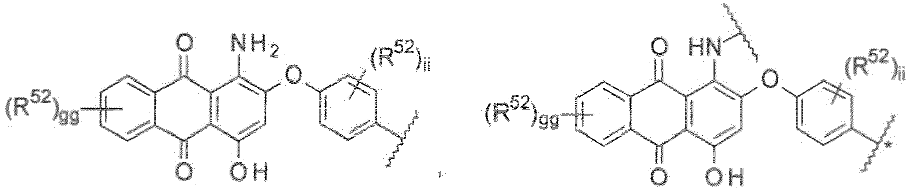 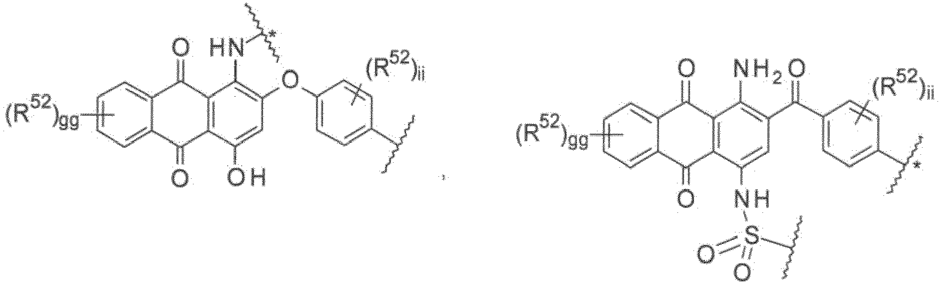 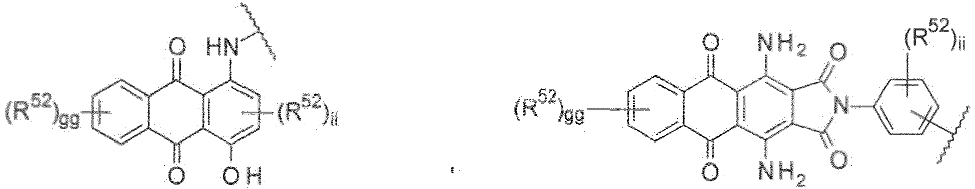 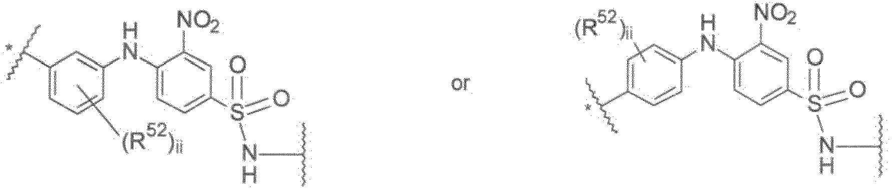 wherein
the bond marked with * is linked to 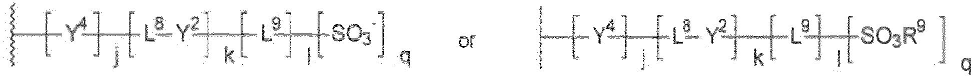
gg is an integer from 0 to 3,
hh is an integer from 0 to 2,
ii is an integer from 0 to 1, and
R⁵² are independently from each other selected from the group consisting of C₁₋₂₀-alkyl, C₆₋₁₄-aryl, halogen, OC₁₋₆-alkyl, OH, NH₂ and NO₂.

8. The compounds of formula (**1A**) of any of claims 1 to 7, wherein
D1 is of formula 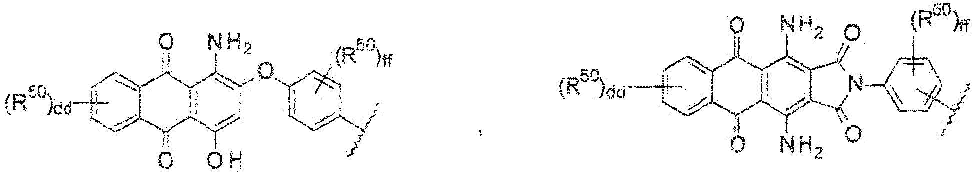 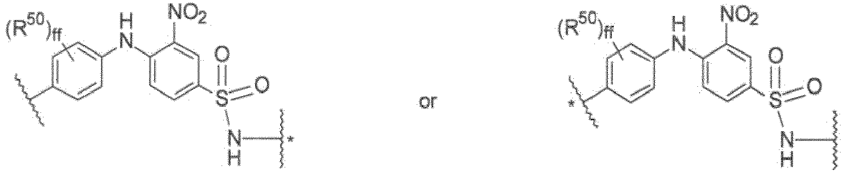 wherein
the bond marked with * is linked to 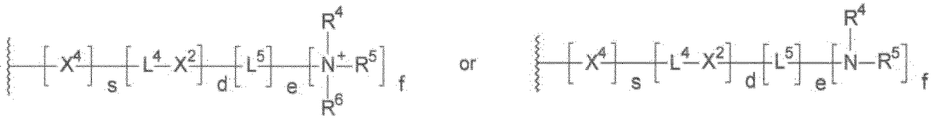
dd is an integer from 0 to 3,
ee is an integer from 0 to 2,
ff is an integer from 0 to 1, and
R⁵⁰ are independently from each other selected from the group consisting of C₁₋₆-alkyl, OH, NH₂ and NO₂; or
the compounds of formula (**1B**) of any of claims 1 to 7, wherein
D2 is of formula 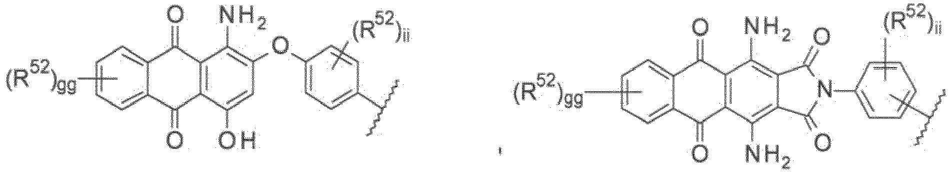 or 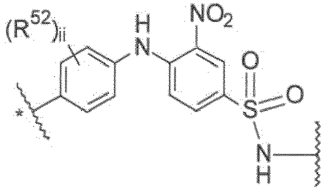 wherein
the bond marked with * is linked to 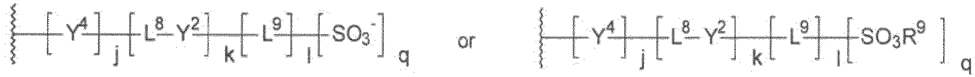
gg is an integer from 0 to 3,
hh is an integer from 0 to 2,
ii is an integer from 0 to 1, and
R⁵² are independently from each other selected from the group consisting of C₁₋₆-alkyl, OH, NH₂ and NO₂.

9. The compounds of formula (**1A**) of any of claims 1 to 8, wherein
Z¹ is C₁₋₅₀-alkyl, wherein one or more methylene groups are replaced by -SiR¹⁰⁰R¹⁰¹-, -SiR¹⁰⁰R¹⁰¹O-, -O- or -S-, with the proviso that -SiR¹⁰⁰R¹⁰⁰-, -SiR¹⁰⁰R¹⁰¹O-, -O- or -S- are not directly linked to the S of 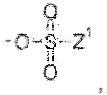 wherein R¹⁰⁰ and R¹⁰¹ are independently from each other C₁₋₆-alkyl; or
the compounds of formula (**1B**) of any of claims 1 to 8, wherein
R¹⁰ and R¹¹ are independently from each other C₁₋₆-alkyl, which may be substituted with phenyl,
E is N, and
Z² is C₁₋₅₀-alkyl, wherein one or more methylene groups are replaced by -SiR¹⁰²R¹⁰³-,
-SiR¹⁰⁰R¹⁰³O-, -O- or -S-, with the proviso that -SiR¹⁰²R¹⁰³-, -SiR¹⁰²R¹⁰³O-,-O- or -S- are not directly linked to E, wherein R¹⁰² and R¹⁰³ are independently from each other C₁₋₆-alkyl.

10. The compounds of formula (**1A**) of any of claims 1 to 9, wherein
Z¹ is 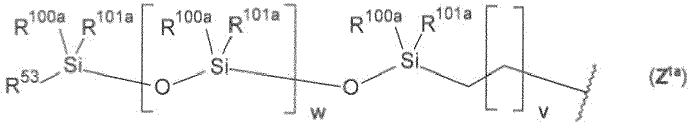 wherein
R⁵³ is C₁₋₁₀-alkyl,
R^{100a} and R^{101a} are independently from each other C₁₋₆-alkyl,
v is an integer from 1 to 12,
w is an integer from 2 to 25; or
the compounds of formula (**1B**) of any of claims 1 to 9, wherein
R¹⁰ and R¹¹ are independently from each other C₁₋₆-alkyl, which may be substituted with phenyl,
E is N, and
Z² is 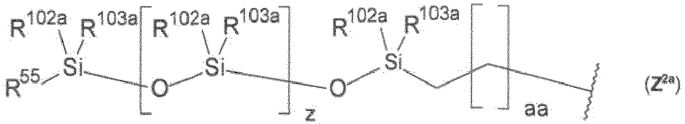 wherein
R⁵⁵ is C₁₋₁₀-alkyl,
R^{102a} and R^{103a} are independently from each other C₁₋₆-alkyl,
aa is an integer from 1 to 12,
z is an integer from 2 to 25.

11. The compounds of formula (**1A**) of any of claims 1 to 10, wherein
Z¹ is 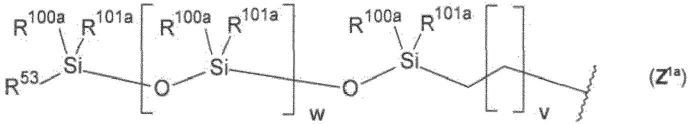 wherein
R⁵³ is C₁₋₆-alkyl,
R^{100a} and R^{101a} are methyl,
v is an integer from 2 to 6,
w is an integer from 5 to 20; or
the compounds of formula (**1B**) of any of claims 1 to 10, wherein
R¹⁰ and R¹¹ are independently from each other C₁₋₆-alkyl or benzyl,
E is N, and
Z² is 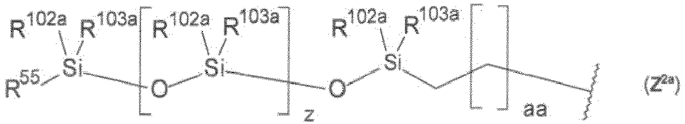 wherein
R⁵⁵ is C₁₋₆-alkyl,
R^{102a} and R^{103a} are methyl,
aa is an integer from 2 to 10,
z is an integer from 5 to 20.

12. The compounds of formula (**1A**) of any of claims 1 to 8, wherein
Z¹ is 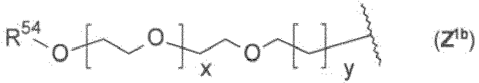 wherein
R⁵⁴ is C₁₋₁₀-alkyl,
x is an integer from 5 to 25, and
y is an integer from 1 to 5; or
the compounds of formula (**1B**) of any of claims 1 to 8, wherein
R¹⁰ and R¹¹ are independently from each other C₁₋₆-alkyl, which may be substituted with phenyl,
E is N, and
Z² is 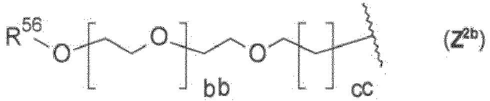 wherein
R⁵⁶ is C₁₋₁₀-alkyl,
bb is preferably an integer from 5 to 25, and
cc is an integer from 1 to 5.

13. The compounds of formula (**1A**) of any of claims 1 to 12, wherein s is 0,
d is 0, or
the compounds of formula (**1B**) of any of claims 1 to 12,
g is 0, and
k is 0.

14. The compounds of formula (**1A**) of any of claims 1 to 13, wherein
a is 0, and
r is 0.

15. The compounds of formula (**1A**) of any of claims 1 to 14,
with the additional proviso that if b is 1, then f is 0, or if f is 1, then b is 0; or
the compounds of formula (**1B**) of any of claims 1 to 14,
with the additional proviso that that if h is 1, then q is 0, and if q is 1, then h is 0.

16. The compounds of formula (**1A**) of any of claims 1 to 15, wherein
n is 1, 2, 3, 4, 5, 6 or 7,
m is 8- n.

17. A process for the preparation of the compounds of formula (**1A**) of claim 1, which process comprises the step of reacting a compound of formula 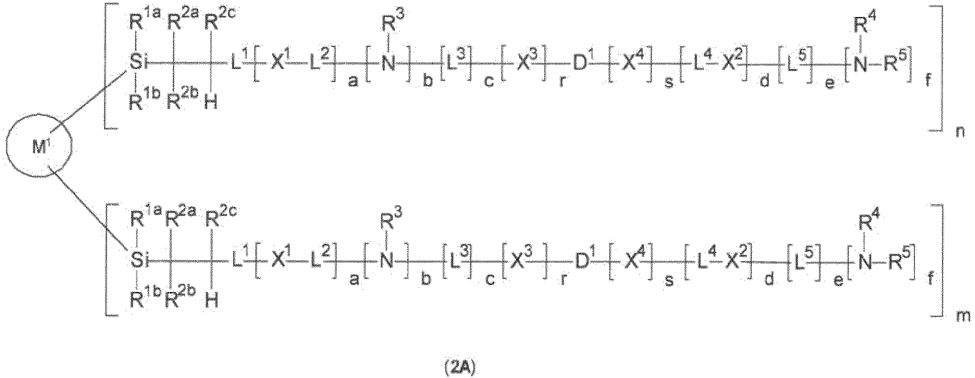 wherein 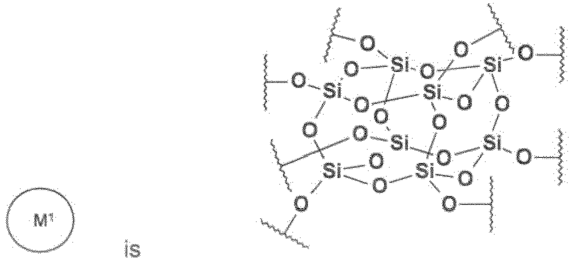
n is 1, 2, 3, 4, 5, 6, 7 or 8,
m is 8-n,
a is 0 or 1,
b is 0 or 1,
c is 0 or 1,
r is 0 or 1,
s is 0 or 1,
d is 0 or 1,
e is 0 or 1,
f is 0 or 1,
with the proviso that at least b or f is 1, and with the proviso f is 0, then s, d and e are also 0,
R^{1a} and R^{1b} are independently from each other C₁₋₄-alkyl,
R^{2a}, R^{2b} and R^{2c} are independently from each other hydrogen or C₁₋₄-alkyl,
L¹ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L¹ may be substituted with one or more substituents selected from the group consisting of halogen, OC₁₋₆-alkyl, NO₂ and OH,
X¹, X², X³ and X⁴ are independently of each other O, S, C(O) or C(O)O,
L², L³, L⁴ and L⁵ are independently of each other C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L², L³, L⁴ and L⁵ may be substituted with one or more substituents selected from the group consisting of halogen, OC₁₋₆-alkyl, NO₂ and OH,
R³, R⁴ and R⁵ are independently of each other C₁₋₂₀-alkyl, which may be substituted with a substituent selected from the group consisting of C₆₋₁₄-aryl, OC₁₋₆-alkyl, and NO₂, or
R⁴ and R⁵ together with the N linked to both of them form a 5, 6 or 7 membered ring, which may also include O or S,
and
D¹ is a chromophoric moiety, which may be substituted with one or more R⁵⁰, wherein R⁵⁰ are independently from each other selected from the group consisting of C₁₋₂₀-alkyl, C₆₋₁₄-aryl, halogen, OC₁₋₆-alkyl, OH, NH₂ and NO₂,
with a compound of formula 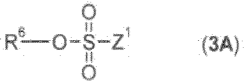 wherein
R⁶ is C₁₋₂₀-alkyl, which may be substituted with a substituent selected from the group consisting of C₆₋₁₄-aryl, OC₁₋₆-alkyl, and NO₂,
Z¹ is C₁₋₁₀₀-alkyl, wherein one or more methylene groups are replaced by -SiR¹⁰⁰R¹⁰¹-, -SiR¹⁰⁰R¹⁰¹O-, -O- or -S-, with the proviso that -SiR¹⁰⁰R¹⁰¹-, -SiR¹⁰⁰R¹⁰¹O-, -O- or -S- are not directly linked to the S of 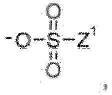 wherein R¹⁰⁰ and R¹⁰¹ are independently from each other C₁₋₆-alkyl.

18. A process for the preparation of compounds of formula (**1B**) of claim 1, which process comprises the step of reacting a compound of formula 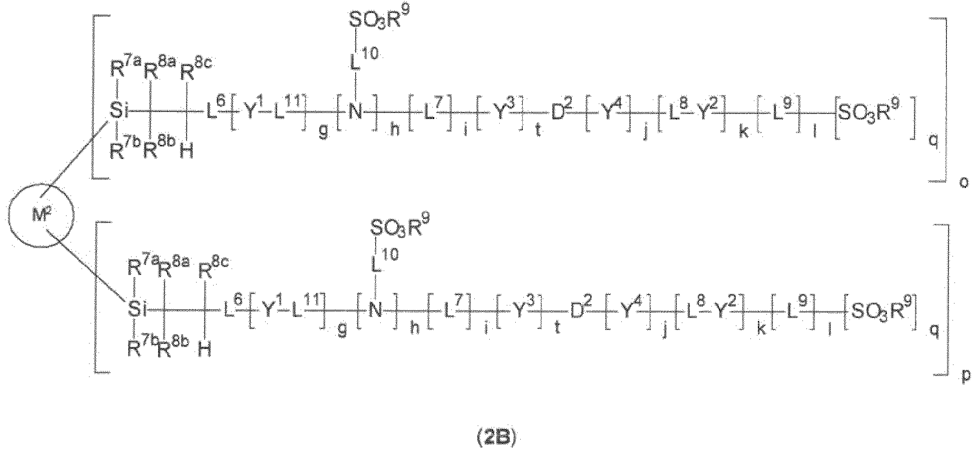 wherein 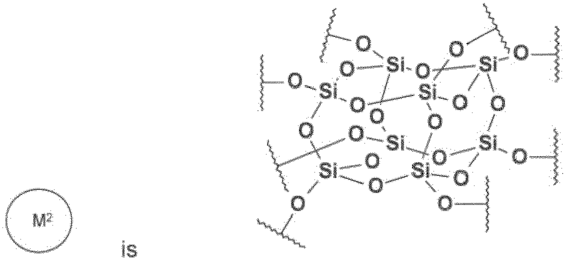
o is 1, 2, 3, 4, 5, 6, 7 or 8,
p is 8 - o,
g is 0 or 1,
h is 0 or 1,
i is 0 or 1,
t is 0 or 1,
j is 0 or 1,
k is 0 or 1,
l is 0 or 1,
q is 0 or 1
with the proviso that at least h or q is 1, and with the proviso that if q is 0, then j, k and I are also 0,
R^{7a} and R^{7b} are independently of each other C₁₋₄-alkyl,
R^{8a}, R^{8b} and R^{8c} are independently from each other hydrogen or C₁₋₄-alkyl,
L⁶ is C₁₋₂₀-alkylene, C₁₋₂₀-alkylene-phenylene, C₁₋₂₀-alkylene-C₅₋₈-cycloalkylene, phenylene or C₅₋₈-cycloalkylene, wherein L⁶ may be substituted with one or more substitutents selected from the group consisting of halogen, OC₁₋₆-alkyl, NO₂ and OH,
Y¹, Y², Y³ and Y⁴ are independently of each other NR⁵¹, O, S, C(O) or C(O)O, wherein R⁵¹ is C₁₋₂₀-alkyl,
L¹, L⁸, L⁹ L¹⁰ and L¹¹ are independently of each other C₁₋₂₀-alkylene, C₁₋₂₀-alkylene-phenylene or C₁₋₂₀-alkylene-C₅₋₈-cycloalkylene, phenylene, or C₅₋₈-cycloalkylene, wherein L⁷, L⁸, L⁹, L¹⁰ and L¹¹ may be substituted with one or more substituents selected from the group consisting of halogen, OC₁₋₆-alkyl, NO₂ and OH, and
R⁹ is C₁₋₁₀-alkyl, and
D² is a chromophoric moiety, which may be substituted with one or more R⁵², wherein R⁵² are independently from each other selected from the group consisting of C₁₋₂₀-alkyl, C₆₋₁₄-aryl, halogen, OC₁₋₆-alkyl, OH, NH₂ and NO₂,
with a compound of formula 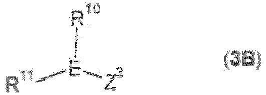 wherein
R¹⁰ and R¹¹ are independently from each other C₁₋₂₀-alkyl, which may be substituted with one or more substituents selected from the group consisting of C₆₋₁₄-aryl, OC₁₋₆-alkyl, and NO₂,
E is N or P,
Z² is C₁₋₁₀₀-alkyl, wherein one or more methylene groups are replaced by -SiR¹⁰²R¹⁰³-,
-SiR¹⁰²R¹⁰³O-, -O- or -S-, with the proviso that -SiR¹⁰²R¹⁰³-, -SiR¹⁰²R¹⁰³O-, -O- or -S- are not directly linked to E, wherein R¹⁰² and R¹⁰³ are independently from each other C₁₋₆-alkyl.

19. Use of the compounds of formulae (**1A**) or (**1B**) of any of claims 1 to 16 as charged coloured particles in electrophoretic devices.

20. An electrophoretic devices comprising the compounds of formula (**1A**) or (**1B**) of any of claims 1 to 16.

21. The use of claim 19 or the electrophoretic device of claim 20, wherein the electrophoretic device is an electrophoretic display, preferably electronic paper.

## Patentansprüche

1. Verbindungen der Formel 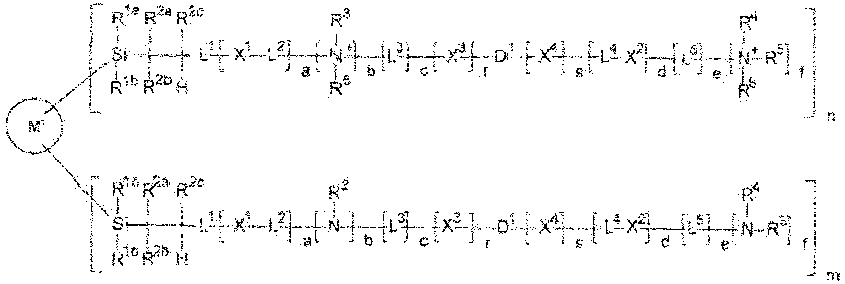 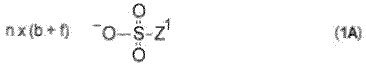 wobei 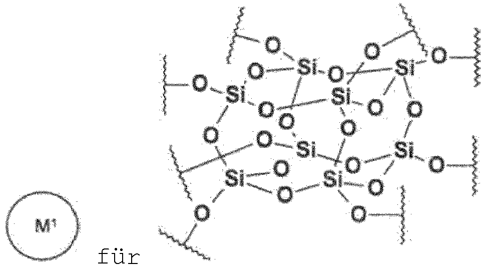
steht,
n für 1, 2, 3, 4, 5, 6, 7 oder 8 steht,
m für 8-n steht,
a für 0 oder 1 steht,
b für 0 oder 1 steht,
c für 0 oder 1 steht,
r für 0 oder 1 steht,
s für 0 oder 1 steht,
d für 0 oder 1 steht,
e für 0 oder 1 steht,
f für 0 oder 1 steht,
mit der Maßgabe, dass mindestens b oder f für 1 steht, und mit der Maßgabe, dass dann, wenn f für 0 steht, s, d und e ebenfalls für 0 stehen,
R^{1a} und R^{1b} unabhängig voneinander für C₁₋₄-Alkyl stehen,
R^{2a}, R^{2b} und R^{2c} unabhängig voneinander für Wasserstoff oder C₁₋₄-Alkyl stehen,
L¹ für C₁-₂₀-Alkylen, C₁₋₂₀-Alkylen-phenylen, C₁₋₂₀-Alkylen-C₅₋₈-cycloalkylen, Phenylen oder C₅₋₈-Cycloalkylen steht, wobei L¹ durch einen oder mehrere Substituenten, die aus der Gruppe bestehend aus Halogen, OC₁₋₆-Alkyl, NO₂ und OH ausgewählt sind, substituiert sein kann,
X¹, X², X³ und X⁴ unabhängig voneinander für 0, S, C(O) oder C(O)O stehen,
L², L³, L⁴ und L⁵ unabhängig voneinander für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen stehen, wobei L², L³, L⁴ und L⁵ durch einen oder mehrere Substituenten, die aus der Gruppe bestehend aus Halogen, OC₁₋₆-Alkyl, NO₂ und OH ausgewählt sind, substituiert sein können,
R³, R⁴ und R⁵ unabhängig voneinander für C₁₋₂₀-Alkyl, das durch einen Substituenten, der aus der Gruppe bestehend aus C₆₋₁₄-Aryl, OC₁₋₆-Alkyl und NO₂ ausgewählt ist, substituiert sein kann, stehen oder
R⁴ und R⁵ zusammen mit dem N, das an beide davon gebunden ist, einen 5-, 6- oder 7-gliedrigen Ring, der auch 0 oder S enthalten kann, bilden,
R⁶ für C₁₋₂₀-Alkyl, das durch einen Substituenten, der aus der Gruppe bestehend aus C₆₋₁₄-Aryl, OC₁₋₆-Alkyl und NO₂ ausgewählt ist, substituiert sein kann, steht,
D¹ für eine chromophore Gruppierung, die durch ein oder mehrere R⁵⁰ substituiert sein kann, steht, wobei die Reste R⁵⁰ unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt sind, und
Z¹ für C₁₋₁₀₀-Alkyl, in dem eine oder mehrere Methylengruppen durch -SiR¹⁰⁰R¹⁰¹-, -SiR¹⁰⁰R¹⁰¹O-, -O-oder -S- ersetzt sind, steht mit der Maßgabe, dass -SiR¹⁰⁰R¹⁰¹-, -SiR¹⁰⁰R¹⁰¹O-, -0- oder -S- nicht direkt an das S von 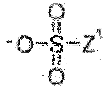 gebunden sind,
wobei R¹⁰⁰ und R¹⁰¹ unabhängig voneinander für C₁₋₆-Alkyl stehen, oder der Formel 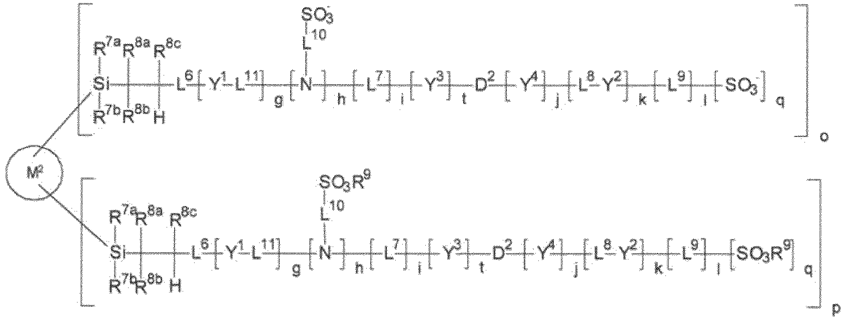 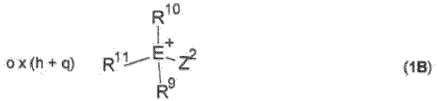 wobei 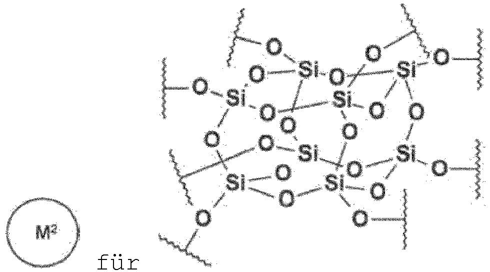
steht,
o für 1, 2, 3, 4, 5, 6, 7 oder 8 steht,
p für 8-o steht,
g für 0 oder 1 steht,
h für 0 oder 1 steht,
i für 0 oder 1 steht,
t für 0 oder 1 steht,
j für 0 oder 1 steht,
k für 0 oder 1 steht,
l für 0 oder 1 steht,
q für 0 oder 1 steht,
mit der Maßgabe, dass mindestens h oder q für 1 steht, und mit der Maßgabe, dass dann, wenn q für 0 steht, j, k und l ebenfalls für 0 stehen,
R^{7a} und R^{7b} unabhängig voneinander für C₁₋₄-Alkyl stehen,
R^{8a}, R^{8b} und R^{8c} unabhängig voneinander für Wasserstoff oder C₁₋₄-Alkyl stehen,
L⁶ für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen steht, wobei L⁶ durch einen oder mehrere Substituenten, die aus der Gruppe bestehend aus Halogen, OC₁₋₆-Alkyl, NO₂ und OH ausgewählt sind, substituiert sein kann,
Y¹, Y², Y³ und Y⁴ unabhängig voneinander für NR⁵¹, 0, S, C(O) oder C(0)0 stehen, wobei R⁵¹ für C₁₋₂₀-Alkyl steht,
L⁷, L⁸, L⁹, L¹⁰ und L¹¹ unabhängig voneinander für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen stehen, wobei L⁷, L⁸, L⁹, L¹⁰ und L¹¹ durch einen oder mehrere Substituenten, die aus der Gruppe bestehend aus Halogen, OC₁₋₆-Alkyl, NO₂ und OH ausgewählt sind, substituiert sein können,
D² für eine chromophore Gruppierung, die durch ein oder mehrere R⁵² substituiert sein kann, steht, wobei die Reste R⁵² unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt sind,
R⁹ für C₁₋₁₀-Alkyl steht,
R¹⁰ und R¹¹ unabhängig voneinander für C₁₋₂₀-Alkyl, das durch einen oder mehrere Substituenten, die aus der Gruppe bestehend aus C₆₋₁₄-Aryl, OC₁₋₆-Alkyl und NO₂ ausgewählt sind, substituiert sein kann, stehen,
E für N oder P steht und
Z² für C₁₋₁₀₀-Alkyl, in dem eine oder mehrere Methylengruppen durch -SiR¹⁰²R¹⁰³-, -SiR¹⁰²R¹⁰³O-, -O-oder -S- ersetzt sind, steht, mit der Maßgabe, dass -SiR¹⁰²R¹⁰³-, -SiR¹⁰²R¹⁰³O-, -0- oder -S- nicht direkt an E gebunden sind, wobei R¹⁰² und R¹⁰³ unabhängig voneinander für C₁₋₆-Alkyl stehen.

2. Verbindungen der Formel **(1A)** nach Anspruch 1, wobei
R⁶ für C₁₋₁₀-Alkyl, das durch Phenyl substituiert sein kann, steht; oder
Verbindungen der Formel **(1B)** nach Anspruch 1, wobei
R⁹ für C₁₋₆-Alkyl, vorzugsweise Methyl, steht.

3. Verbindungen der Formel **(1A)** nach Anspruch 1 oder 2, wobei
R^{1a} und R^{1b} für Methyl stehen und
R^{2a}, R^{2b} und R^{2c} für Wasserstoff stehen,
oder
Verbindungen der Formel **(1B)** nach Anspruch 1 oder 2, wobei
R^{7a} und R^{7b} für Methyl stehen und
R^{8a}, R^{8b} und R^{8c} für Wasserstoff stehen.

4. Verbindungen der Formel **(1A)** nach einem der Ansprüche 1, 2 oder 3, wobei
L¹ für C₁₋₁₀-Alkylen oder Phenylen steht, X¹, X², X³ und X⁴ unabhängig voneinander für 0 oder S stehen,
L², L³, L⁴ und L⁵ unabhängig voneinander für C₁₋₂₀-Alkylen oder C₁₋₂₀-Alkylen-phenylen oder Phenylen stehen
und
R³, R⁴ und R⁵ unabhängig voneinander für C₁₋₁₀-Alkyl, das durch Phenyl substituiert sein kann, stehen oder
R⁴ und R⁵ zusammen mit dem N, das an beide davon gebunden ist, einen 6-gliedrigen Ring, der auch 0 oder S enthalten kann, bilden; oder
Verbindungen der Formel **(1B)** nach Anspruch 1 oder 2, wobei
L⁶ für C₁₋₁₀-Alkylen oder Phenylen steht, Y¹, Y², Y³ und Y⁴ unabhängig voneinander für 0 oder NR⁵¹ stehen, wobei R⁵¹ für C₁₋₆-Alkyl steht, und
L⁷, L⁸, L⁹, L¹⁰ und L¹¹ unabhängig voneinander für C₁₋₂₀-Alkylen oder C₁₋₂₀-Alkylen-phenylen oder Phenylen stehen.

5. Verbindungen der Formel **(1A)** nach einem der Ansprüche 1 bis 4, wobei
L¹ für C₁₋₁₀-Alkylen steht,
X¹, X², X³ und X⁴ für 0 stehen,
L², L³, L⁴ und L⁵ unabhängig voneinander für C₁₋₁₀-Alkylen oder C₁₋₁₀-Alkylen-phenylen stehen
und
R³, R⁴ und R⁵ unabhängig voneinander für C₁₋₆-Alkyl oder Benzyl stehen oder
R⁴ und R⁵ zusammen mit dem N, das an beide davon gebunden ist, 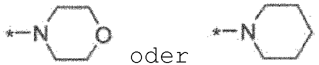 bilden; oder
Verbindungen der Formel **(1B)** nach einem der Ansprüche 1 bis 4, wobei
L⁶ für C₁₋₁₀-Alkylen oder Phenylen steht, Y¹, Y², Y³ und Y⁴ unabhängig voneinander für 0 oder NR⁵¹ stehen, wobei R⁵¹ für Methyl steht, und
L⁷, L⁸, L⁹, L¹⁰ und L¹¹ unabhängig voneinander für C₁₋₁₀-Alkylen oder C₁₋₁₀-Alkylen-phenylen stehen.

6. Verbindungen der Formel **(1A)** nach einem der Ansprüche 1 bis 5, wobei
D1 folgende Formel aufweist: 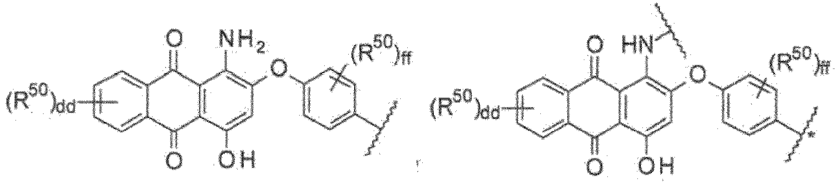 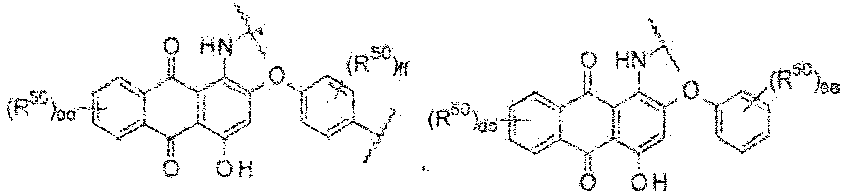 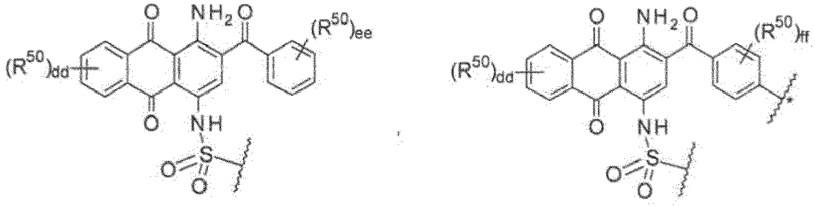 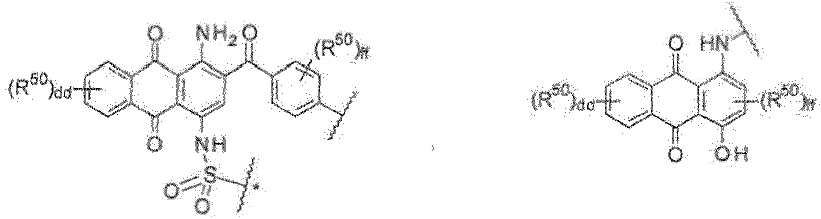 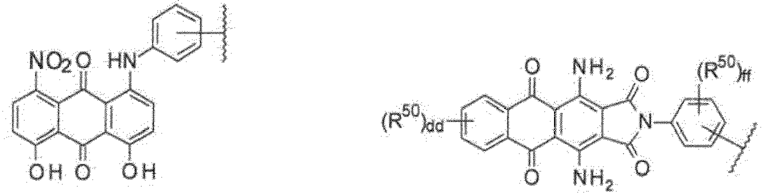 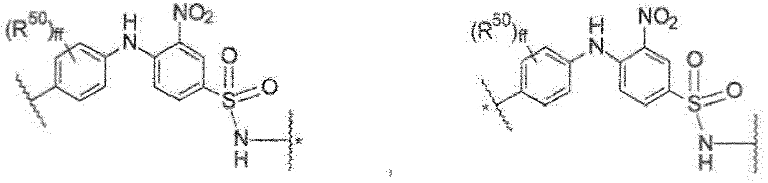 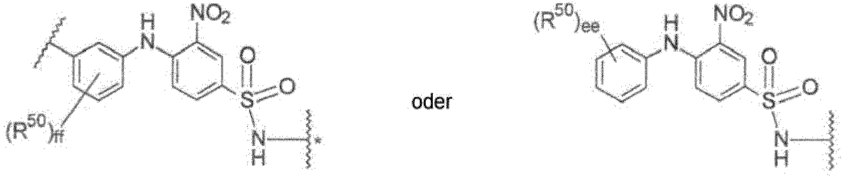 wobei
die mit * markierte Bindung an 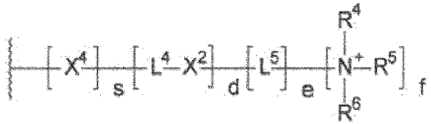 oder 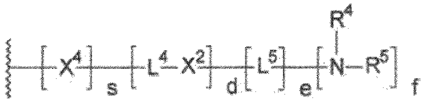 gebunden ist,
dd für eine ganze Zahl von 0 bis 3 steht,
ee für eine ganze Zahl von 0 bis 2 steht,
ff für eine ganze Zahl von 0 bis 1 steht und
R⁵⁰ unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt ist; oder
Verbindungen der Formel **(1B)** nach einem der Ansprüche 1 bis 5, wobei
D2 folgende Formel aufweist: 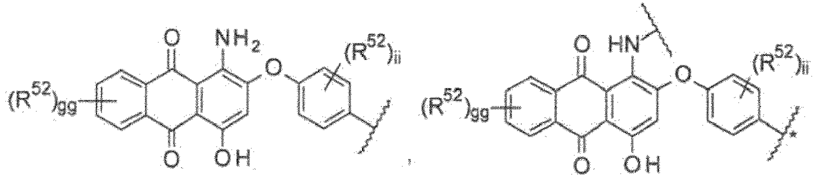 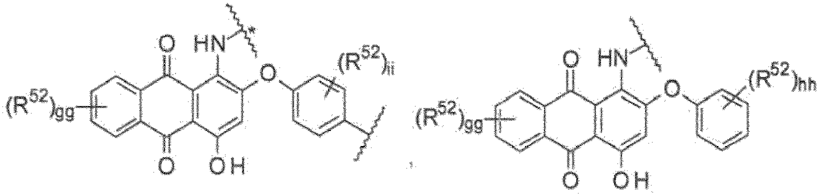 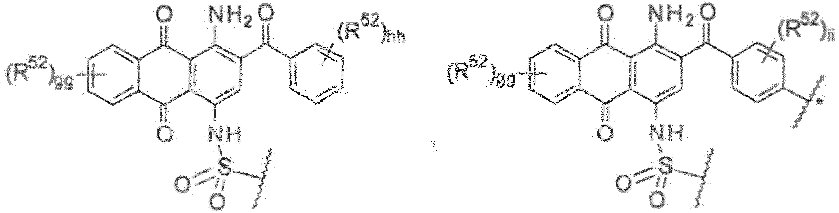 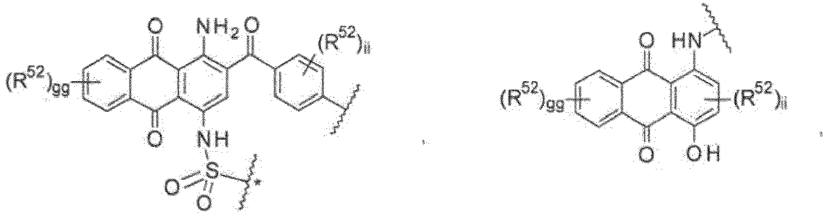 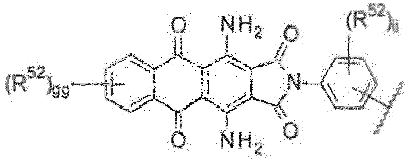 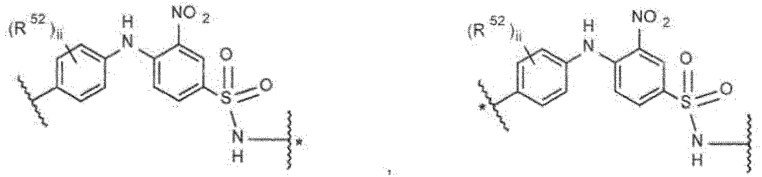 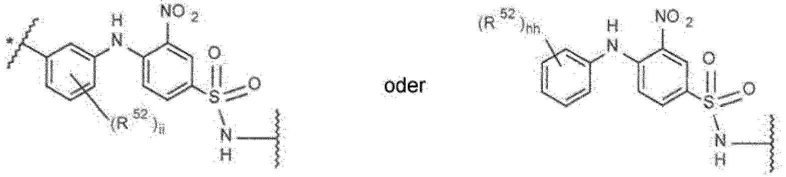 wobei
die mit * markierte Bindung an 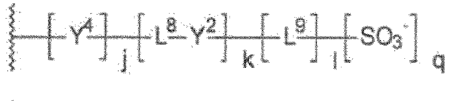 oder 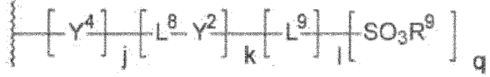 gebunden ist,
gg für eine ganze Zahl von 0 bis 3 steht,
hh für eine ganze Zahl von 0 bis 2 steht,
ii für eine ganze Zahl von 0 bis 1 steht und
R⁵² unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt ist.

7. Verbindungen der Formel **(1A)** nach einem der Ansprüche 1 bis 6, wobei
D1 folgende Formel aufweist: 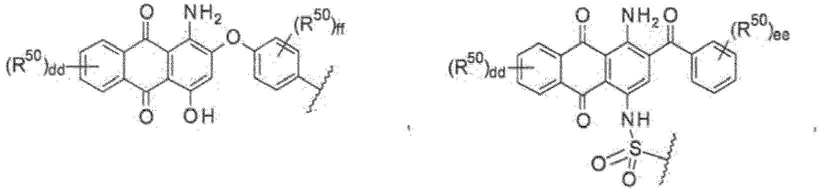 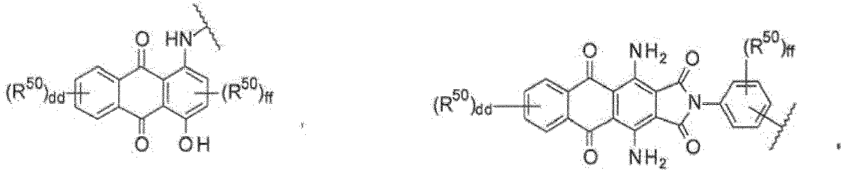 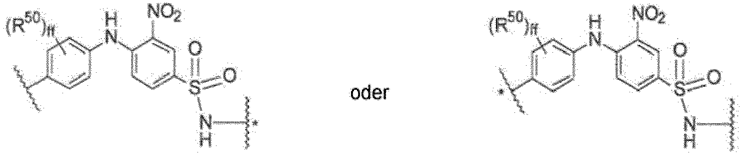 wobei
die mit ** markierte Bindung an 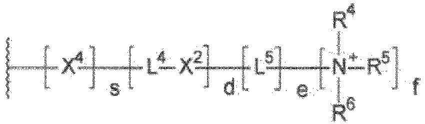 oder 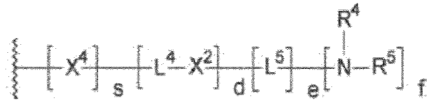 gebunden ist,
dd für eine ganze Zahl von 0 bis 3 steht,
ee für eine ganze Zahl von 0 bis 2 steht,
ff für eine ganze Zahl von 0 bis 1 steht und
R⁵⁰ unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt ist; oder
Verbindungen der Formel **(1B)** nach einem der Ansprüche 1 bis 6, wobei
D2 folgende Formel aufweist: 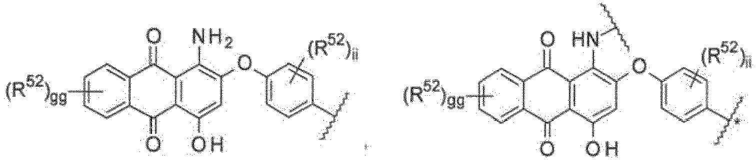 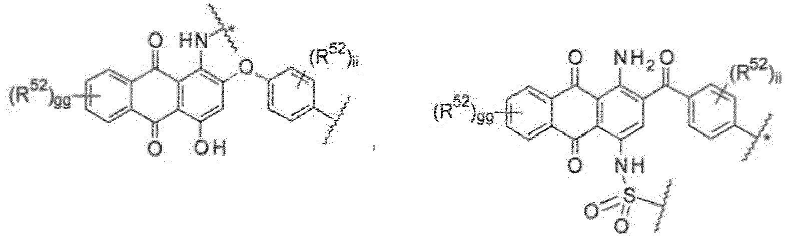 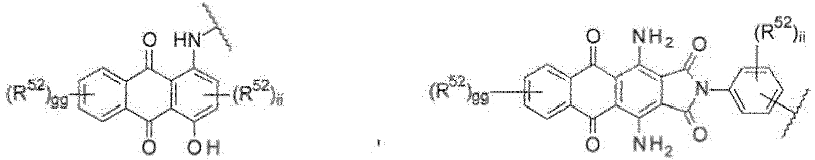 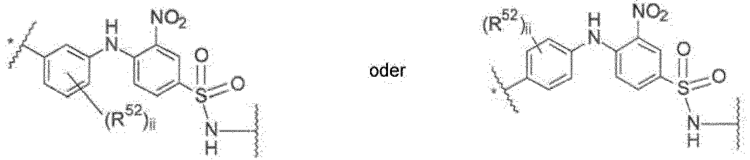 wobei
die mit * markierte Bindung an 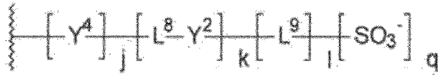 oder 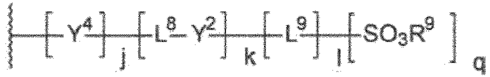 gebunden ist,
gg für eine ganze Zahl von 0 bis 3 steht,
hh für eine ganze Zahl von 0 bis 2 steht,
ii für eine ganze Zahl von 0 bis 1 steht und
R⁵² unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt ist.

8. Verbindungen der Formel **(1A)** nach einem der Ansprüche 1 bis 7, wobei
D1 folgende Formel aufweist: 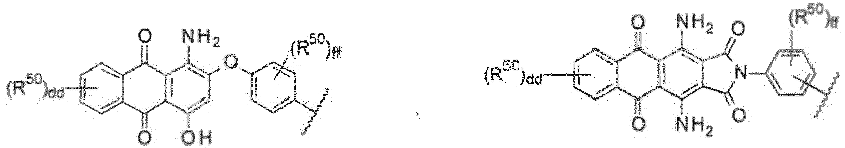 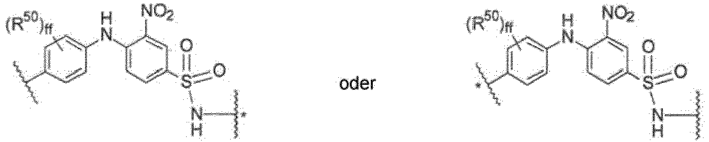 wobei
die mit * markierte Bindung an 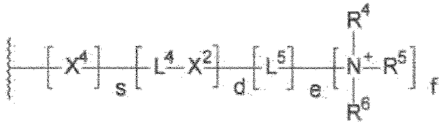 oder 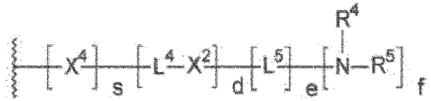 gebunden ist,
dd für eine ganze Zahl von 0 bis 3 steht,
ee für eine ganze Zahl von 0 bis 2 steht,
ff für eine ganze Zahl von 0 bis 1 steht und
R⁵⁰ unabhängig voneinander aus der Gruppe bestehend aus C₁₋₆-Alkyl, OH, NH₂ und NO₂ ausgewählt ist; oder
Verbindungen der Formel **(1B)** nach einem der Ansprüche 1 bis 7, wobei
D2 folgende Formel aufweist: 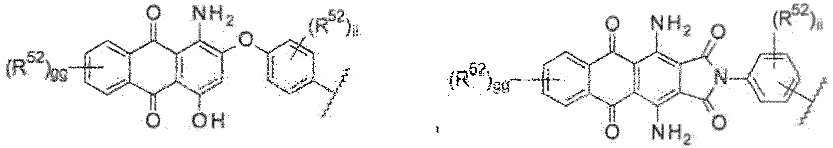 oder 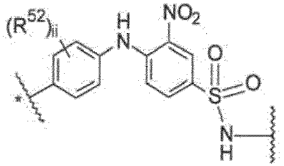 wobei
die mit * markierte Bindung an 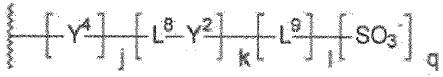 oder 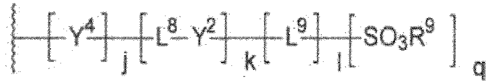 gebunden ist,
gg für eine ganze Zahl von 0 bis 3 steht,
hh für eine ganze Zahl von 0 bis 2 steht,
ii für eine ganze Zahl von 0 bis 1 steht und
R⁵² unabhängig voneinander aus der Gruppe bestehend aus C₁₋₆-Alkyl, OH, NH₂ und NO₂ ausgewählt ist.

9. Verbindungen der Formel **(1A)** nach einem der Ansprüche 1 bis 8, wobei
Z¹ für C₁₋₅₀-Alkyl, in dem eine oder mehrere Methylengruppen durch -SiR¹⁰⁰R¹⁰¹-, -SiR¹⁰⁰R¹⁰¹O-, -O-oder -S- ersetzt sind, steht, mit der Maßgabe, dass -SiR¹⁰⁰R¹⁰¹-, -SiR¹⁰⁰R¹⁰¹O-, -0- oder -S- nicht direkt an das S von 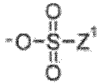 gebunden sind,
wobei R¹⁰⁰ und R¹⁰¹ unabhängig voneinander für C₂₋₆-Alkyl stehen; oder
Verbindungen der Formel **(1B)** nach einem der Ansprüche 1 bis 8, wobei
R¹⁰ und R¹¹ unabhängig voneinander für C₁₋₆-Alkyl, das durch Phenyl substituiert sein kann, stehen,
E für N steht und
Z² für C₁₋₅₀-Alkyl, in dem eine oder mehrere Methylengruppen durch -SiR¹⁰²R¹⁰³-, -SiR¹⁰²R¹⁰³O-, -O-oder -S- ersetzt sind, steht, mit der Maßgabe, dass -SiR¹⁰²R¹⁰³-, -SiR¹⁰²R¹⁰³O-, -0- oder -S- nicht direkt an E gebunden sind, wobei R¹⁰² und R¹⁰³ unabhängig voneinander für C₁₋₆-Alkyl stehen.

10. Verbindungen der Formel **(1A)** nach einem der Ansprüche 1 bis 9, wobei
Z¹ für 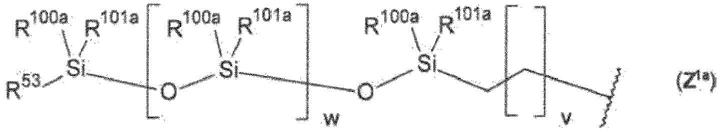 steht, wobei
R⁵³ für C₁₋₁₀-Alkyl steht,
R^{100a} und R^{101a} unabhängig voneinander für C₁₋₆-Alkyl stehen,
v für eine ganze Zahl von 1 bis 12 steht,
w für eine ganze Zahl von 2 bis 25 steht; oder Verbindungen der Formel **(1B)** nach einem der Ansprüche 1 bis 9, wobei
R¹⁰ und R¹¹ unabhängig voneinander für C₁₋₆-Alkyl, das durch Phenyl substituiert sein kann, stehen,
E für N steht und
Z² für 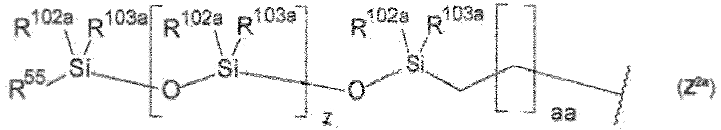 steht, wobei
R⁵⁵ für C₁₋₁₀-Alkyl steht,
R^{102a} und R^{103a} unabhängig voneinander für C₁₋₆-Alkyl stehen,
aa für eine ganze Zahl von 1 bis 12 steht,
z für eine ganze Zahl von 2 bis 25 steht.

11. Verbindungen der Formel **(1A)** nach einem der Ansprüche 1 bis 10, wobei
Z¹ für 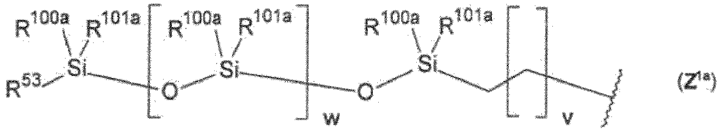 steht, wobei
R⁵³ für C₁₋₆-Alkyl steht,
R^{100a} und R^{101a} für Methyl stehen,
v für eine ganze Zahl von 2 bis 6 steht,
w für eine ganze Zahl von 5 bis 20 steht; oder Verbindungen der Formel **(1B)** nach einem der Ansprüche 1 bis 10, wobei
R¹⁰ und R¹¹ unabhängig voneinander für C₁₋₆-Alkyl oder Benzyl stehen,
E für N steht und
Z² für 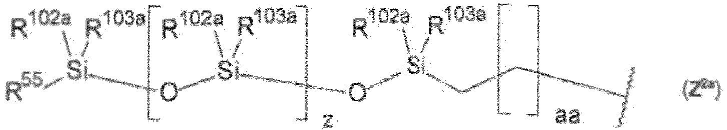 steht, wobei
R⁵⁵ für C₁₋₆-Alkyl steht,
R^{102a} und R^{103a} für Methyl stehen,
aa für eine ganze Zahl von 2 bis 10 steht,
z für eine ganze Zahl von 5 bis 20 steht.

12. Verbindungen der Formel **(1A)** nach einem der Ansprüche 1 bis 8, wobei
Z¹ für 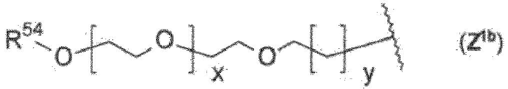 steht, wobei
R⁵⁴ für C₁₋₁₀-Alkyl steht,
x für eine ganze Zahl von 5 bis 25 steht und
y für eine ganze Zahl von 1 bis 5 steht; oder
Verbindungen der Formel **(1B)** nach einem der Ansprüche 1 bis 8, wobei
R¹⁰ und R¹¹ unabhängig voneinander für C₁₋₆-Alkyl, das durch Phenyl substituiert sein kann, stehen,
E für N steht und
Z² für 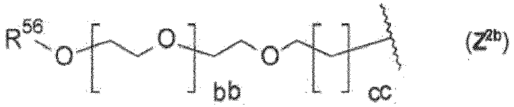 steht, wobei
R⁵⁶ für C₁₋₁₀-Alkyl steht,
bb vorzugsweise für eine ganze Zahl von 5 bis 25 steht und
cc für eine ganze Zahl von 1 bis 5 steht.

13. Verbindungen der Formel **(1A)** nach einem der Ansprüche 1 bis 12, wobei
s für 0 steht,
d für 0 steht, oder
Verbindungen der Formel **(1B)** nach einem der Ansprüche 1 bis 12, wobei
g für 0 steht und
k für 0 steht.

14. Verbindungen der Formel **(1A)** nach einem der Ansprüche 1 bis 13, wobei
a für 0 steht und
r für 0 steht.

15. Verbindungen der Formel **(1A)** nach einem der Ansprüche 1 bis 14,
mit der zusätzlichen Maßgabe, dass dann, wenn b für 1 steht, f für 0 steht, oder dann, wenn f für 1 steht, b für 0 steht; oder
Verbindungen der Formel **(1B)** nach einem der Ansprüche 1 bis 14,
mit der zusätzlichen Maßgabe, dass dann, wenn h für 1 steht, q für 0 steht, und dann, wenn q für 1 steht, h für 0 steht.

16. Verbindungen der Formel **(1A)** nach einem der Ansprüche 1 bis 15, wobei
n für 1, 2, 3, 4, 5, 6 oder 7 steht,
m für 8-n steht.

17. Verfahren zur Herstellung der Verbindungen der Formel **(1A)** nach Anspruch 1, bei dem man eine Verbindung der Formel 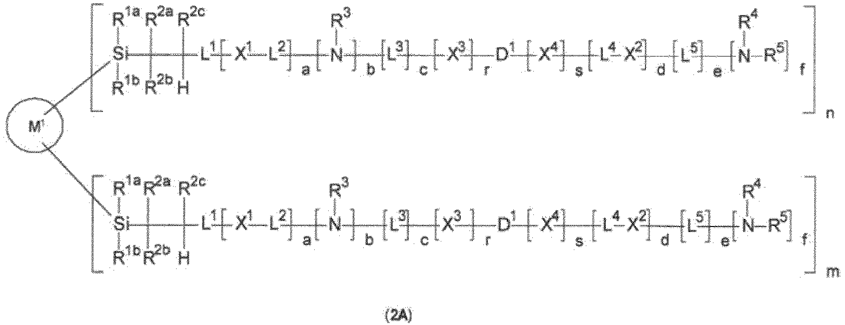 wobei 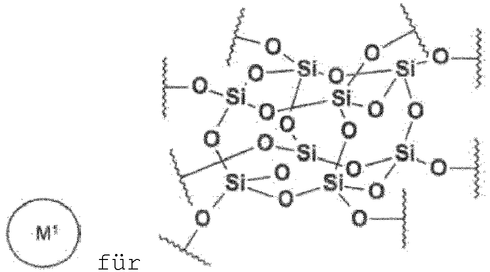
steht,
n für 1, 2, 3, 4, 5, 6, 7 oder 8 steht,
m für 8-n steht,
a für 0 oder 1 steht,
b für 0 oder 1 steht,
c für 0 oder 1 steht,
r für 0 oder 1 steht,
s für 0 oder 1 steht,
d für 0 oder 1 steht,
e für 0 oder 1 steht,
f für 0 oder 1 steht,
mit der Maßgabe, dass mindestens b oder f für 1 steht, und mit der Maßgabe, dass dann, wenn f für 0 steht, s, d und e ebenfalls für 0 stehen,
R^{1a} und R^{1b} unabhängig voneinander für C₁₋₄-Alkyl stehen,
R^{2a}, R^{2b} und R^{2c} unabhängig voneinander für Wasserstoff oder C₁₋₄-Alkyl stehen,
L¹ für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen steht, wobei L¹ durch einen oder mehrere Substituenten, die aus der Gruppe bestehend aus Halogen, OC₁₋₆-Alkyl, NO₂ und OH ausgewählt sind, substituiert sein kann, X¹, X², X³ und X⁴ unabhängig voneinander für 0, S, C(O) oder C(O)O stehen,
L², L³, L⁴ und L⁵ unabhängig voneinander für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen stehen, wobei L², L³, L⁴ und L⁵ durch einen oder mehrere Substituenten, die aus der Gruppe bestehend aus Halogen, OC₁₋₆-Alkyl, NO₂ und OH ausgewählt sind, substituiert sein können,
R³, R⁴ und R⁵ unabhängig voneinander für C₁₋₂₀-Alkyl, das durch einen Substituenten, der aus der Gruppe bestehend aus C₆₋₁₄-Aryl, OC₁₋₆-Alkyl und NO₂ ausgewählt ist, substituiert sein kann, stehen oder
R⁴ und R⁵ zusammen mit dem N, das an beide davon gebunden ist, einen 5-, 6- oder 7-gliedrigen Ring, der auch 0 oder S enthalten kann, bilden
und
D¹ für eine chromophore Gruppierung, die durch ein oder mehrere R⁵⁰ substituiert sein kann, steht, wobei die Reste R⁵⁰ unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt sind,
mit einer Verbindung der Formel 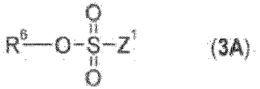 wobei
R⁶ für C₁₋₂₀-Alkyl, das durch einen Substituenten, der aus der Gruppe bestehend aus C₆₋₁₄-Aryl, OC₁₋₆-Alkyl und NO₂ ausgewählt ist, substituiert sein kann, steht,
Z¹ für C₁₋₁₀₀-Alkyl, in dem eine oder mehrere Methylengruppen durch -SiR¹⁰⁰R¹⁰¹-, -SiR¹⁰⁰R¹⁰¹O-, -O-oder -S- ersetzt sind, steht, mit der Maßgabe, dass -SiR¹⁰⁰R¹⁰¹-, -SiR¹⁰⁰R¹⁰¹O-, -0- oder -S- nicht direkt an das S von 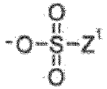 gebunden ist,
wobei R¹⁰⁰ und R¹⁰¹ unabhängig voneinander für C₁₋₆-Alkyl stehen,
umsetzt.

18. Verfahren zur Herstellung der Verbindungen der Formel **(1B)** nach Anspruch 1, bei dem man eine Verbindung der Formel 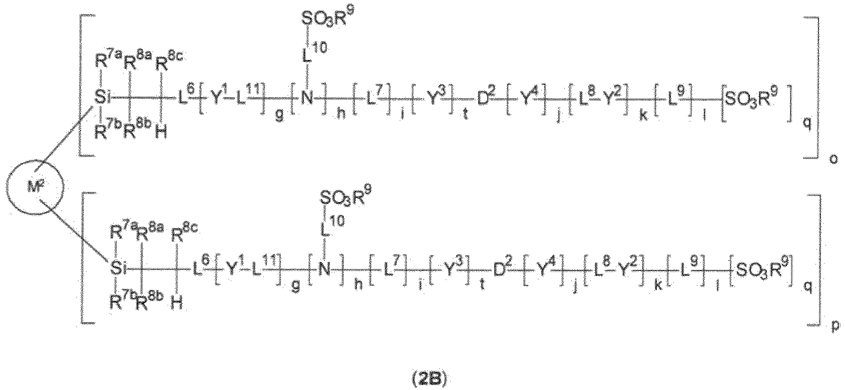 wobei 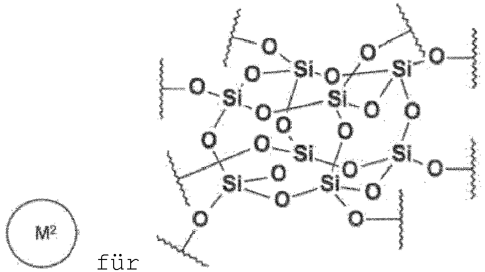
steht,
o für 1, 2, 3, 4, 5, 6, 7 oder 8 steht,
p für 8-o steht,
g für 0 oder 1 steht,
h für 0 oder 1 steht,
i für 0 oder 1 steht,
t für 0 oder 1 steht,
j für 0 oder 1 steht,
k für 0 oder 1 steht,
l für 0 oder 1 steht,
q für 0 oder 1 steht,
mit der Maßgabe, dass mindestens h oder q für 1 steht, und mit der Maßgabe, dass dann, wenn q für 0 steht, j, k und l ebenfalls für 0 stehen,
R^{7a} und R^{7b} unabhängig voneinander für C₁₋₄-Alkyl stehen,
R^{8a}, R^{8b} und R^{8c} unabhängig voneinander für Wasserstoff oder C₁₋₄-Alkyl stehen,
L⁶ für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen steht, wobei L⁶ durch einen oder mehrere Substituenten, die aus der Gruppe bestehend aus Halogen, OC₁₋₆-Alkyl, NO₂ und OH ausgewählt sind, substituiert sein kann,
Y¹, Y², Y³ und Y⁴ unabhängig voneinander für NR⁵¹, 0, S, C(O) oder C(0)0 stehen, wobei R⁵¹ für C₁₋₂₀-Alkyl steht,
L⁷, L⁸, L⁹, L¹⁰ und L¹¹ unabhängig voneinander für C₁₋₂₀-Alkylen, C₁₋₂₀-Alkylen-phenylen, C₁₋₂₀-Alkylen-C₅₋₈-cycloalkylen, Phenylen oder C₅₋₈-Cycloalkylen stehen, wobei L⁷, L⁸, L⁹, L¹⁰ und L¹¹ durch einen oder mehrere Substituenten, die aus der Gruppe bestehend aus Halogen, OC₁₋₆-Alkyl, NO₂ und OH ausgewählt sind, substituiert sein können,
R⁹ für C₁₋₁₀-Alkyl steht und
D² für eine chromophore Gruppierung, die durch ein oder mehrere R⁵² substituiert sein kann, steht, wobei die Reste R⁵² unabhängig voneinander aus der Gruppe bestehend aus C₁₋₂₀-Alkyl, C₆₋₁₄-Aryl, Halogen, OC₁₋₆-Alkyl, OH, NH₂ und NO₂ ausgewählt sind,
mit einer Verbindung der Formel 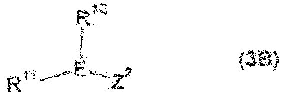 wobei
R¹⁰ und R¹¹ unabhängig voneinander für C₁₋₂₀-Alkyl, das durch einen oder mehrere Substituenten, die aus der Gruppe bestehend aus C₆₋₁₄-Aryl, OC₁₋₆-Alkyl und NO₂ ausgewählt sind, substituiert sein kann, stehen,
E für N oder P steht,
Z² für C₁₋₁₀₀-Alkyl, in dem eine oder mehrere Methylengruppen durch -SiR¹⁰²R¹⁰³-, -SiR¹⁰²R¹⁰³O-, -O-oder -S- ersetzt sind, steht, mit der Maßgabe, dass -SiR¹⁰²R¹⁰³-, -SiR¹⁰²R¹⁰³O-, -0- oder -S- nicht direkt an E gebunden sind, wobei R¹⁰² und R¹⁰³ unabhängig voneinander für C₁₋₆-Alkyl stehen,
umsetzt.

19. Verwendung der Verbindungen der Formeln **(1A)** oder **(1B)** nach einem der Ansprüche 1 bis 16 als geladene farbige Partikel in elektrophoretischen Vorrichtungen.

20. Elektrophoretische Vorrichtungen, umfassend die Verbindungen der Formeln **(1A)** oder **(1B)** nach einem der Ansprüche 1 bis 16.

21. Verwendung nach Anspruch 19 oder elektrophoretische Vorrichtung nach Anspruch 20, wobei es sich bei der elektrophoretischen Vorrichtung um eine elektrophoretische Anzeige, vorzugsweise elektronisches Papier, handelt.

## Revendications

1. Composés de formule 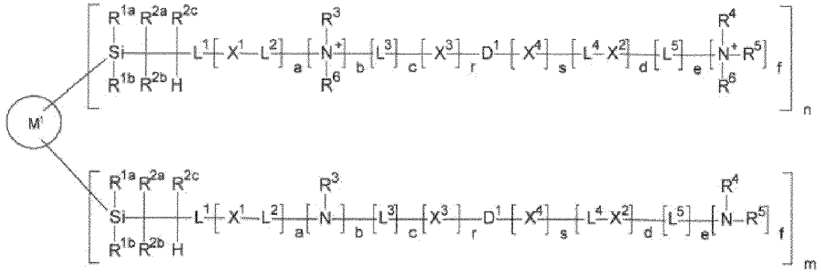 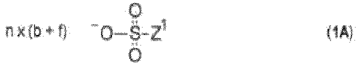 dans laquelle 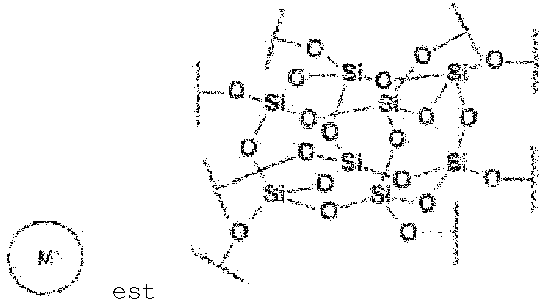
n est 1, 2, 3, 4, 5, 6, 7 ou 8,
m est 8 - n,
a est 0 ou 1,
b est 0 ou 1,
c est 0 ou 1,
r est 0 ou 1,
s est 0 ou 1,
d est 0 ou 1,
e est 0 ou 1,
f est 0 ou 1,
à condition qu'au moins b ou f soit 1, et à condition que si f est 0, alors s, d et e sont également 0,
R^{1a} et R^{1b} sont, indépendamment l'un de l'autre, alkyle en C₁₋₄,
R^{2a}, R^{2b} et R^{2c} sont, indépendamment l'un de l'autre, hydrogène ou alkyle en C₁₋₄,
L¹ est alkylène en C₁₋₂₀, (alkylène en C₁₋₂₀) -phénylène, (alkylène en C₁₋₂₀) - (cycloalkylène en C₅₋₈), phénylène ou cycloalkylène en C₅₋₈, où L¹ peut être substitué par un ou plusieurs substituants choisis dans le groupe constitué d'halogène, 0 (alkyle en C₁₋₆), NO₂ et OH, X¹, X², X³ et X⁴ sont, indépendamment les uns des autres, 0, S, C(O) ou C(0)0,
L², L³, L⁴ et L⁵ sont, indépendamment les uns des autres, alkylène en C₁₋₂₀, (alkylène en C₁₋₂₀) -phénylène, (alkylène en C₁₋₂₀) - (cycloalkylène en C₅₋₈), phénylène ou cycloalkylène en C₅₋₈, où L², L³, L⁴ et L⁵ peuvent être substitués par un ou plusieurs substituants choisis dans le groupe constitué d'halogène, O(alkyle en C₁₋₆), NO₂ et OH,
R³, R⁴ et R⁵ sont, indépendamment les uns des autres, alkyle en C₁₋₂₀, qui peut être substitué par un substituant choisi dans le groupe constitué d'aryle en C₆₋₁₄, O(alkyle en C₁₋₆), et NO₂, ou
R⁴ et R⁵ conjointement avec le N lié à ces groupes forment un cycle de 5, 6 ou 7 chaînons, qui peut comprendre en outre 0 ou S,
R⁶ est alkyle en C₁₋₂₀, qui peut être substitué par un substituant choisi dans le groupe constitué d'aryle en C₆₋₁₄, 0 (alkyle en C₁₋₆), et NO₂,
D¹ est un fragment chromophore, qui peut être substitué par un ou plusieurs R⁵⁰, où R⁵⁰ sont, indépendamment les uns des autres, choisis dans le groupe constitué d'alkyle en C₁₋₂₀, aryle en C₆₋₁₄, halogène, O(alkyle en C₁₋₆), OH, NH₂ et NO₂, et
Z¹ est alkyle en C₁₋₁₀₀, dans lequel un ou plusieurs groupes méthylène sont remplacés par -SiR¹⁰⁰R¹⁰¹-, -SiR¹⁰⁰R¹⁰¹O-, -O-ou -S-, à condition que -SiR¹⁰⁰R¹⁰¹-, -SiR¹⁰⁰R¹⁰¹O-, -O-ou -S- ne soit pas directement lié au S de 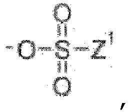
où R¹⁰⁰ et R¹⁰¹ sont, indépendamment l'un de l'autre, alkyle en C₁₋₆,
ou de formule 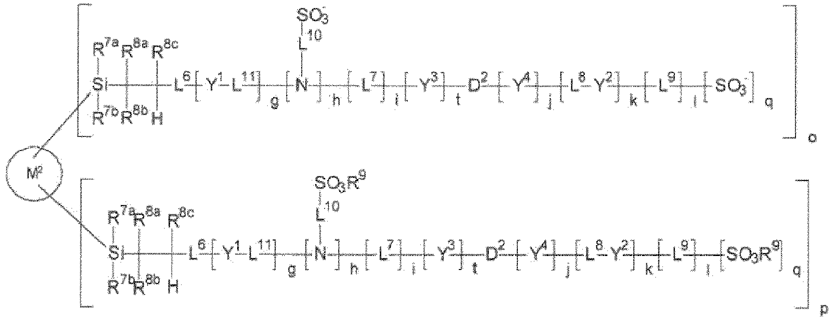 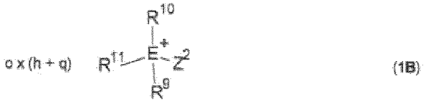 dans laquelle 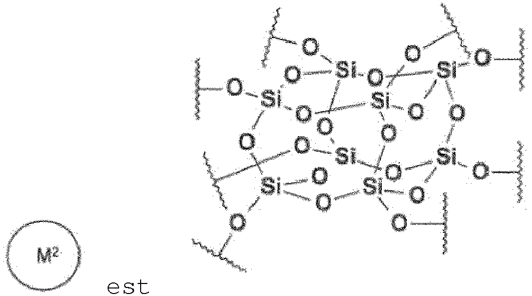
o est 1, 2, 3, 4, 5, 6, 7 ou 8,
p est 8 - o,
g est 0 ou 1,
h est 0 ou 1,
i est 0 ou 1,
t est 0 ou 1,
j est 0 ou 1,
k est 0 ou 1,
l est 0 ou 1,
q est 0 ou 1
à condition qu'au moins h ou q est 1, et à condition que si q est 0, alors j, k et l sont également 0,
R^{7a} et R^{7b} sont, indépendamment l'un de l'autre, alkyle en C₁₋₄,
R^{8a}, R^{8b} et R^{8c} sont, indépendamment les uns des autres, hydrogène ou alkyle en C₁₋₄,
L⁶ est alkylène en C₁₋₂₀, (alkylène en C₁₋₂₀)-phénylène, (alkylène en C₁₋₂₀)-(cycloalkylène en C₅₋₈), phénylène ou cycloalkylène en C₅₋₈, où L⁶ peut être substitué par un ou plusieurs substituants choisis dans le groupe constitué d'halogène, O(alkyle en C₁₋₆), NO₂ et OH, Y¹, Y², Y³ et Y⁴ sont, indépendamment les uns des autres, NR⁵¹, O, S, C(O) ou C(O)O, où R⁵¹ est alkyle en C₁₋₂₀, L⁷, L⁸, L⁹, L¹⁰ et L¹¹ sont, indépendamment les uns des autres, alkylène en C₁₋₂₀, (alkylène en C₁₋₂₀) -phénylène ou (alkylène en C₁₋₂₀)-(cycloalkylène en C₅₋₈), phénylène ou cycloalkylène en C₅₋₈, où L⁷, L⁸, L⁹, L¹⁰ et L¹¹ peuvent être substitués par un ou plusieurs substituants choisis dans le groupe constitué d'halogène, O(alkyle en C₁₋₆), NO₂ et OH, de préférence,
D² est un fragment chromophore, qui peut être substitué par un ou plusieurs R⁵², où R⁵² sont, indépendamment les uns des autres, choisis dans le groupe constitué d'alkyle en C₁₋₂₀, aryle en C₆₋₁₄, halogène, O(alkyle en C₁₋₆), OH, NH₂ et NO₂,
R⁹ est alkyle en C₁₋₁₀,
R¹⁰ et R¹¹ sont, indépendamment l'un de l'autre, alkyle en C₁₋₂₀, qui peut être substitué par un ou plusieurs substituants choisis dans le groupe constitué d'aryle en C₆₋₁₄, 0 (alkyle en C₁₋₆), et NO₂,
E est N ou P, et
Z² est alkyle en C₁₋₁₀₀, dans lequel un ou plusieurs groupes méthylène sont remplacés par -SiR¹⁰²R¹⁰³-,
-SiR¹⁰²R¹⁰³O-, -0- ou -S-, à condition que -SiR¹⁰²R¹⁰³-, -SiR¹⁰²R¹⁰³O-, -0- ou -S- ne soit pas directement lié à E, où R¹⁰² et R¹⁰³ sont, indépendamment l'un de l'autre, alkyle en C₁₋₆.

2. Composés de formule (1A) de la revendication 1, dans lesquels
R⁶ est alkyle en C₁₋₁₀, qui peut être substitué par phényle ; ou
composés de formule (1B) de la revendication 1, dans lesquels
R⁹ est alkyle en C₁₋₆, de préférence méthyle.

3. Composés de formule (1A) de la revendication 1 ou 2, dans lesquels
R^{1a} et R^{1b} sont méthyle, et
R^{2a}, R^{2b} et R^{2c} sont hydrogène,
ou
composés de formule (1B) de la revendication 1 ou 2, dans lesquels
R^{7a} et R^{7b} sont méthyle, et
R^{8a}, R^{8b} et R^{8c} sont hydrogène.

4. Composés de formule (1A) de l'une quelconque des revendications 1, 2 ou 3, dans lesquels
L¹ est alkylène en C₁₋₁₀ ou phénylène,
X¹, X², X³ et X⁴ sont, indépendamment les uns des autres, O ou S,
L², L³, L⁴ et L⁵ sont, indépendamment les uns des autres, alkylène en C₁₋₂₀ ou (alkylène en C₁₋₂₀)-phénylène ou phénylène,
et
R³, R⁴ et R⁵ sont, indépendamment les uns des autres, alkyle en C₁₋₁₀, qui peut être substitué par phényle, ou R⁴ et R⁵ conjointement avec le N lié à ces deux groupes forment un cycle de 6 chaînons, qui peut comprendre en outre 0 ou S ; ou
composés de formule (1B) de la revendication 1 ou 2, dans lesquels
L⁶ est alkylène en C₁₋₁₀ ou phénylène,
Y¹, Y², Y³ et Y⁴ sont, indépendamment les uns des autres, O ou NR⁵¹, où R⁵¹ est alkyle en C₁₋₆, et L⁷, L⁸, L⁹, L¹⁰ et L¹¹ sont, indépendamment les uns des autres, alkylène en C₁₋₂₀ ou (alkylène en C₁₋₂₀)-phénylène ou phénylène.

5. Composés de formule (1A) de l'une quelconque des revendications 1 à 4, dans lesquels
L¹ est alkylène en C₁₋₁₀, et
X¹, X², X³ et X⁴ sont 0,
L², L³, L⁴ et L⁵ sont, indépendamment les uns des autres, alkylène en C₁₋₁₀ ou (alkylène en C₁₋₁₀)-phénylène,
et
R³, R⁴ et R⁵ sont, indépendamment les uns des autres, alkyle en C₁₋₆ ou benzyle, ou
R⁴ et R⁵ conjointement avec le N lié à ces deux groupes forment 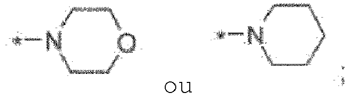 ou
composés de formule (1B) de l'une quelconque des revendications 1 à 4, dans lesquels
L⁶ est alkylène en C₁₋₁₀ ou phénylène,
Y¹, Y², Y³ et Y⁴ sont, indépendamment les uns des autres,
0 ou NR⁵¹, où R⁵¹ est méthyle, et
L⁷, L⁸, L⁹, L¹⁰ et L¹¹ sont, indépendamment les uns des autres, alkylène en C₁₋₁₀ ou (alkylène en C₁₋₁₀)-phénylène.

6. Composés de formule (1A) de l'une quelconque des revendications 1 à 5, dans lesquels
D1 est de formule 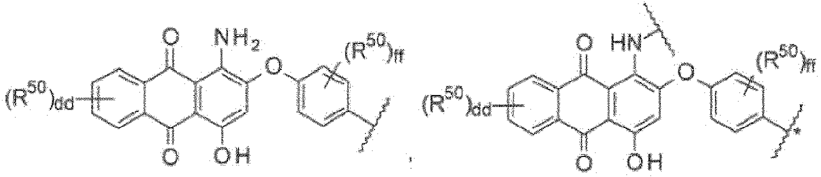 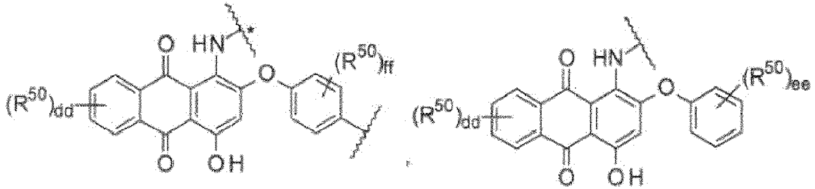 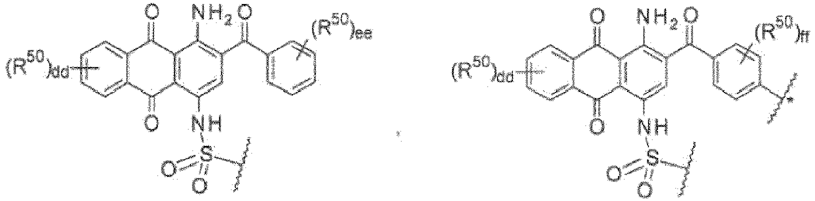 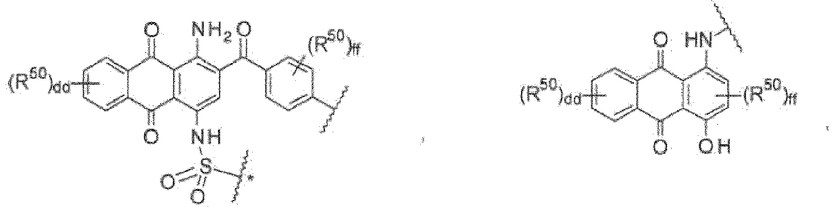 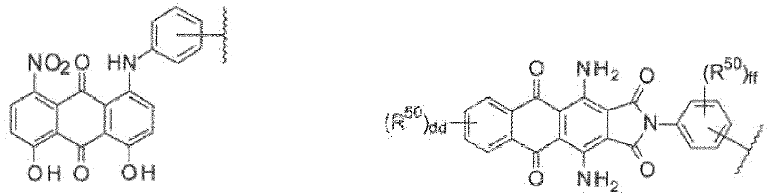 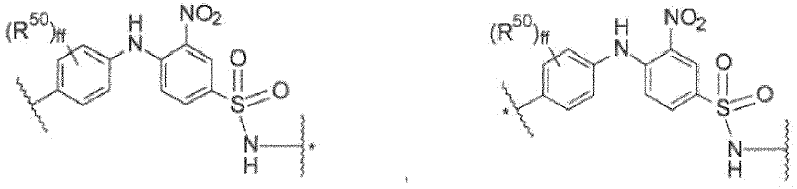 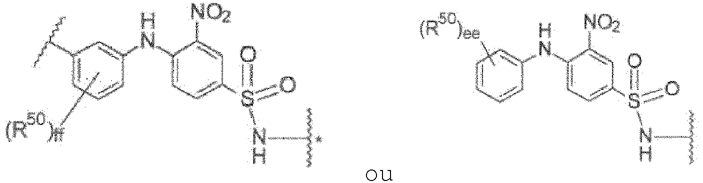 où
la liaison marquée avec * est liée à 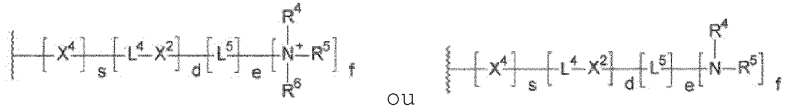
dd est un entier de 0 à 3,
ee est un entier de 0 à 2,
ff est un entier de 0 à 1, et
R⁵⁰ sont, indépendamment les uns des autres, choisis dans le groupe constitué d'alkyle en C₁₋₂₀, aryle en C₆₋₁₄, halogène, O(alkyle en C₁₋₆), OH, NH₂ et NO₂ ; ou composés de formule (1B) de l'une quelconque des revendications 1 à 5, dans lesquels
D2 est de formule 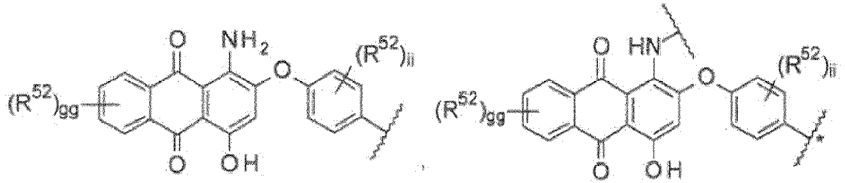 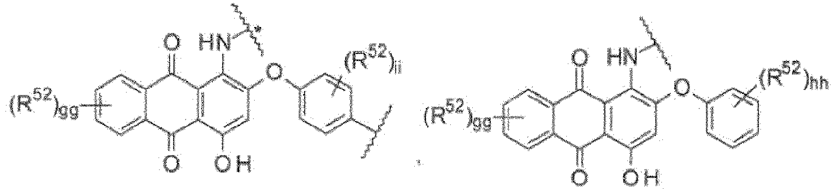 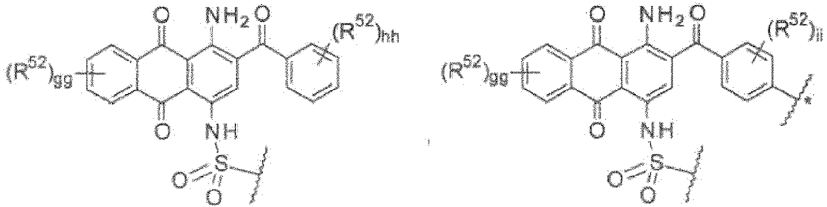 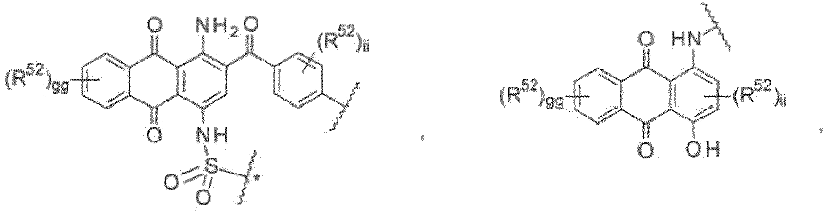 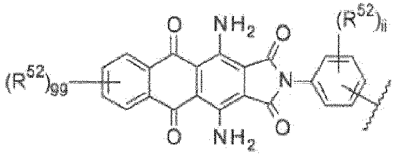 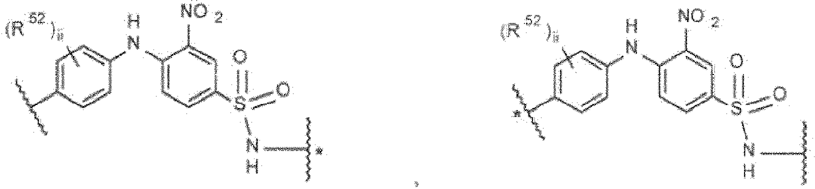 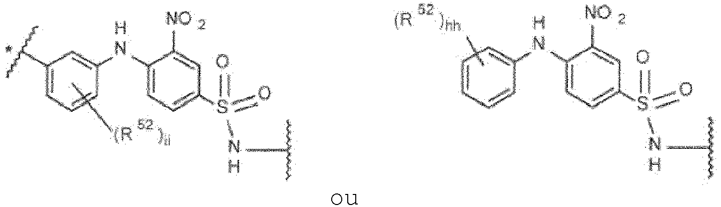
où
la liaison marquée avec * est liée à 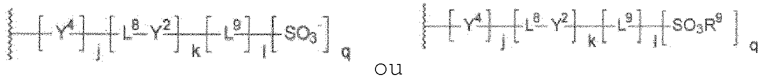
gg est un entier de 0 à 3,
hh est un entier de 0 à 2,
ii est un entier de 0 à 1, et
R⁵² sont, indépendamment les uns des autres, choisis dans le groupe constitué d'alkyle en C₁₋₂₀, aryle en C₆₋₁₄, halogène, O(alkyle en C₁₋₆), OH, NH₂ et NO₂.

7. Composés de formule (1A) de l'une quelconque des revendications 1 à 6, dans lesquels
D1 est de formule 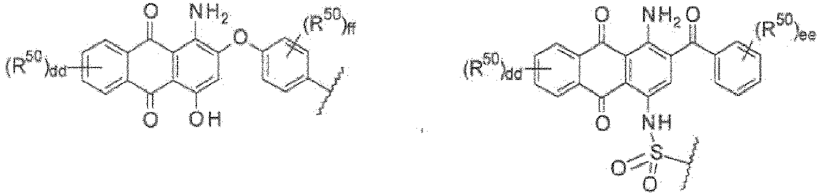 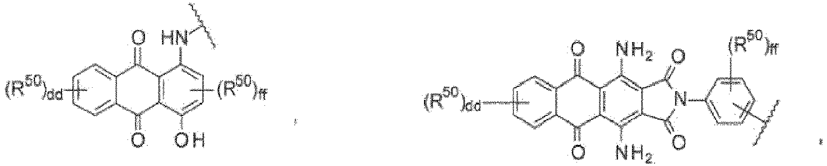 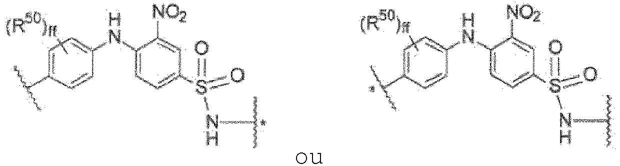 où
la liaison marquée avec * est liée à 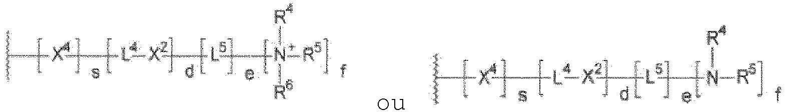
dd est un entier de 0 à 3,
ee est un entier de 0 à 2,
ff est un entier de 0 à 1, et
R⁵⁰ sont, indépendamment les uns des autres, choisis dans le groupe constitué d'alkyle en C₁₋₂₀, aryle en C₆₋₁₄, halogène, O(alkyle en C₁₋₆), OH, NH₂ et NO₂ ; ou composés de formule (1B) de l'une quelconque des revendications 1 à 6, dans lesquels
D2 est de formule 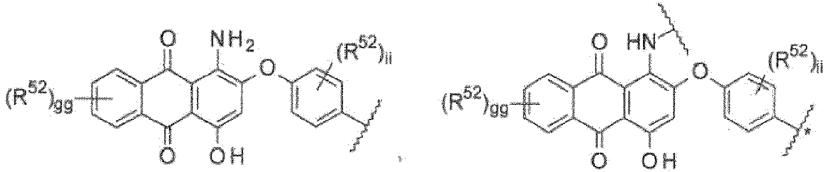 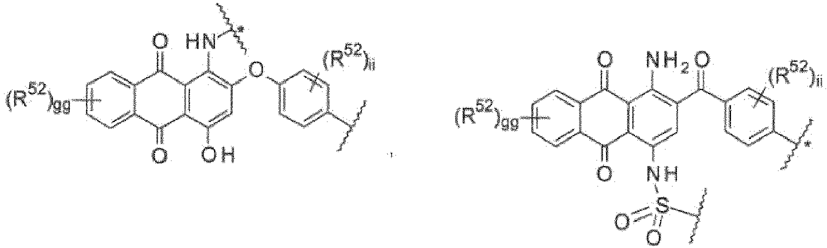 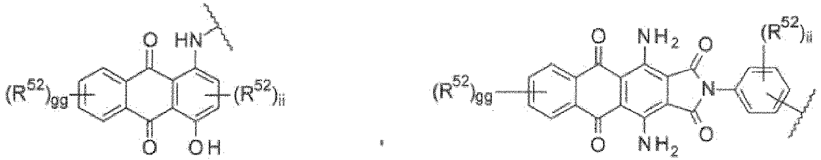 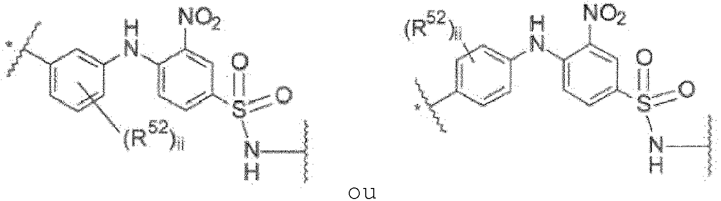 dans lesquels
la liaison marquée avec * est liée à 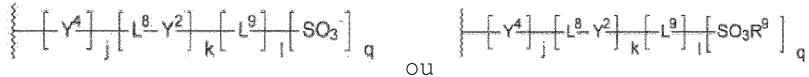
gg est un entier de 0 à 3,
hh est un entier de 0 à 2,
ii est un entier de 0 à 1, et
R⁵² sont, indépendamment les uns des autres, choisis dans le groupe constitué d'alkyle en C₁₋₂₀, aryle en C₆₋₁₄, halogène, O(alkyle en C₁₋₆), OH, NH₂ et NO₂.

8. Composés de formule (1A) de l'une quelconque des revendications 1 à 7, dans lesquels
D1 est de formule 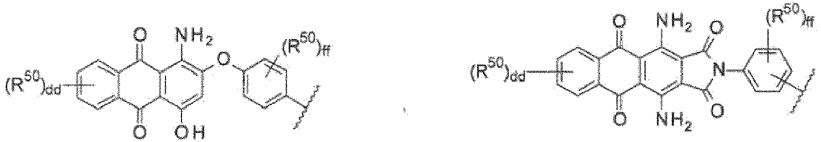 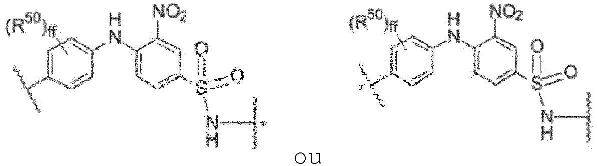 où
la liaison marquée avec * est liée à 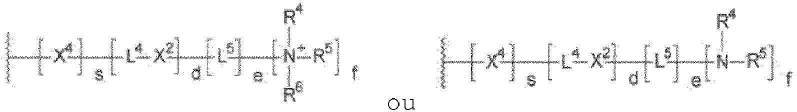
dd est un entier de 0 à 3,
ee est un entier de 0 à 2,
ff est un entier de 0 à 1, et
R⁵⁰ sont, indépendamment les uns des autres, choisis dans le groupe constitué d'alkyle en C₁₋₆, OH, NH₂ et NO₂ ; ou composés de formule (1B) de l'une quelconque des revendications 1 à 7, dans lesquels
D2 est de formule 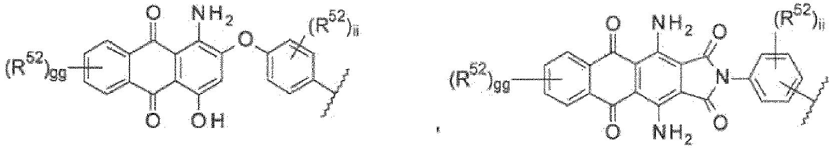 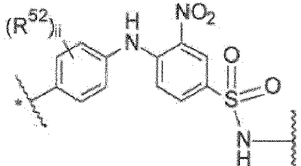 ou
où la liaison marquée avec * est liée à 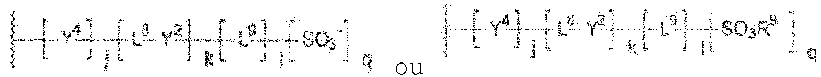
gg est un entier de 0 à 3,
hh est un entier de 0 à 2,
ii est un entier de 0 à 1, et
R⁵² sont, indépendamment les uns des autres, choisis dans le groupe constitué d'alkyle en C₁₋₆, OH, NH₂ et NO₂.

9. Composés de formule (1A) de l'une quelconque des revendications 1 à 8, dans lesquels
Z¹ est alkyle en C₁₋₅₀, dans lequel un ou plusieurs groupes méthylène sont remplacés par -SiR¹⁰⁰R¹⁰¹-, -SiR¹⁰⁰R¹⁰¹O-, -O-ou -S-, à condition que -SiR¹⁰⁰R¹⁰¹-, -SiR¹⁰⁰R¹⁰¹O-, -O-ou -S- ne soit pas directement lié au S de 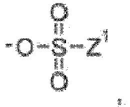 où R¹⁰⁰ et R¹⁰¹ sont, indépendamment l'un de l'autre, alkyle en C₁₋₆ ; ou
composés de formule (1B) de l'une quelconque des revendications 1 à 8, dans lesquels
R¹⁰ et R¹¹ sont, indépendamment l'un de l'autre, alkyle en C₁₋₆, qui peut être substitué par phényle,
E est N, et
Z² est alkyle en C₁₋₅₀, dans lequel un ou plusieurs groupes méthylène sont remplacés par -SiR¹⁰²R¹⁰³-, -SiR¹⁰²R¹⁰³O-, -O-ou -S-, à condition que -SiR¹⁰²R¹⁰³-, -SiR¹⁰²R¹⁰³O-, -O-ou -S- ne soit pas directement lié à E, où R¹⁰² et R¹⁰³ sont, indépendamment l'un de l'autre, alkyle en C₁₋₆.

10. Composés de formule (1A) de l'une quelconque des revendications 1 à 9, dans lesquels
Z¹ est 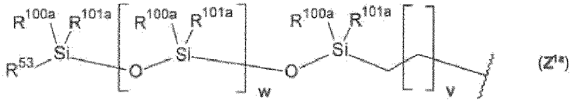 dans lequel
R⁵³ est alkyle en C₁₋₁₀,
R^{100a} et R^{101a} sont, indépendamment l'un de l'autre, alkyle en C₁₋₆,
v est un entier de 1 à 12,
w est un entier de 2 à 25 ; ou
composés de formule (1B) de l'une quelconque des revendications 1 à 9, dans lesquels R¹⁰ et R¹¹ sont, indépendamment l'un de l'autre, alkyle en C₁₋₆, qui peut être substitué par phényle,
E est N, et
Z² est 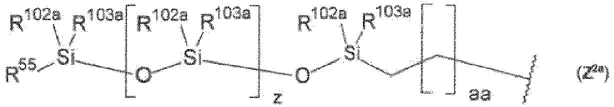 dans lequel
R⁵⁵ est alkyle en C₁₋₁₀,
R^{102a} et R^{103a} sont, indépendamment l'un de l'autre, alkyle en C₁₋₆,
aa est un entier de 1 à 12,
z est un entier de 2 à 25.

11. Composés de formule (1A) de l'une quelconque des revendications 1 à 10, dans lesquels
Z¹ est 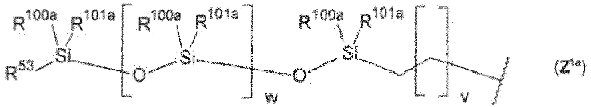 dans lequel
R⁵³ est alkyle en C₁₋₆,
R^{100a} et R^{101a} sont méthyle,
v est un entier de 2 à 6,
w est un entier de 5 à 20 ; ou
composés de formule (1B) de l'une quelconque des revendications 1 à 10, dans lesquels
R¹⁰ et R¹¹ sont, indépendamment l'un de l'autre, alkyle en C₁₋₆ ou benzyle,
E est N, et
Z² est 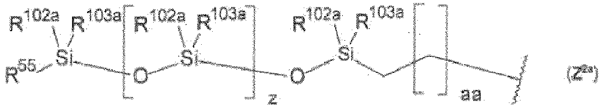 dans lequel
R⁵⁵ est alkyle en C₁₋₆,
R^{102a} et R^{103a} sont méthyle,
aa est un entier de 2 à 10,
z est un entier de 5 à 20.

12. Composés de formule (1A) de l'une quelconque des revendications 1 à 8, dans lesquels
Z¹ est 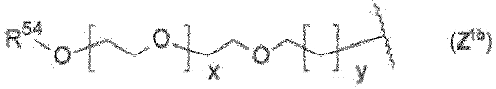 dans lequel
R⁵⁴ est alkyle en C₁₋₁₀,
x est un entier de 5 à 25, et
y est un entier de 1 à 5 ; ou composés de formule (1B) de l'une quelconque des revendications 1 à 8, dans lesquels
R¹⁰ et R¹¹ sont, indépendamment l'un de l'autre, alkyle en C₁₋₆, qui peut être substitué par phényle,
E est N, et
Z² est 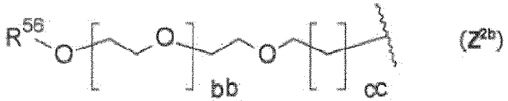 dans lequel
R⁵⁶ est alkyle en C₁₋₁₀,
bb est de préférence un entier de 5 à 25, et
cc est un entier de 1 à 5.

13. Composés de formule (1A) de l'une quelconque des revendications 1 à 12, dans lesquels
s est 0,
d est 0, ou
composés de formule (1B) de l'une quelconque des revendications 1 à 12,
g est 0, et
k est 0.

14. Composés de formule (1A) de l'une quelconque des revendications 1 à 13, dans lesquels
a est 0, et
r est 0.

15. Composés de formule (1A) de l'une quelconque des revendications 1 à 14,
à condition, en outre, que si b est 1, alors f est 0, ou si f est 1, alors b est 0 ; ou
composés de formule (1B) de l'une quelconque des revendications 1 à 14,
à condition, en outre, que si h est 1, alors q est 0, et si q est 1, alors h est 0.

16. Composés de formule (1A) de l'une quelconque des revendications 1 à 15, dans lesquels
n est 1, 2, 3, 4, 5, 6 ou 7,
m est 8 - n.

17. Procédé de préparation des composés de formule (1A) de la revendication 1, ledit procédé comprenant l'étape de réaction d'un composé de formule 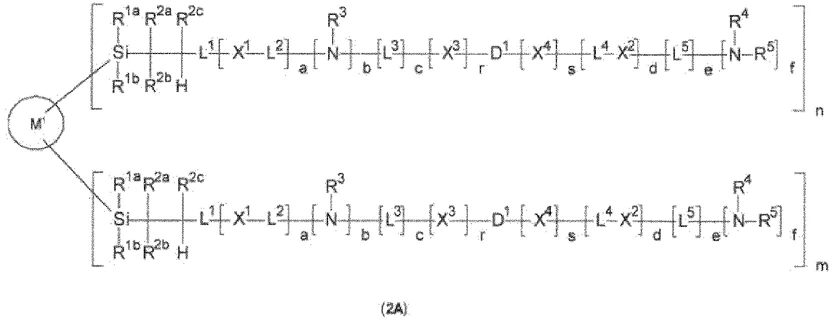 dans laquelle 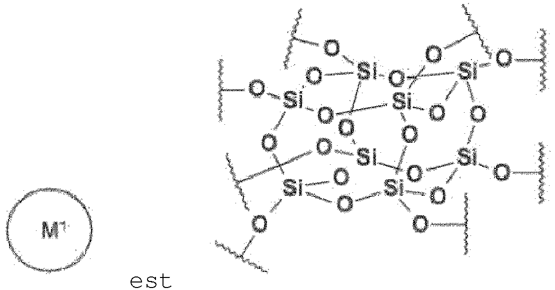
n est 1, 2, 3, 4, 5, 6, 7 ou 8,
m est 8 - n,
a est 0 ou 1,
b est 0 ou 1,
c est 0 ou 1,
r est 0 ou 1,
s est 0 ou 1,
d est 0 ou 1,
e est 0 ou 1,
f est 0 ou 1,
à condition qu'au moins b ou f est 1, et à condition que si f est 0, alors s, d et e sont également 0,
R^{1a} et R^{1b} sont, indépendamment l'un de l'autre, alkyle en C₁₋₄,
R^{2a}, R^{2b} et R^{2c} sont, indépendamment les uns des autres, hydrogène ou alkyle en C₁₋₄,
L¹ est alkylène en C₁₋₂₀, (alkylène en C₁₋₂₀) -phénylène, (alkylène en C₁₋₂₀)-(cycloalkylène en C₅₋₈), phénylène ou cycloalkylène en C₅₋₈, où L¹ peut être substitué par un ou plusieurs substituants choisis dans le groupe constitué d'halogène, O(alkyle en C₁₋₆), NO₂ et OH, X¹, X², X³ et X⁴ sont, indépendamment les uns des autres, 0, S, C(O) ou C(0)0,
L², L³, L⁴ et L⁵ sont, indépendamment les uns des autres, alkylène en C₁₋₂₀, (alkylène en C₁₋₂₀)-phénylène, (alkylène en C₁₋₂₀)-(cycloalkylène en C₅₋₈), phénylène ou cycloalkylène en C₅₋₈, où L², L³, L⁴ et L⁵ peuvent être substitués par un ou plusieurs substituants choisis dans le groupe constitué d'halogène, O(alkyle en C₁₋₆), NO₂ et OH,
R³, R⁴ et R⁵ sont, indépendamment les uns des autres, alkyle en C₁₋₂₀, qui peut être substitué par un substituant choisi dans le groupe constitué d'aryle en C₆₋₁₄, O(alkyle en C₁₋₆), et NO₂, ou
R⁴ et R⁵ conjointement avec le N lié à ces deux groupes forment un cycle de 5, 6 ou 7 chaînons, qui peut comprendre en outre 0 ou S, et
D¹ est un fragment chromophore, qui peut être substitué par un ou plusieurs R⁵⁰, où R⁵⁰ sont, indépendamment les uns des autres, choisis dans le groupe constitué d'alkyle en C₁₋₂₀, aryle en C₆₋₁₄, halogène, O(alkyle en C₁₋₆), OH, N H₂ et NO₂,
avec un composé de formule 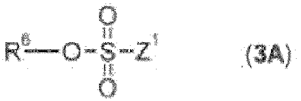 dans laquelle
R⁶ est alkyle en C₁₋₂₀, qui peut être substitué par un substituant choisi dans le groupe constitué d'aryle en C₆₋₁₄, O(alkyle en C₁₋₆), et NO₂,
Z¹ est alkyle en C₁₋₁₀₀, dans lequel un ou plusieurs groupes méthylène sont remplacés par -SiR¹⁰⁰R¹⁰¹-, -SiR¹⁰⁰R¹⁰¹O-, -O-ou -S-, à condition que -SiR¹⁰⁰R¹⁰¹-, -SiR¹⁰⁰R¹⁰¹O-, -O- ou -S- ne soit pas directement lié au S de 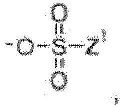 où R¹⁰⁰ et R¹⁰¹ sont, indépendamment l'un de l'autre, alkyle en C₁₋₆.

18. Procédé de préparation de composés de formule (1B) de la revendication 1, ledit procédé comprenant l'étape de réaction d'un composé de formule 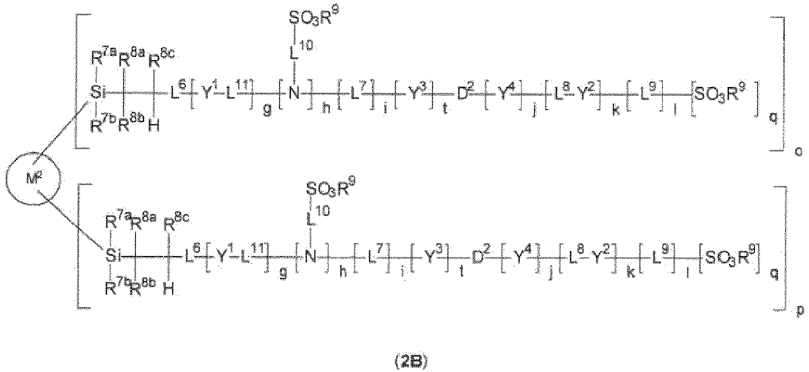 dans laquelle 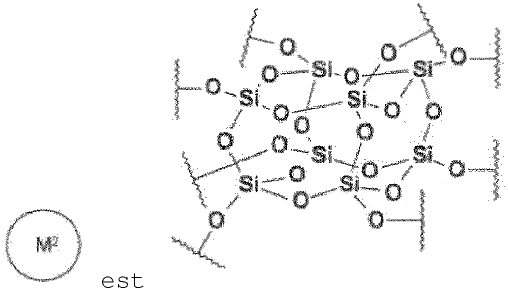
0 est 1, 2, 3, 4, 5, 6, 7 ou 8,
p est 8 - o,
g est 0 ou 1,
h est 0 ou 1,
i est 0 ou 1,
t est 0 ou 1,
j est 0 ou 1,
k est 0 ou 1,
l est 0 ou 1,
q est 0 ou 1
à condition qu'au moins h ou q soit 1, et à condition que si q est 0, alors j, k et l sont également 0,
R^{7a} et R^{7b} sont, indépendamment l'un de l'autre, alkyle en C₁₋₄,
R^{8a}, R^{8b} et R^{8c} sont, indépendamment les uns des autres, hydrogène ou alkyle en C₁₋₄,
L⁶ est alkylène en C₁₋₂₀, (alkylène en C₁₋₂₀)-phénylène, (alkylène en C₁₋₂₀)-(cycloalkylène en C₅₋₈), phénylène ou cycloalkylène en C₅₋₈, où L⁶ peut être substitué par un ou plusieurs substituants choisis dans le groupe constitué d'halogène, O(alkyle en C₁₋₆), NO₂ et OH, Y¹, Y², Y³ et Y⁴ sont, indépendamment les uns des autres, NR⁵¹, O, S, C(O) ou C(O)O, où R⁵¹ est alkyle en C₁₋₂₀,
L⁷, L⁸, L⁹, L¹⁰ et L¹¹ sont, indépendamment les uns des autres, alkylène en C₁₋₂₀, (alkylène en C₁₋₂₀) -phénylène ou (alkylène en C₁₋₂₀)-(cycloalkylène en C₅₋₈), phénylène ou cycloalkylène en C₅₋₈, où L⁷, L⁸, L⁹, L¹⁰ et L¹¹ peuvent être substitués par un ou plusieurs substituants choisis dans le groupe constitué d'halogène, O(alkyle en C₁₋₆), NO₂ et OH, et
R⁹ est alkyle en C₁₋₁₀, et
D² est un fragment chromophore, qui peut être substitué par un ou plusieurs R⁵², où R⁵² sont, indépendamment les uns des autres, choisis dans le groupe constitué d'alkyle en C₁₋₂₀, aryle en C₆₋₁₄, halogène, 0 (alkyle en C₁₋₆), OH, N H₂ et NO₂,
avec un composé de formule 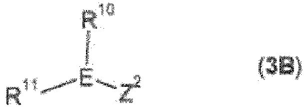 dans laquelle
R¹⁰ et R¹¹ sont, indépendamment l'un de l'autre, alkyle en
C₁₋₂₀, qui peut être substitué par un ou plusieurs substituants choisis dans le groupe constitué d'aryle en C₆₋₁₄, 0 (alkyle en C₁₋₆), et NO₂,
E est N ou P,
Z² est alkyle en C₁₋₁₀₀, dans lequel un ou plusieurs groupes méthylène sont remplacés par -SiR¹⁰²R¹⁰³-, -SiR¹⁰²R¹⁰³O-, -O- ou -S-, à condition que -SiR¹⁰²R¹⁰³-, -SiR¹⁰²R¹⁰³O-, -O- ou -S- ne soit pas directement lié à E, où R¹⁰² et R¹⁰³ sont, indépendamment l'un de l'autre, alkyle en C₁₋₆.

19. Utilisation des composés de formule (1A) ou (1B) de l'une quelconque des revendications 1 à 16 en tant que particules colorées chargées dans des dispositifs électrophorétiques.

20. Dispositifs électrophorétiques comprenant les composés de formule (1A) ou (1B) de l'une quelconque des revendications 1 à 16.

21. Utilisation de la revendication 19 ou dispositif électrophorétique de la revendication 20, le dispositif électrophorétique étant un affichage électrophorétique, de préférence un papier électronique.
